Europäisches Patentamt

European Patent Office

Office européen des brevets

(19)

(11) **EP 1 120 227 A2**

(12) # EUROPEAN PATENT APPLICATION

(43) Date of publication:
**01.08.2001 Bulletin 2001/31**

(51) Int Cl.7: **B29C 67/00**, G06T 17/00

(21) Application number: **01201196.1**

(22) Date of filing: **25.04.1995**

(84) Designated Contracting States:
**AT BE CH DE ES FR GB IT LI PT SE**
Designated Extension States:
**LT SI**

(30) Priority: **25.04.1994 US 233027**
**25.04.1994 US 233026**

(62) Document number(s) of the earlier application(s) in accordance with Art. 76 EPC:
**95917693.4 / 0 757 621**

(71) Applicant: **3D SYSTEMS, INC.**
**Valencia, California 91355 (US)**

(72) Inventors:
- **Gigl, John J.**
  **Elburn, Illinois 60119 (US)**
- **Pang, Thomas H.**
  **Castaic, California 91384 (US)**
- **Smalley, Dennis R.**
  **Newhall, California 91321 (US)**
- **Allen, Kerry J.**
  **Lancaster, California 93535 (US)**
- **Vorgitch, Thomas J.**
  **Simi Valley, California 93063 (US)**

- **Manners, Chris R.**
  **Moorpark, California 93021 (US)**
- **Earl, Jocelyn M.**
  **Lake of the Woods, California 93225 (US)**
- **Bedal, Bryan J.L.**
  **Palmdale, California 93550 (US)**
- **Jacobs, Paul F.**
  **La Crescenta, California 91214 (US)**
- **Nguyen, Hop D.**
  **Quartz Hill, California 93536 (US)**
- **Leyden, Richard N.**
  **Topanga, California 90290 (US)**
- **Hull, Charles W.**
  **Santa Clarita,California 91351 (US)**
- **Vandorin, Stacie L.**
  **Saugus, California 91350 (US)**

(74) Representative: **Howe, Steven**
**Lloyd Wise, Tregear & Co.,**
**Commonwealth House,**
**1-19 New Oxford Street**
**London WC1A 1LW (GB)**

Remarks:
This application was filed on 02 - 04 - 2001 as a divisional application to the application mentioned under INID code 62.

(54) **Enhanced building techniques in stereolithography**

(57)    Method of and apparatus for stereolithographically forming a three-dimensional object from layers of a material capable of physical transformation upon exposure to synergistic stimulation. The object is formed by receiving data descriptive of cross-sections of the three-dimensional object, forming layers of said material, and selectively exposing said layers to synergistic stimulation according to said data descriptive of said cross-sections to build up the three-dimensional object layer-by-layer. The data descriptive of at least a portion of at least one cross-section is modified by shifting or copying the data from a first cross-section to a second cross-section which is located at least one layer thickness from said first cross-section and using said modified data in forming said three-dimensional object.

EP 1 120 227 A2

**Description**

Technical Field of the Invention

This invention relates generally to the stepwise layer-by-layer formation of a three-dimensional object through application of the principles of stereolithography, and more specifically, to improved methods and systems for manufacturing parts (objects) more reliably, accurately (less curl and post cure distortion), and with increased surface resolution.

Background Art

Several building techniques have recently become available for building three-dimensional objects in layers. One such technique is stereolithography, which is described in U.S. Patent No. 4,575,330 (hereinafter the '330 patent), the disclosure of which is hereby fully incorporated by reference herein as though set forth in full. According to the principles of stereolithography, a three-dimensional object is formed layer-by-layer in a stepwise fashion out of a material capable of physical transformation upon exposure to synergistic stimulation (e.g., fluid or fluid-like material such as a photopolymer, sinterable powder, or a bindable powder). In one embodiment of stereolithography, layers of liquid photopolymer are successively formed at the working surface of a volume of the liquid photopolymer contained in a container.

Typically, the working surface is the upper surface of the liquid, wherein the surface is a free surface as its position is not restrained by a physical barrier.

These layers are then selectively exposed to the synergistic stimulation to form successive object cross-sections. Moreover, upon transformation into the object cross-sections, the transformed material typically adheres to the previously-formed cross-sections through the natural adhesive properties of the photopolymer upon solidification. Additional details about stereolithography are available in the following publications and patents, all of which are hereby full incorporated by referenced herein as though set forth in full:

| | |
|---|---|
| PCT Pub. #WO 92/20505 | PCT Pub. #WO 90/15674 |
| PCT Pub. # WO 92/08200 | PCT Pub. #WO 91/06378 |
| PCT Pub. #WO 89/10256 | JP Pat. App. #291647/1990 |
| PCT Pub. #WO 89/10249 | U.S. Pat. 5,059,359 |
| PCT Pub. #WO 89/10254 | U.S. Pat. 4,996,010 |
| PCT Pub. #WO 89/10259 | U.S. Pat. 4,999,143 |
| PCT Pub. #WO 89/11085 | U.S. Pat. 5,015,424 |
| PCT Pub. #WO 89/10801 | U.S. Pat. 5,058,988 |
| EPO Pub. # 85/171069 | U.S. Pat. 5,123,734 |
| JP Pub. # 62-3596 | U.S. Pat. 5,059,021 |
| PCT Pub. #WO 90/03255 | U.S. Pat. 5,184,307 |
| U.S. Pat. 5,104,592 | |
| U.S. Pat. 5,143,663 | |
| U.S. Pat. 5,182,056 | |
| U.S. Pat. 5,130,064 | |
| | |
| U.S. Pat. 5,174,931 | |
| U.S. Pat. 5,096,530 | |
| U.S. Pat. 5,141,680 | |
| U.S. Pat. 5,192,469 | |
| U.S. Pat. 5,321,622 | |
| U.S. Pat. 5,182,715 | |
| U.S. Pat. 5,234,636 | |
| U.S. Pat. 5,238,639 | |
| U.S. Pat 5,256,340 | |
| U.S. Pat. 5,182,055 | |

As described in PCT Publication No. WO 89/10256, a stereolithography system will typically form a three-dimensional object in accordance with a corresponding object representation, which representation may be formed in a CAD system or the like. Before such a representation can be used however, it must be sliced into a plurality of layer representations. The stereolithography system will then, in the course of building up the object in a stepwise layer-by-layer buildup, selectively expose the untransformed layers of material in accordance with the layer representations to form the object layers, and thus, the object itself.

PCT Pub. #WO 92/20505, PCT Pub. #WO 92/08200, and U.S. Patent No. 5,192,469 are particularly relevant to the subject invention. PCT Pub. #WO 92/08200 and U.S. Patent No. 5,192,469 describe various layer comparison techniques for enhancing the resolution of an object produced through stereolithography. PCT Pub. # WO 92/20505 describes various techniques for building an object through stereolithography with reduced post-cure distortion.

U.S. Patent 5,321,622, (and PCT Pub. #WO 92/08200) describe the use of Boolean operations in determining which portions of each layer continue from the previous layer through the present layer and through the next successive layer and which portions are up-facing or down-facing or both. Therefore, this referenced patent describes methods and apparatus for comparing initial data. associated with each layer, and comparing such data between layers to form resulting data that will be used in the process of physically reproducing the object. Additionally, this referenced patent describes the use of such operations to yield appropriately sized objects (e.g. undersized or oversized).

U.S. Patent No. 5,130,064, PCT Pub. #WO 91-06378, and PCT Pub. #WO 92-20505 describe continuous skinning and weaving techniques for reducing post-cure distortion. U.S. Patent No. 5,184,307 describes in great detail the presently preferred stereolithographic apparatus, as well as various methods to form parts therewith. This application is incorporated herein by reference, including its appendices, as though fully set forth herein to facilitate handling due to its relatively lengthy disclosure. Two reference manuals, The SLA-250 User Reference Manual and The SLA-500 Reference Manual are hereby incorporated into this disclosure by reference as though fully set forth herein. These manuals accompanied U.S. Patent Application Serial Number 429,435 (now U.S. Patent No. 5,130,064) as Appendices B and C respectively.

U.S. Patent 4,575,330 to Hull discusses stereolithography in general. It teaches complete polymerization of each cross-section in the formation of a stereolithographically-formed object. The basic stereolithography steps and apparatus components are described in the '330 patent, and as such, are incorporated herein by reference.

U.S. Patent No. 5,076, 974 describes off-absorption-peak wavelength post curing of parts which were formed based on the primary approach to building stereolithographic parts.

U.S. Patent No. 5,104,592 describes several methods of reducing curl distortion.

U.S. Patent No. 4,999,143 describes the use of web supports to support and minimize curl in a part being formed.

U.S. Patent No. 5,015,424 describes the use of "smalleys" to minimize curl.

U.S. Patent No. 5,182,056 describes the use of multiple penetration depths in the stereolithographic process, along with the use of beam profile characteristics in combination with resin parameters to predict various cure parameters associated with the creation of stereolithographic parts. This application also describes the role of beam profile information in the creation of skin fill and discusses various multiple wavelength curing methods for reducing part distortion.

U.S. Patent No. 5,234,636 discloses various methods of finishing a stereolithographic part surface to smooth out discontinuities in a post-processing step.

PCT Publication No. WO 90/03255 discloses the use of a doctor blade for obtaining a uniform coating of resin of known thickness over each cross-section of a stereolithographic part as well as a system for maintaining a known surface level of the building material as the part is being built.

Previous methods of forming the layer representation suffered from a number of disadvantages, however. As described in WO 92/08200, a problem with these methods is that it is difficult to utilize techniques for achieving enhance surface resolution. This is because some potentially effective methods and techniques of enhanced surface resolution inherently involve the comparison of cross-sectional information between two or more layers. Without a generalized layer comparison capability, the required comparisons (for the referenced applications) must be separately developed for each particular case and for each particular operation that will be performed.

For photopolymer based systems an additional problem is that many photopolymers have a "minimum solidifiable thickness,' i.e., a minimum thickness below which they cannot be sufficiently cured to form unsupported regions of transformed, cohesive material. For example, with presently preferred fluid photopolymers, if an attempt is made to try to form a feature of an object having a thickness less than the minimum solidifiable depth (MSD) or thickness, that feature will either simply fail to sufficiently solidify to become part of the object, or it will slump (i.e., fail to hold its shape). The minimum solidifiable thickness of a building medium (e.g., photopolymer) is not only a characteristic of the building medium or material itself but it also depends on the synergistic stimulation chosen and the environmental conditions surrounding the material. For example, oxygen absorbed in a photopolymer can act as a reaction inhibitor. Therefore, as used herein, "MSD" refers to the minimum solidification depth obtainable with a given material/solidification environment combination.

The minimum solidification depth can also be considered the depth resulting from the minimum exposure that is preferred for curing down-facing features of an object what ever the basis for this preferred minimum. It may be based on a desire to form a minimum solidified thickness of material from a single layer, which minimum thickness is selected for its ability to withstand curl distortion or to supply sufficient structural integrity. These definitions can apply to any fluid-like material whether liquid, powder, paste, emulsion, or the liquid. Furthermore, these definitions can also apply to building material that is applied in sheet form and then transformed.

Since the MSD is the minimum solidification depth for forming unsupported regions of layers (i.,e., down-facing features of the object), these regions must be given a cure depth of at least the MSD regardless of the thickness between individual layers or cross-sections from which the object is being formed. Therefore, due to the layer by layer formation process, even if the layers being used are thinner than the MSD, the accuracy of the stereolithographically reproduced object is limited by the MSD of the material being used.

Many liquid building materials also have a Minimum Recoating Depth, MRD, or thickness; i.e. a minimum coating thickness that can reliably be formed over previously solidified material. This minimum recoating depth may derive from a dewetting phenomena that occurs between the liquid material and the previously solidified material. Alternatively, the MRD may simply be based on apparatus or process limitations regarding the timely formations of coatings; in other words, the minimum thickness may be set by a maximum acceptable recoating time or accuracy limitation. This alternative definition can be applied to both liquid and powder materials.

Moreover, because of the layer-by-layer formation process of stereolithography, the MRD sets the minimum coating thicknesses that can be effectively utilized by standard stereolithographic techniques. This minimum coating thickness directly sets the vertical accuracy obtainable when using standard stereolithographic techniques.

In the remainder of the specification, the MSD and MRD may be expressed in either (1) particular units of length or (2) without units or followed by an "LT'. "LT" is an acronym for "layer thickness" and in particular the thickness for layers having the desired resolution. If the MRD is expressed without units, or followed by an LT, it should be understood that it is expressed in terms of the number of layers, each possessing the desired resolution, that yield a thickness equal to the MRD.

An additional problem with these prior methods relates to "Z-error," i.e., the condition in which the relative displacement between an up-facing and down-facing feature in the built part is greater than a desired amount because the MSD or MRD of a layer between the two features is greater than a desired layer thickness.

A further problem relates to parts intended for use in investment casting applications. With traditional stereolithographic methods, problems have been experienced draining unsolidified material from the internal recesses of such parts. Another problem has been the collapsing of outer walls of such parts after the unsolidified material has been drained.

Accordingly, it is an object of the invention to overcome the MSD limitation by providing a method and apparatus of practicing high resolution stereolithography when using a building material that is inherently incapable of making unsupported thicknesses of solidified material as thin as the desired level of accuracy when solidified by the chosen synergistic stimulation.

An additional object of the invention is to overcome the MRD limitation by providing a method and apparatus of practicing high resolution stereolithography when using a fluid-like building material that is inherently incapable of reliably forming coating over previously solidified material as thin as the level of accuracy desired when forming the object.

Another object of this invention is to provide a method and apparatus for enhancing object production by horizontally distinguishing regions of an object, to be formed, based on their distance from a given point, points, surface, or surfaces so as to form those regions with different building parameters.

Another object of this invention is to provide a method and apparatus for enhancing object production by vertically distinguishing regions of an object, to be formed, based on their distance from a given point, points, surface, or surfaces so as to form those regions with different building parameters.

A further object of the invention is to provide a method and apparatus for automatically performing "Z-error correction", i.e., correcting for the condition in which the relative distance between an up-facing and down-facing feature of an object produced through stereolithography is greater than a desired amount due to the MSD or MRD being greater than the desired LT of a layer situated between the up and down facing features.

Another object of the subject invention is to provide improved methods of representing an object which facilitate Z-error correction and related purposes, such as the display of the object on a graphical display device which is not equipped to display a fine level of detail regarding the object (e.g. insufficient processing power to display an object and its movement in a timely manner), and various manipulations to the object representation such as scaling-up or scaling-down operations.

An additional object of the invention is to provide a method and apparatus for reducing rounding errors (e.g. errors associated with rounding of polygon vertices of NURB control points to slicing planes).

It is a further object of the subject invention to provide an object formed with a build style that promotes the draining of unsolidified building material from therein, but which has strong outerwalls. Such an object is useful for investment casting applications.

It is a further object of the subject invention to provide a method for automatically placing vents and drains in a three-dimensional object representation such that unsolidified material is able to drain from the object after it is built through stereolithography.

Further objects of the invention include utilization of the above objects alone or in combination with any two or more of the above objects into combination methods and combination apparatus to provide further enhancements to stereolithography. Other objects, useable alone or in combination, will be apparent to one of skill in the art from the teachings found herein.

Disclosure of the Invention

This invention allows the formation of higher resolution objects than traditionally thought possible when using a given building material (e.g. a given liquid photopolymer or powdered material). It allows the use of materials, which have not been considered capable of producing high resolution objects by stereolithographic methods, to create many of these high resolution objects through improved stereolithographic techniques. In terms of photopolymers, these heretofore non-high resolution photopolymers typically have absorption and solidification properties which make them incapable of forming cohesive solid plastic of thickness less than some amount (e.g. 1 mm). In the normal practice of stereolithography, using one of these materials, all vertical features of an object occur at positions that are nominally integral multiples of a layer thickness which is greater than or equal to the MSD. Alternatively, if a finer layer thickness is used, all down-facing features are supplied with an amount of exposure that results in a net depth of cure greater than the layer thickness which results in relative displacement between up-facing and down-facing features which is greater than a desired amount, as well as other associated errors in object configuration.

The techniques described herein involve delaying the curing of at least portions of some cross-sections at least until recoating of at least one additional cross-section has occurred, after which sufficient exposure is applied to achieve the desired depth of cure. In other words, the techniques described herein provide an improved stereolithographic method for forming a three-dimensional object wherein data descriptive of at least portions of two cross-sections is modified by shifting said data from a first cross-section to a second cross-section which is located at least one layer thickness from said first cross-section and by differencing the shifted data from any other data on the second cross-section and on any intermediate cross-sections between said first and second cross-sections and wherein said modified data is used in forming said three-dimensional object.

In the practice of the present invention, the smallest single solid vertical feature is still equivalent to the MSD. However, vertical features of the object are no longer necessarily reproduced in steps that are integral multiples of a layer thickness that is greater than or equal to the MSD or wherein exposures are blindly applied that result in cure depth that cause relative displacement of up and down-facing features of the object. Using the techniques as taught herein, vertical features can be formed from smaller steps (layer thicknesses) than the MSD while simultaneously ensuring that relative displacement of up and down-facing features does not occur (as long as the feature's minimum thickness is greater than the MSD).

The typical practice of stereolithography involves the transformation (curing), to a depth substantially equal to or greater than the layer thickness, of all areas of each cross-section prior to coating the partially formed object with a layer of untransformed or unsolidified material in preparation for formation of a next layer of the object. This typical practice may or may not involve the utilization of somewhat different depths of cure, wherein the depth of cure depends on whether the area being cured is used for adhesion to the previously formed layer or is being cured as a down-facing feature of the object. In the practice of the present invention deviations are made from the typical approach, wherein these deviations involve leaving untransformed material on at least one portion of one cross-section, at least until after the cross-section has been coated over with untransformed material in preparation for formation of an additional layer of the object, and wherein the portion(s) will be solidified by transformation of material after the formation of the coating.

Layer-to-layer comparisons are made to determine the depth to which the material can be solidified to ensure adequate adhesion to previously formed layers, and to ensure adequate strength (modulus of solidifiable material) while simultaneously ensuring that material is not solidified to a depth that causes penetration into a region that should remain unsolidified. Solidification depth is achieved by appropriate specification and control of synergistic stimulation which is used to exposure the surface of the material.

These comparisons form the basis of selective curing which enable individual portions of each cross-section to be transformed in association with the most appropriate layer and vertical level during object formation. By the selective curing aspect of the invention, a balance is maintained between necessary structural integrity, desired resolution, and the resulting accuracy.

When using a photopolymer material, the minimum solidification depth (MSD) is related to the wavelength of radiation used. The MSD is typically directly related to the penetration depth of the material. Use of various penetration depths in the stereolithography process is described in U.S. Patent No. 5,182,056. The methods of this referenced application can be combined with the teachings of the present invention,

Many objects that cannot be built accurately with standard stereolithography while using one of these materials of relatively high MSD, can be built accurately with the techniques of this invention. However, even with the techniques of the present invention some objects i.e., those having solid vertical features thinner than the MSD may suffer from accuracy problems. However, these can be handled in various ways as described herein.

The present method leads to more accurate creation of objects than is possible by use of typical stereolithographic techniques for a given building material with a given MSD and it also provides a more rigid "green" part or object. Reduction in distortion may also be achieved due to increased green strength along with staggered solidification of the material. Not all material to be solidified in a given area of a cross-section is necessarily solidified on that cross-section. It may be solidified through and simultaneously with a higher cross-section or layer, i.e., with the solidifying radiation penetrating downward through higher layers into the appropriate region.

As noted above, a portion of a layer forming a down-facing feature should only be cured to a depth of one layer thickness. However, in actual practice, down-facing regions are typically given a cure depth significantly greater than one layer thickness. This excess cure depth results in a distortion of the vertical dimensions of the object. The instant invention may be used to correct this over-curing problem by delaying the exposure of a down-facing region of the object for one or more layers until the object thickness is at least as great as the minimum cure-depth that will be obtained when exposing the down-facing region. In this embodiment, the MSD is defined as the minimum solidification depth that will be used in forming down-facing regions. This embodiment becomes especially attractive when the desired resolution becomes extremely small. For example, as resolution demands become higher, layer thicknesses become smaller. Typical layer thicknesses are on the order of 4, 5, 6 or 10 mils, but are steadily being pushed to 2 mils, 1 mil or even less, whereas with current materials the exposures typically preferred result in cure-depths for down-facing features of typically between 8 and 16 mils. Furthermore, in this class of embodiments the cure depth applied to down-facing features may be based on the exposure applied in a single layer or alternatively it may be based on the exposure applied to two or more consecutive layers wherein the depth of cure, as measured from the top of the first layer, is increased by print through of exposure from one or more higher layers.

Another feature of the present invention is the use of cross-sectional slices thinner than the MSD. These thin cross-sections in combination with the present solidifying or curing techniques will yield higher resolution parts than those obtainable using cross-sectional slices equal to the MSD. The minimum feature thickness will still be the MSD. Any errors due to this minimum feature thickness will present a problem in only a small percentage of the objects that can be built using stereolithography.

The invention also contemplates a method for making the surface of an object built with a particular layer thickness (for the bulk of the object) appear as if it were constructed from finer layers. In addition, the instant method relates to not only making the surface appear more continuous (i.e., finer layers) but also building the bulk of the object with thick layers at the same time while maintaining the overall accuracy associated with finer layers. This method is based on creating cross-sections having a vertical spacing equal to the desired resolution and comparing these cross-sections two or more at a time. This may be used to determine which portions of a cross-section require building at fine layer increments and cure depths (e.g. 5 mils or less); which portions can be built using greater cure depths; and which portions can be skipped altogether for building at even coarser layer increments (e.g. 10, 15, or 20 mils or more). Many of these methods require the use of a material that has the capability of being solidified to unsupported thicknesses at least as thin as the fine layer increments (e.g. 5 mils or less). Several embodiments to these novel methods are described herein.

A further embodiment of the instant invention can be used to form higher resolution objects than normally considered possible when using a building material that will not reliably form coatings thinner than a given amount. The minimum thickness for reliably forming a coating is referred to as the MRD. For example, one may wish to form an object with a layer thickness, or resolution, of 5 mils or less when using a material that will not reliably form coatings thinner than 10 mils or more. These recoating problems can be based on two phenomena: (1) excess time involved in forming coatings of the desired thinness when a thicker coating can be formed in a more timely manner; and/or (2) dewetting of all or portions of the previously formed layer of the object when one attempts to form a coating which is too thin. This dewetting phenomena is based on an incompatibility between the solidified building material and the liquid material. It has been found that the seriousness of this dewetting phenomena is greatly influenced by the exposure style which is used to solidify the layer which is being coating over.

In this embodiment, layer comparisons are utilized to derive exposure data for each layer wherein the net thickness of unsolidified material for each region, to be exposed, is greater than or equal to the minimum coating thickness that can be reliably formed. It is preferred that all portions of each layer which are to be cured in association with a given cross-section should be exposed only when the coating thickness is greater than or equal to the minimum coating thickness. However, it is envisioned that in certain situations it may not be critical to ensure proper coating depth prior to exposure for some regions. In these circumstances only critical portions of layers may be involved in the potentially staggered curing required by this embodiment.

An additional embodiment involves the use of layer comparisons to define additional types of regions to be cured. These layer comparisons can be used to define a variety of regions. For example, these layer comparisons can be used to defined extra regions to be skinned or to indicate which portions of the object are located above down-facing features by a particular distance and/or located below up-facing features by a particular distance. More particularly, for example, skin regions can be defined which are one, two or more layers above a down-facing feature. It is to be understood that these extra skin regions can be in addition to any shifting of skins required by the utilization of an embodiment which compensates for MSD values greater than the layer thickness. The supplying of multiple skins to strengthen up-facing and down-facing regions has particular advantages when attempting to form drainable parts than can be used as patterns for investment casting.

An additional aspect of this invention, which can be used independently or in combination with the other embodiments disclosed herein, involves the use of horizontal comparison techniques to further differentiate cross-sections into separate curable regions. These different regions may be obtained from the cross-section as a whole, from within a single boundary type on the cross-section, from a combination of boundary types on a given cross-section, or from intermediate or final boundaries involved in the layer comparison techniques described herein. The horizontal comparison technique may utilize an erosion or buildup technique to define the distance between points on a cross-section or even within the object as a whole. This erosion or buildup technique may involve the use of one or more positive cure width (i.e. line width) compensation type manipulations (i.e. reductions in area) or negative cure width compensations type manipulations (i.e. expansions in area). For example, based on these operations each portion of the cross-section can be designated as being a certain distance from the exterior surfaces of the cross-section. As an alternative to labeling each portion of a cross-section, boundaries can be defined that separate selected portions of the cross-section into designated regions. As a second example, portions of the cross-section can be designated as being located a certain distance from the deepest interior point of the cross-section. As an additional example, each portion can be labeled based on its distance from the centroid of the cross-section or an axis around which the object is be rotated. Cure parameters appropriate to each defined regions or location can be defined. These cure parameters may be related to scanning speeds, vector density, vector types, or the like. For example, when forming an object that is to be built with enclosed liquid building material that is to be drained from the interior walls of the object after formation, these techniques can be used to increase the spacing between hatch vectors as one moves deeper into the interior of the object. An object can thus be formed with its internal regions being separated into two or more regions where each region is given a different exposure style.

The techniques of the present method may also be implemented solely as a distortion reduction technique and may be implemented by manipulating vectors defining boundaries, a manipulations of pixels or voxels, by other data manipulation techniques, by any other technique that results in appropriate treatment of the cross-sections, or by any combination of these.

Typically, in stereolithography, objects are built on webs or some other form of supporting structure. With the present method, the selection and placement of support structures should be carefully considered. Because of the possibility of staggering the formation of various regions of an initial cross-section to different layers, support placement is critical. Supports should be designed and placed to catch the regions that will be locally cured in association with the lowest layers.

A method is also provided for automatically performing Z-error correction by manipulating a three-dimensional object representation. The term "Z-error" refers to the error which typically occurs when the MRD or MSD is greater than the desired layer thickness of a layer situated between an up-facing and down-facing feature of an object. The problem typically manifests itself in the form of a relative displacement between the up-facing and down-facing features in the built part which is different from the desired amount.

One embodiment involves performing Z-error correction after or during the process of slicing the object representation into a plurality of layer representations. Through appropriate comparisons between the data representing multiple layers, the building of down-facing surfaces can be deferred, or alternatively, the building of up-facing surfaces can be advanced, such that the Z-error is corrected in the built part.

A second embodiment involves manipulation of the .STL representation of the object prior to or at the beginning the slicing process. In this embodiment, the vertices of down-facing triangles, and including all or a portion of flat and down-facing and near-flat down-facing triangles, are moved upwards to correct for Z-error. The amount shifted is preferably the same for all down-facing triangles; however, the amount may vary with triangle slope. In particular, it may be advantageous to decrease shifting as triangles become steeper. Alternatively, the vertices of up-facing triangles, including all or a portion of flat-up-facing and possibly also near-flat up-facing triangles, are moved downwards to correct for Z-error. In one version of this embodiment, the .STL triangles are manipulated before they are rounded to slicing planes. In a second version of this embodiment, the .STL triangles are manipulated after they have been rounded to slicing planes.

A third embodiment involves formation of a new object representation, known as the .CTL format, and manipulation of it to correct for Z-error. In the .CTL format, an object is represented by a first list of unique vertices of polygons such as triangles which substantially span a surface of the object, and a second list of polygonal representations defined in terms of unique identifiers of the vertices in the first list. With the .CTL format, Z-error correction is performed simply by manipulating selected vertices in the first list. Individual manipulation of each individual polygonal representation is not required.

A fourth embodiment involves formation of another new object representation known as the three-dimensional run-length encoded (3D-RLE) format. In the 3D-RLE format, the object is represented by a plurality of groupings of Z-values, one grouping for each cell of an XY grid. In effect, each Z-value represents intersection points between the object and a plurality of lines emanating from cells of the grid. Though it is preferred that the grid be formed from orthogonal components and that the lines project perpendicular to the grid, other relationships are possible. With the 3D-RLE format, Z-error correction is performed simply by manipulating the Z-components of selected intersection points.

A method of forming a .CTL representation of an object from a .STL representation is also provided. The method involves hashing all vertices from the .STL file into a hash table and removing redundant vertices, assigning all non-redundant vertices unique identifying indicia, and representing the polygons which span the surface of the object in terms of the identifying indicia.

A method of forming a 3D-RLE representation of the object from a first object representation is also provided, The method involves associating a planar grid of cells (e.g., coplanar with the XY plane) with the first object representation, overlaying the first object representation with a plurality of lines emanating perpendicularly (e.g., parallel to the Z-axis) from the cells in the grid, determining the Z-components of all intersection points formed by the intersections between each line and the first object representation, and associating the Z-components with the cells of the grid from which the lines emanated that were used to form the respective intersection points.

A method of displaying an object at a reduced level of detail is also provided. The method preferably involves forming a .CTL representation using an artificially high rounding error value, thereby causing many triangle vertices to collapse into one another, and many triangles to become degenerate. The method involves eliminating the degenerate triangles, leaving non-degenerate triangles which expand to cover the object at a reduced level of detail.

Methods of forming a scaled-up or scaled-down representation of the object are also disclosed. These methods preferably exploit the fact that, with a .CTL file, the object representation can be scaled up and down by manipulating selected ones (e.g. all) of the vertices in the list of vertices without requiring individual separate manipulation of each polygonal representation.

Methods to form a shell instead of a solid object are disclosed. These methods preferably utilize a combination of two .CTL representations of the object which are scaled relative to each other with the normal orientations of the triangles reversed on the relatively scaled down representation.

Methods to form an object utilizing different building parameters in two or more shell-like zones and methods to obtain the data necessary for such building are disclosed. For example, the object may be divided into an exterior zone of specified thickness and an interior zone. These methods utilize a combination of three or more object representations scaled relative to each other, with the normal orientations of the triangles of some representations reversed, and with pairs of consecutive representations utilized to define distinct zones.

Methods to form objects with reduced slice layer rounding error distortion (Slice Layer Rounding Error Minimization - SLREM) and the data necessary for such formation are disclosed. These methods utilize slicing planes spaced at the desired vertical resolution, the rounding of the vertices or control points to these high resolution slicing planes, and additional data processing to yield cross-sectional data having a lower but presumably more buildable resolution. This additional data processing may be similar to the techniques described herein for handling MRDs and/or MSDs which are greater than the building resolution desired or alternatively it can be varied depending on the exact relationship between the MRD, MSD and SL REM factor.

According to another aspect of this invention, objects are formed with a build style that promotes the draining of untransformed building material from the internal portions of it. The objects produced according to these techniques have particular usefulness as investment casting patterns. The ability of the untransformed building material to be removed from the internal portions of the object is a result of using wide spaced hatch patterns that are periodically offset and/or using at least some hatching patterns that result in broken lines of transformed material. Multiple skins and/or multiple, boundaries may also be used. Furthermore, more complex embodiments are possible that use different building parameters for different internal portions of the object. Some of these more complex embodiments use minimal internal grid structure near the surfaces and boundaries of the object and use more internal grid structure deep within the object. Other embodiments use some grid structure near the surfaces and boundaries of the object but use less or no grid structure in the deep internal regions of the object

According to yet another aspect of the subject invention, a method is provided for automatically placing vents and drains in a three-dimensional object representation such that unsolidified material is able to flow from the object after it is built through stereolithography in accordance with the aforementioned investment casting style of building.

According to other aspects of the invention, these improvements are used in combination with one another and/or in combination with curl reduction techniques as described in: U.S. Patent No. 5,104,592; U.S. Patent No. 5,015,424; U.S. Patent No. 4,999,143, and the other patents and publications cited previously all of which are fully incorporated herein by reference. For example, according to yet another aspect of the invention, an improved stereolithographic method is disclosed comprising the combined use of hatch with nonconsecutive skin fill in more than the up- and down-facing features. As another example, an improved stereolithographic method is disclosed comprising the method of reducing exposure where vectors intersect and providing discontinuities in skin fill to avoid multiple vector exposure in regions where hatch vectors have been provided.

Another aspect of this invention provides apparatus which are used to implement the methods discussed above either singly or in combination.

Other aspects of the invention, together with objects and attendant advantages of the various embodiments, will best be understood from an examination of the drawings along with the detailed description below.

Brief Description of Drawings

Figure 1 depicts a side view of a three-dimensional object which is formed using an embodiment wherein the material has both an MSD and an MRD which are four times the desired resolution;

Figures 2-1A, 2-2A, and 2-3A depict side views of a first, second and third object, respectively, to be stereolithographically formed;

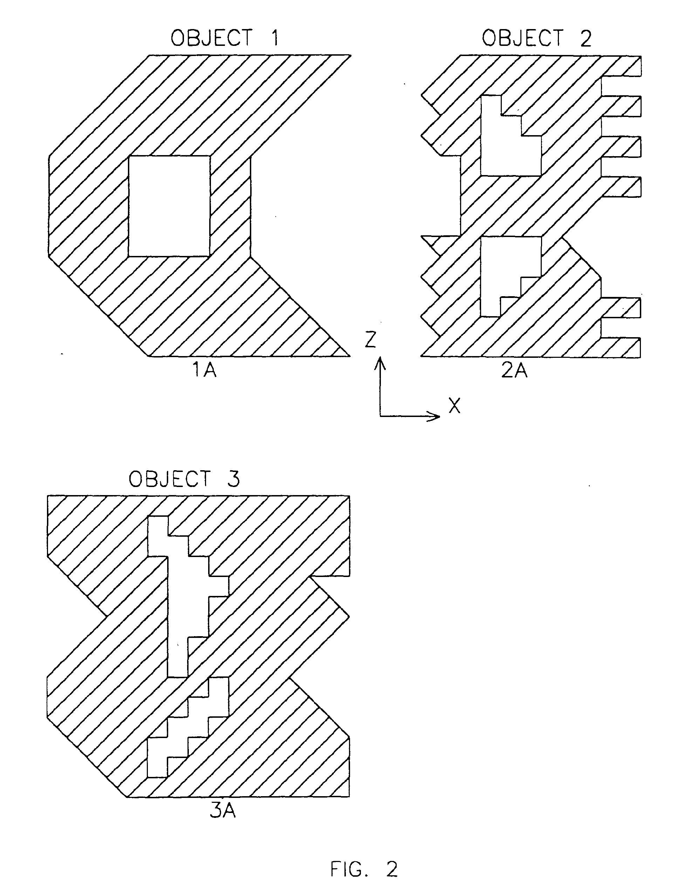

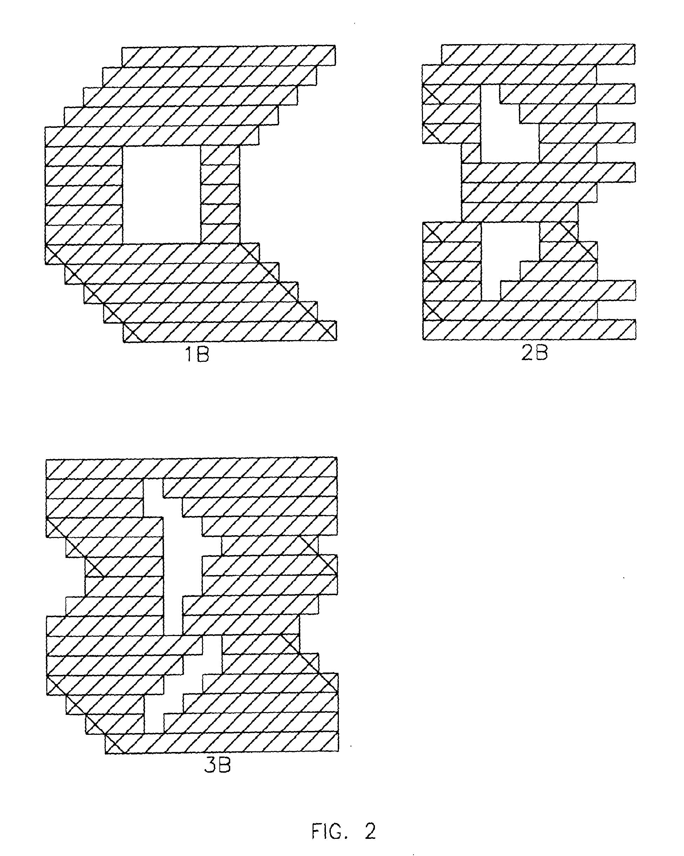

Figures 2-1B, 2-2B, and 2-3B depict side views of the first, second and third objects, respectively, as formed using standard stereolithography with a desired resolution (MSD = 1 LT, MRD = 1 LT);

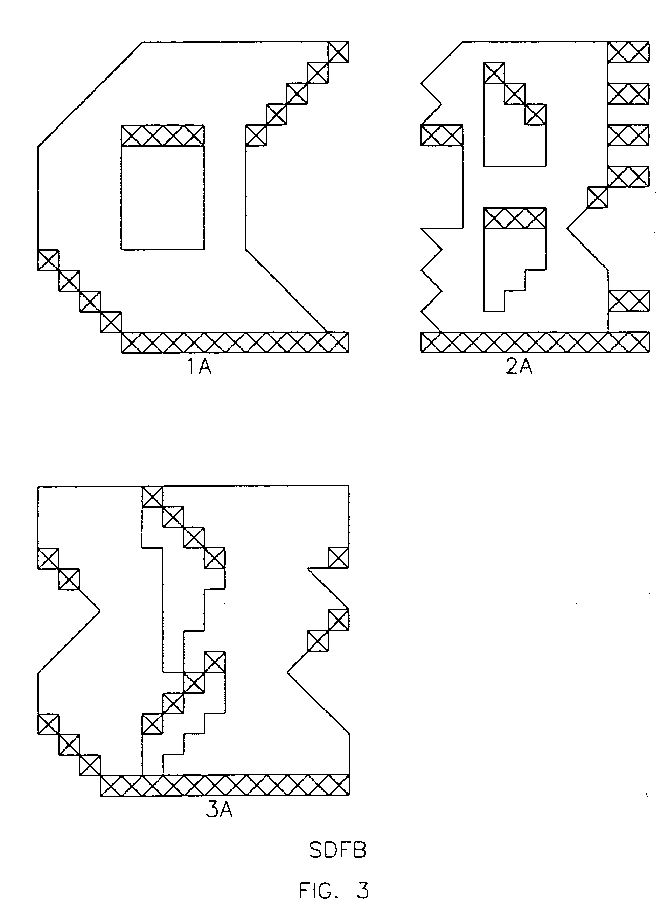

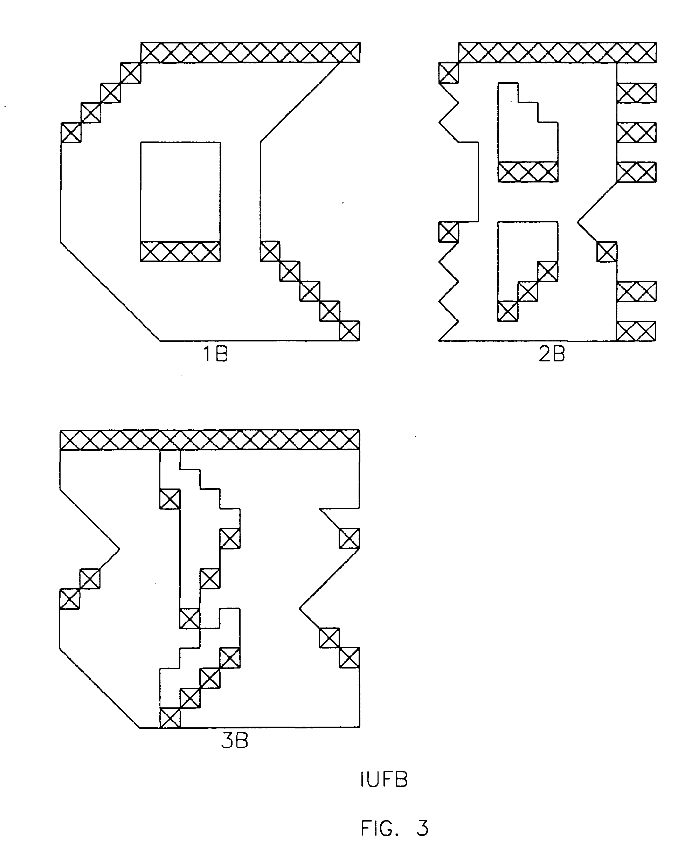

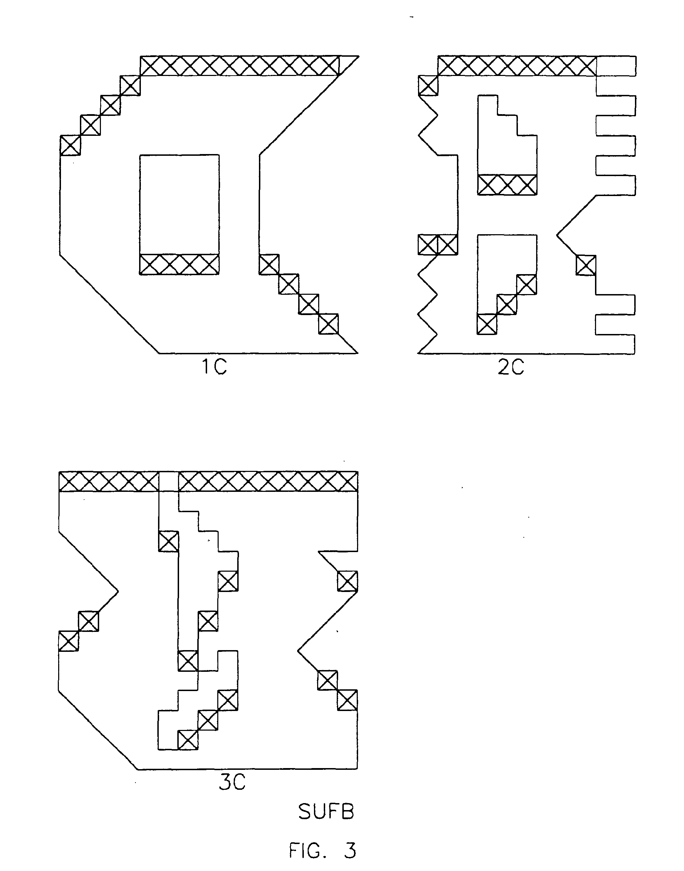

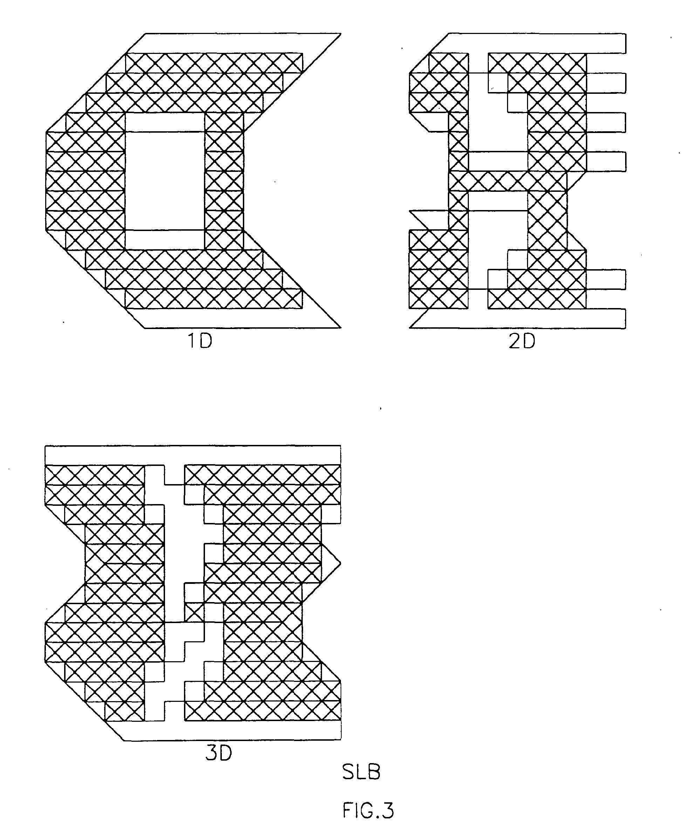

Figures 3-1A, 3-2A, and 3-3A depict side views of the standard down-facing boundaries (SDFB) of the object of Figures 2-1B, 2-2B, and 2-3B, respectively;

Figures 3-1B, 3-2B, 3-3B depict side views of the intermediate up-facing boundaries (IUFB) of the object of Figures 2-1B, 2-2B, and 2-3B, respectively;

Figures 3-1C, 3-2C, and 3-3C depict side views of the standard up-facing boundaries (SUFB) of the objects of Figures 2-1B, 2-2B and 2-3B;

Figures 3-1D, 3-2D, and 3-3D depict side views of the continuing boundaries (SLB) of the objects of Figures 2-1 B, 2-2B and 2-3B;

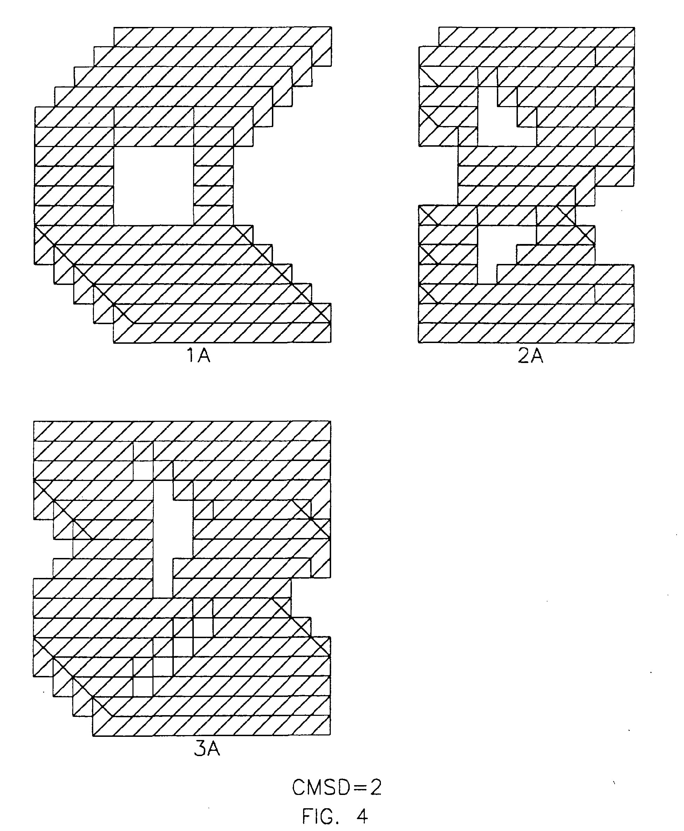

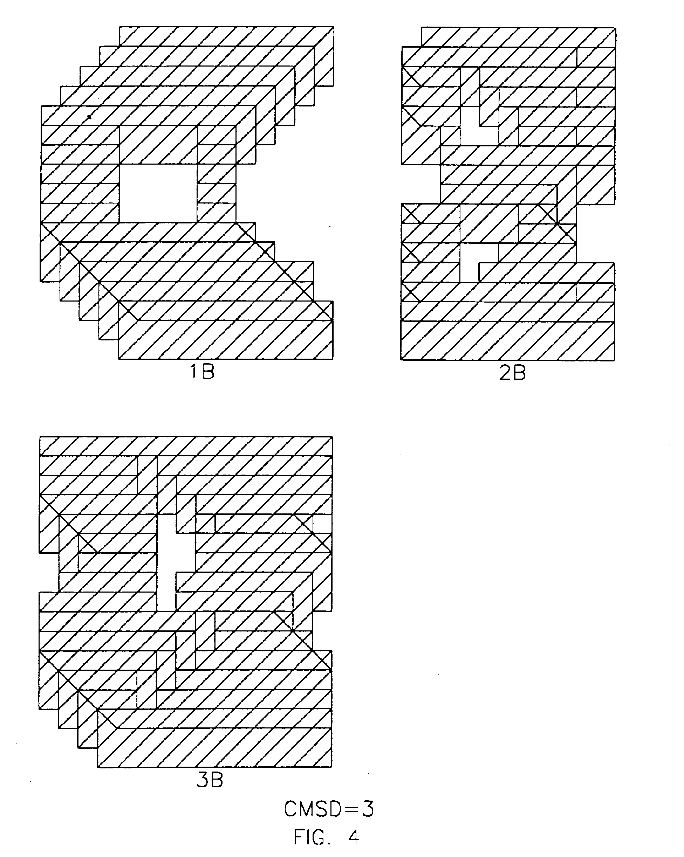

Figures 4-1A, 4-2A, and 4-3A depict side views of the first, second and third objects of Figures 2-1A, 2-2A, and 2-3A, respectively, as formed using a first approach to standard stereolithography wherein the building material has an MSD of two layer thicknesses;

Figures 4-1 B, 4-2B, and 4-3B depict side views of the first, second, and third objects, respectively, as formed using a first approach to standard stereolithography wherein the building material has an MSD of 3 layer thicknesses;

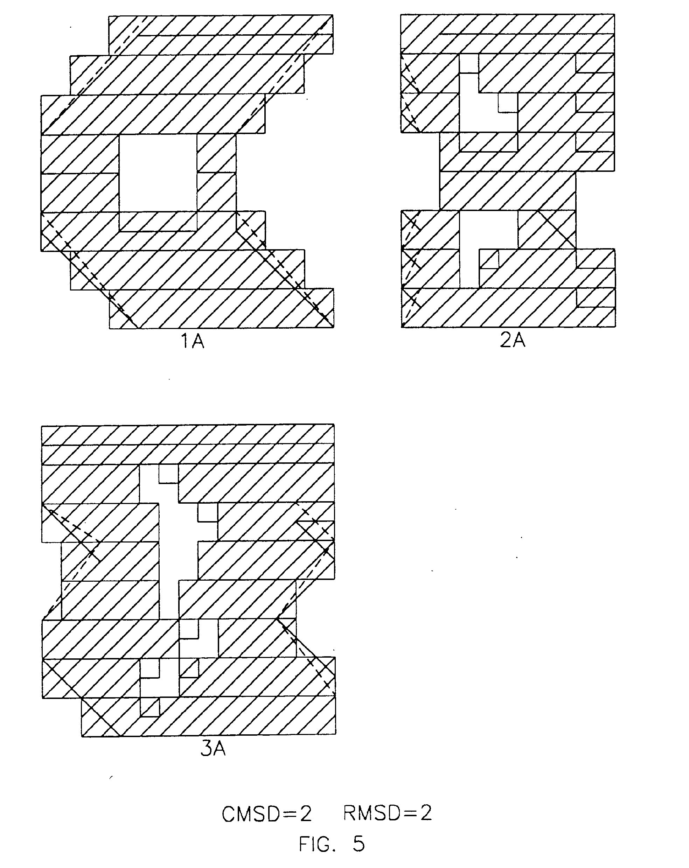

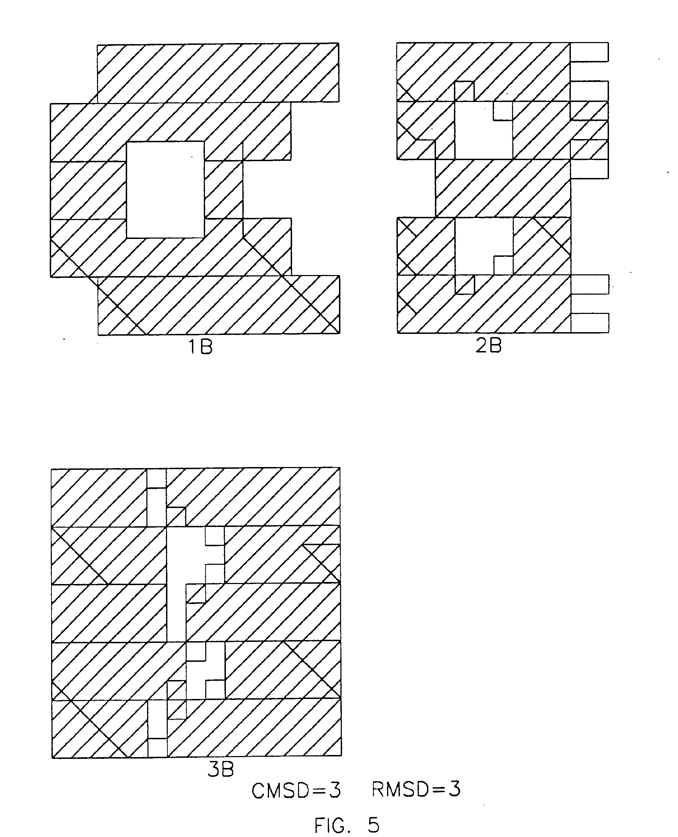

Figures 5-1A, 5-2A, and 5-3A depict side views of the first, second and third objects, respectively , as formed using a second approach to standard stereolithography wherein the building material has an MSD of 2 layer thicknesses and possibly an MRD of 2 layer thicknesses;

Figures 5-1B, 5-2B, and 5-3B depict side views of the first, second, and third objects, respectively, formed using a second approach to standard stereolithography wherein the building material has an MSD of 3 layer thicknesses and possibly an MRD of 3 layer thicknesses;

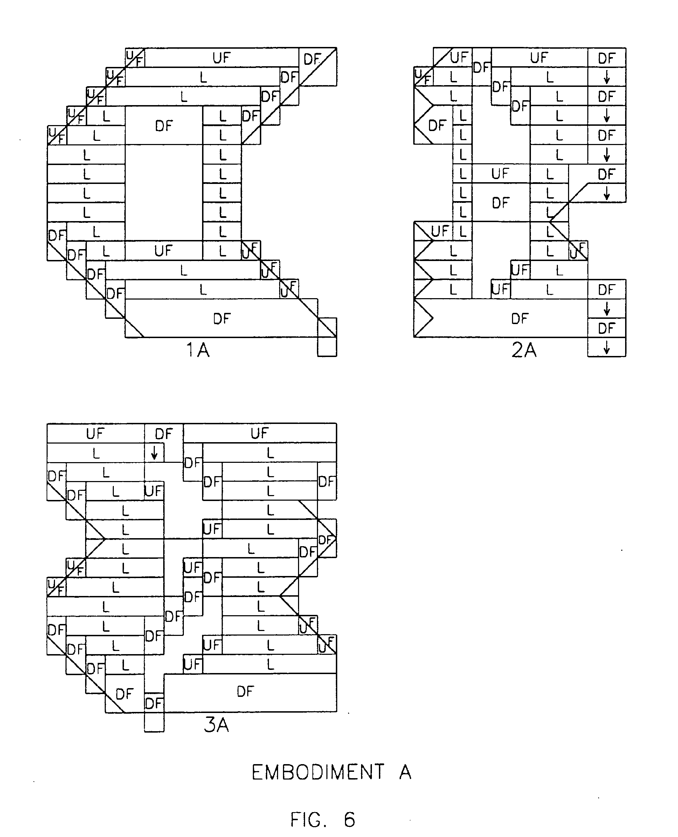

Figures 6-1A, 6-2A, and 6-3A depict side views of the first, second and third objects, respectively, as formed with the FDFBs, FUFBs, and FLBs for embodiment A;

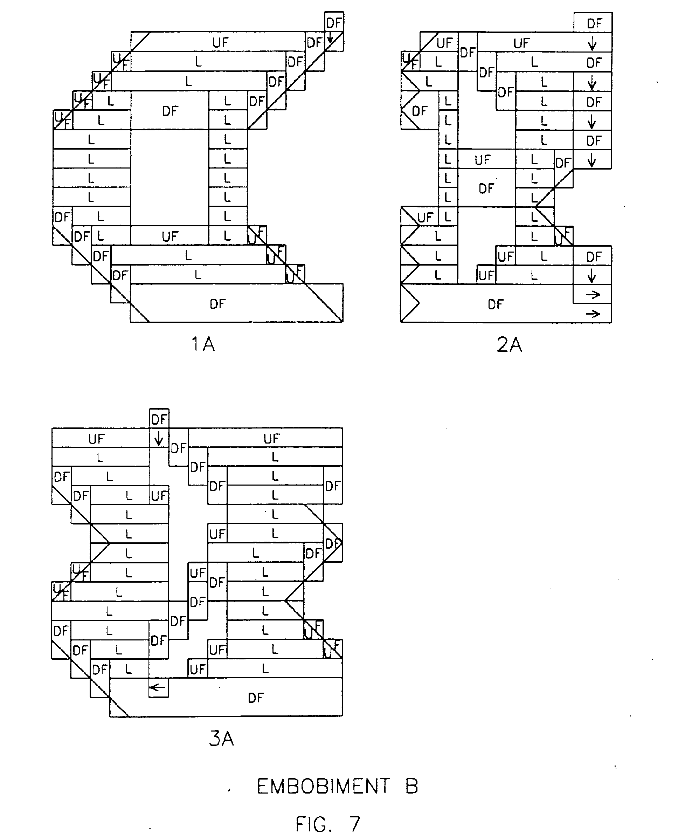

Figures 7-1A, 7-2A, and 7-3A depict side views of the first, second, and third objects, respectively, as formed with the FDFBs, FUFBs, and FLBs for embodiment B;

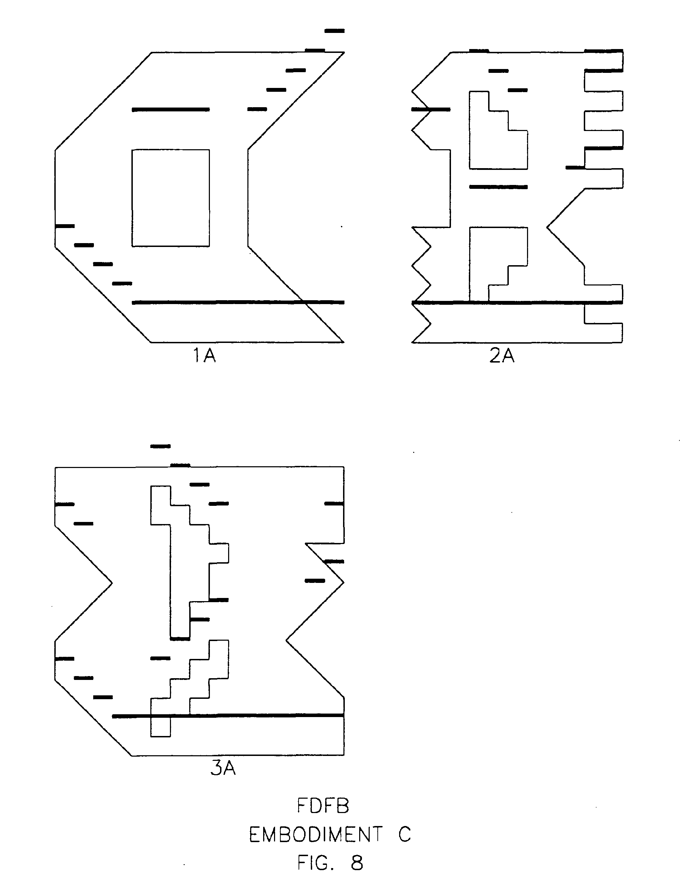

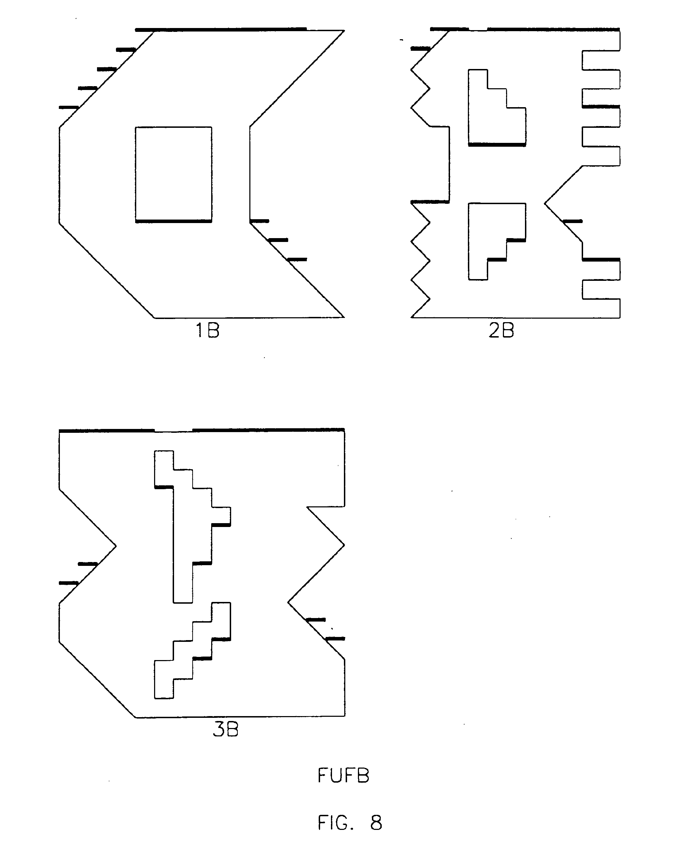

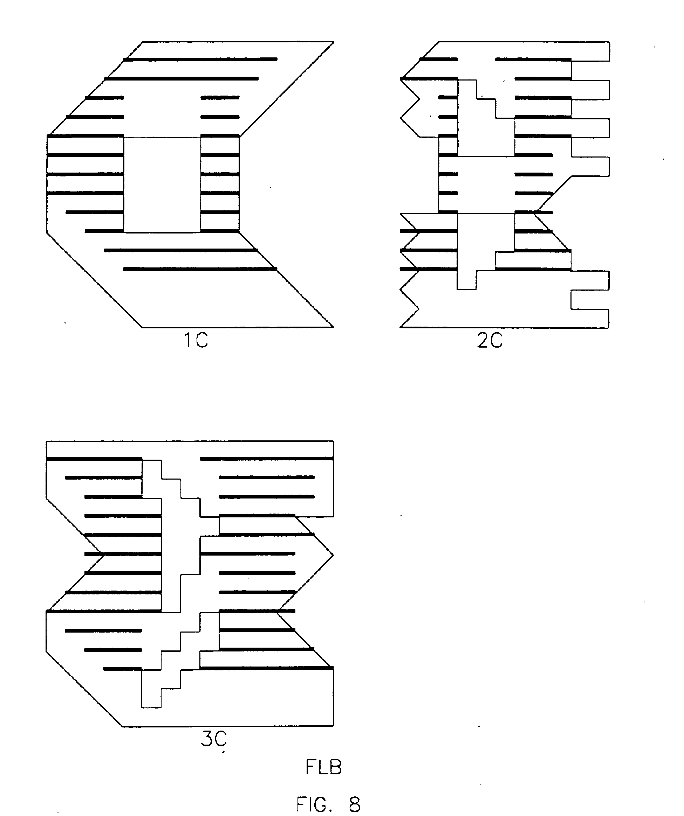

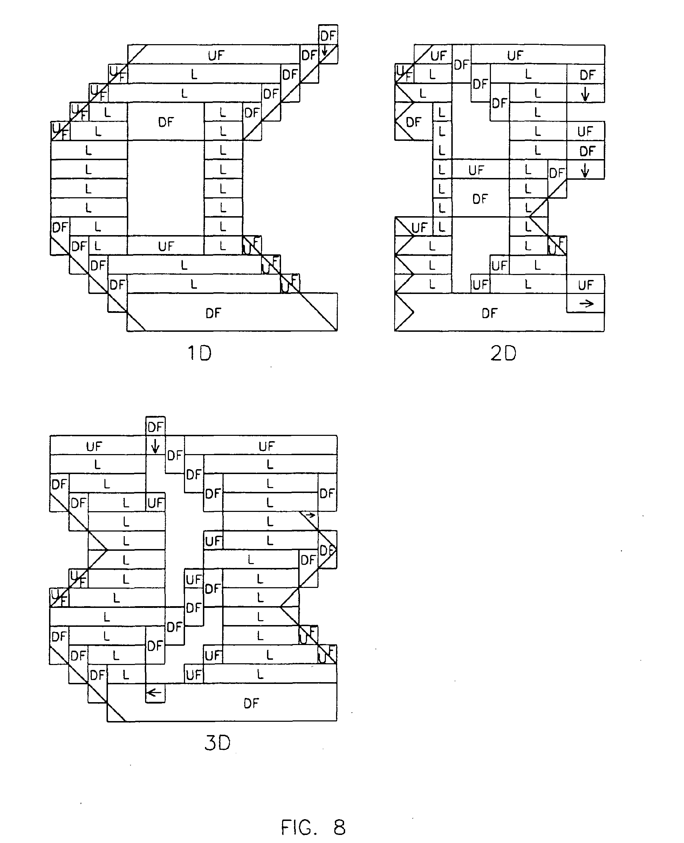

Figures 8-1A, 8-2A, and 8-3A depict a side views of the first, second and third objects, respectively, with the FDFBs derived from embodiment C;

Figures 8-1B, 8-2B, and 8-3B depict side views of the first, second, and third objects, respectively, with the FUFBs derived from embodiment C;

Figures 8-1 C, 8-2C, and 8-3C depict side views of the first, second and third objects, respectively, with the FLBs derived from embodiment C;

Figures 8-1D, 8-2D, and 8-3D depict side views of the first, second and third objects, respectively, as formed with the FDFBs, FUFBs, and FLBs for embodiment C;

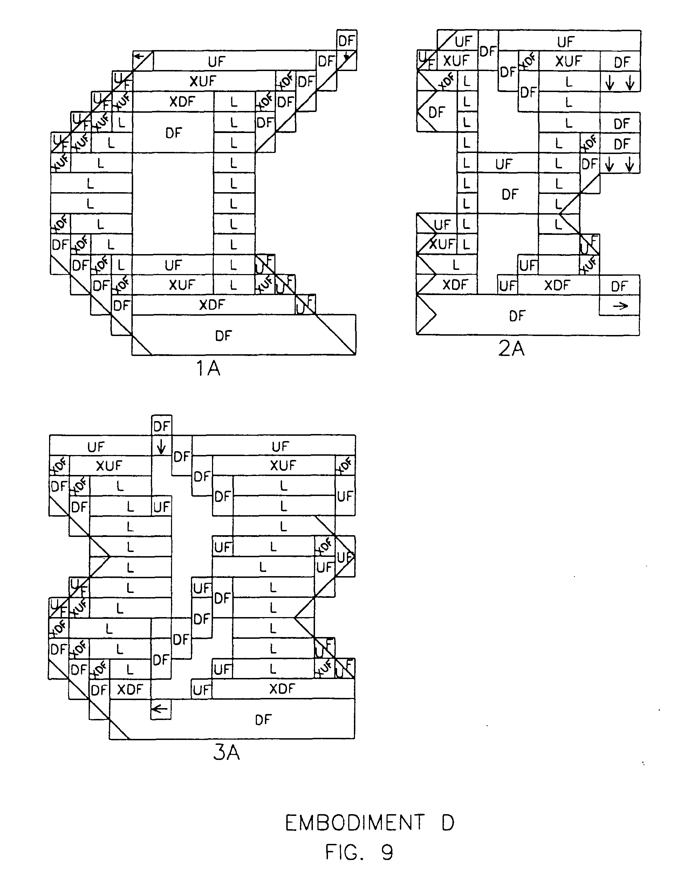

Figures 9-1A, 9-2A, and 9-3A depict side views of the first, second, and third objects, respectively, as formed with the FDFBs, FUFBs, FXDFBs, FXUFBs, and FLBs for embodiment D;

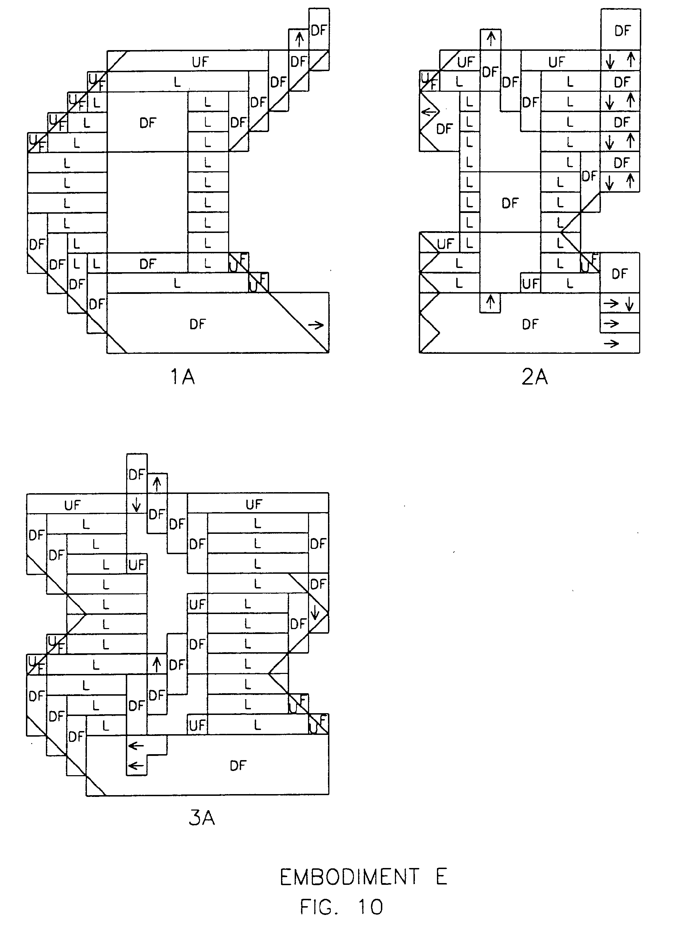

Figures 10-1A, 10-2A, and 10-3A depict side views of the first, second, and third objects, respectively, as formed with the FDFBs, FUFBs, and FLBs for embodiment E;

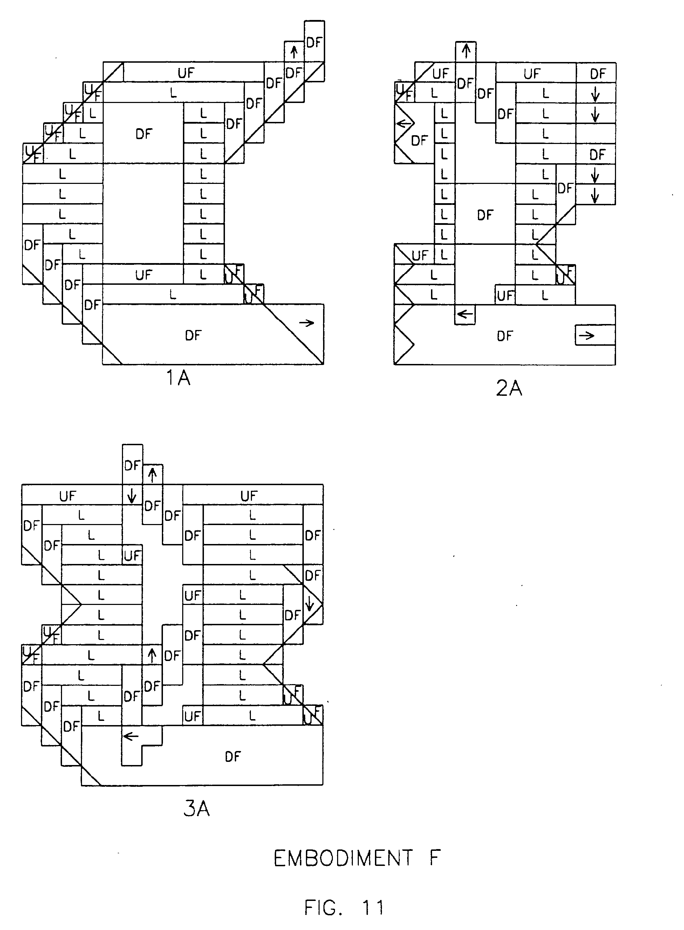

Figures 11-1A, 11-2A, and 11-3A depict side views of the first, second, and third objects, respectively, as formed with the FDFBs, FUFBs, and FLBs for embodiment F;

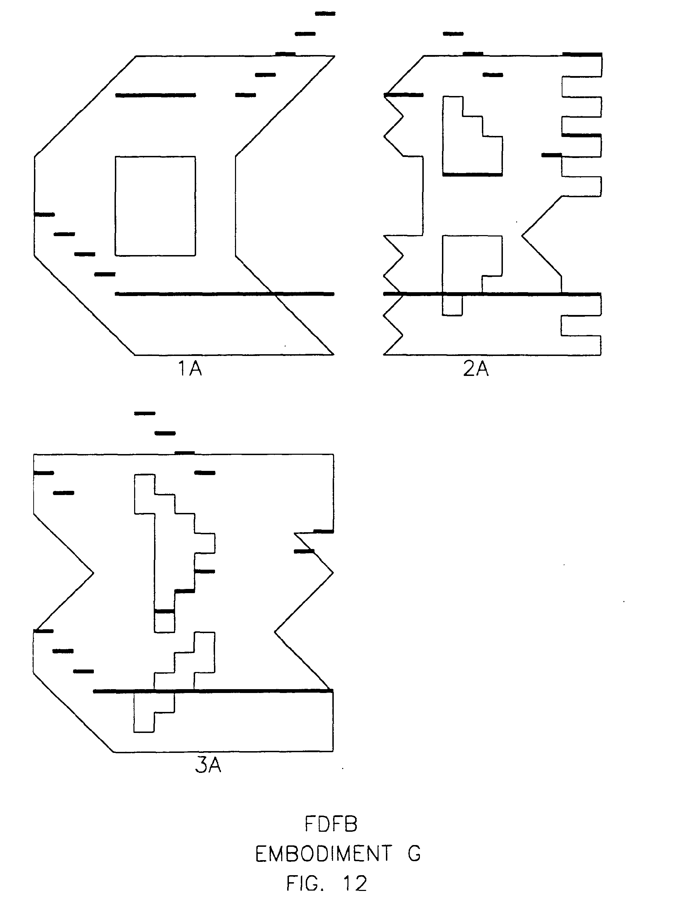

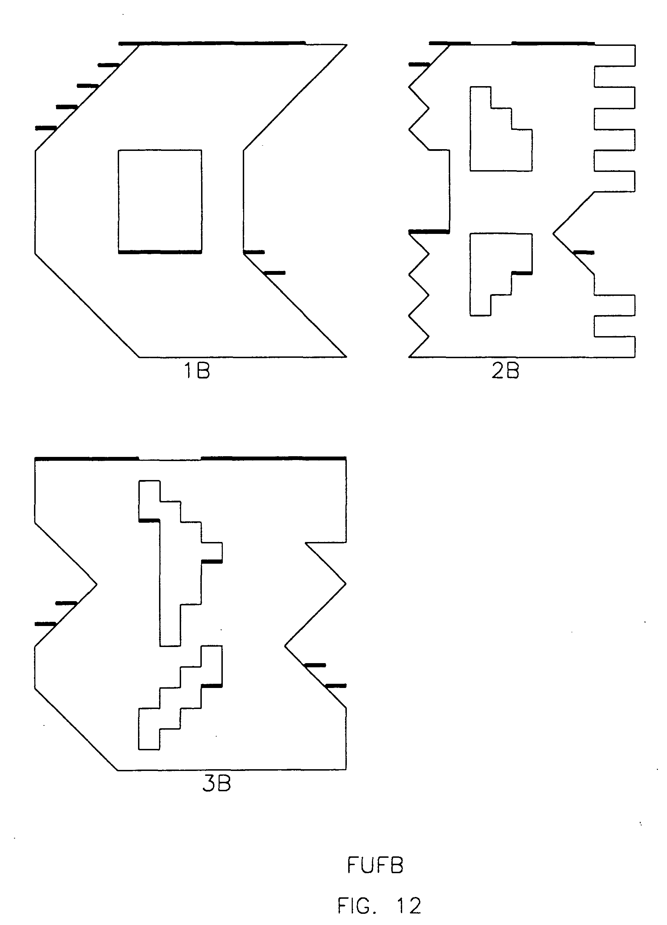

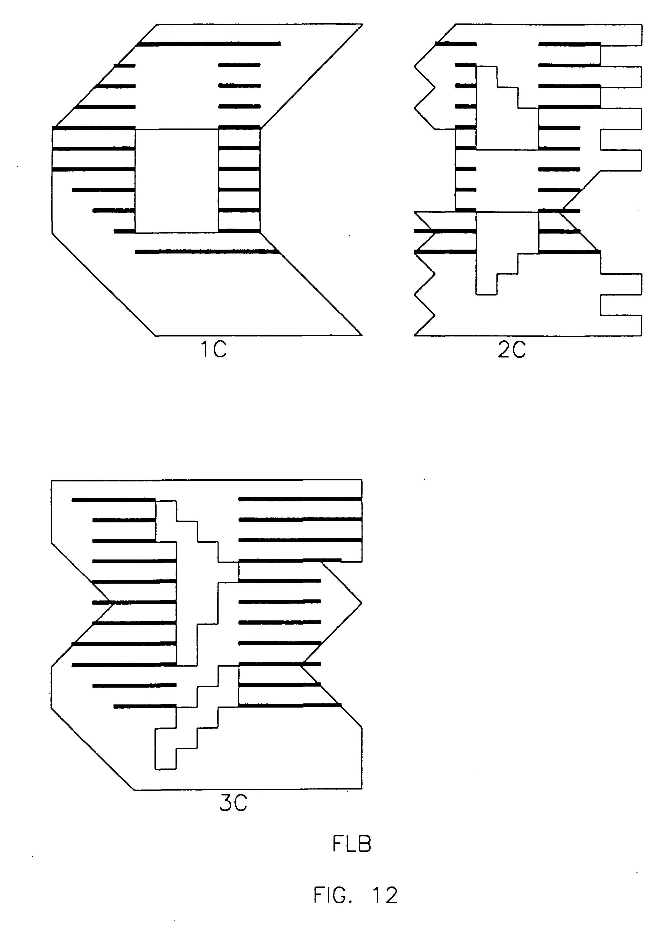

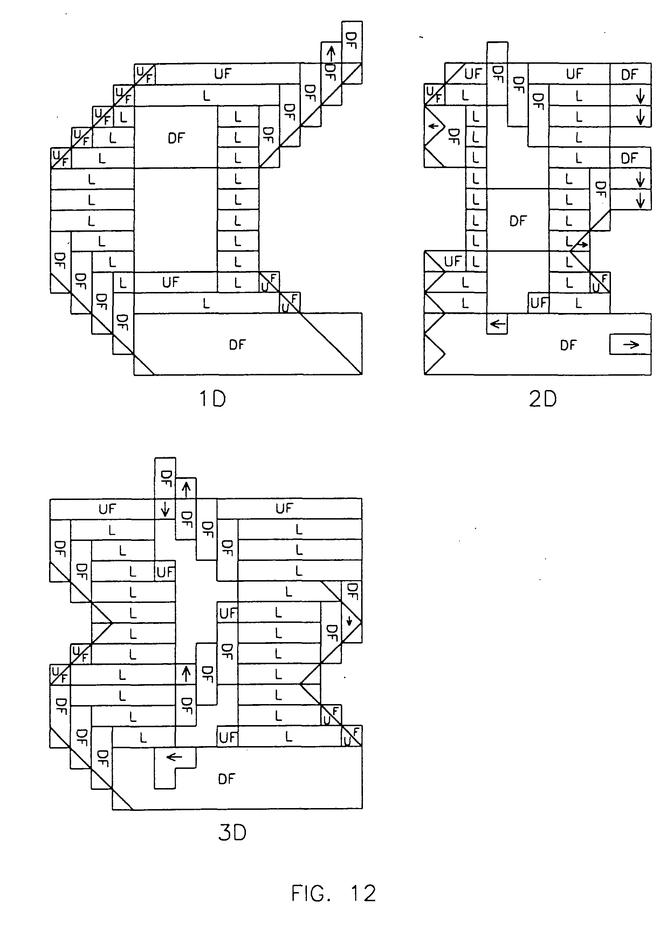

Figures 12-1A, 12-2A, and 12-3A depict a side views of the first, second, and third objects, respectively, with the FDFBs derived from embodiment G;

Figures 12-1B, 12-2B, and 12-3B depict side views of the first, second, and third objects, respectively, with the FUFBs derived from embodiment G;

Figures 12-1C, 12-2C, and 12-3C depict side views of the first, second and third objects, respectively, with the FLBs derived from embodiment G;

Figures 12-1D, 12-2D, and 12-3D depict side views of the first, second and third objects, respectively, as formed with the FDFBs, FUFBs, and FLBs for embodiment G;

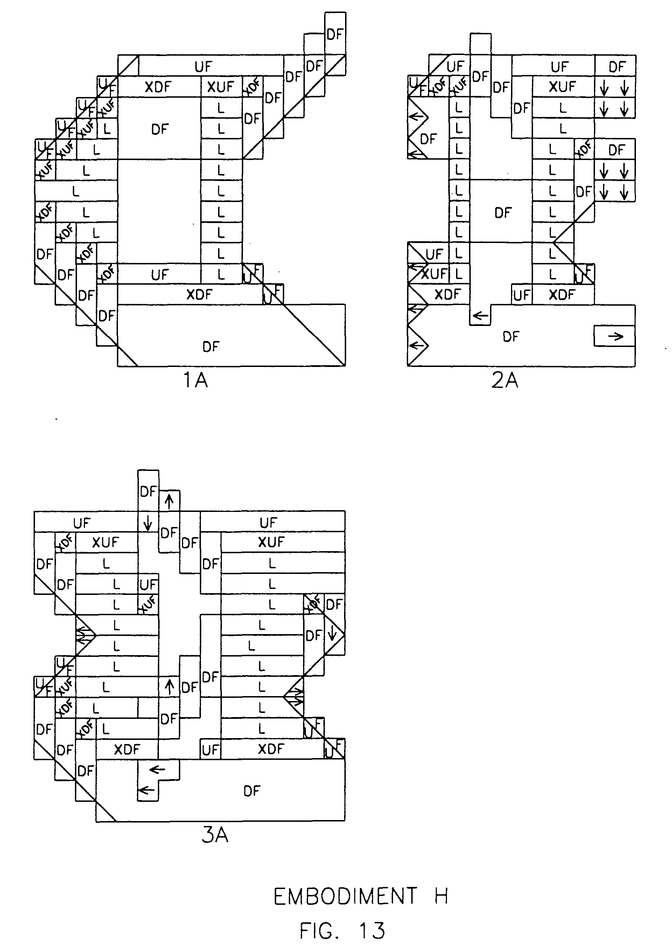

Figures 13-1A, 13-2A, and 13-3A depict side views of the first, second, and third objects, respectively, as formed with the FDFBs, FUFBs, FXDFBs, FXUFBs, and FLBs for embodiment H;

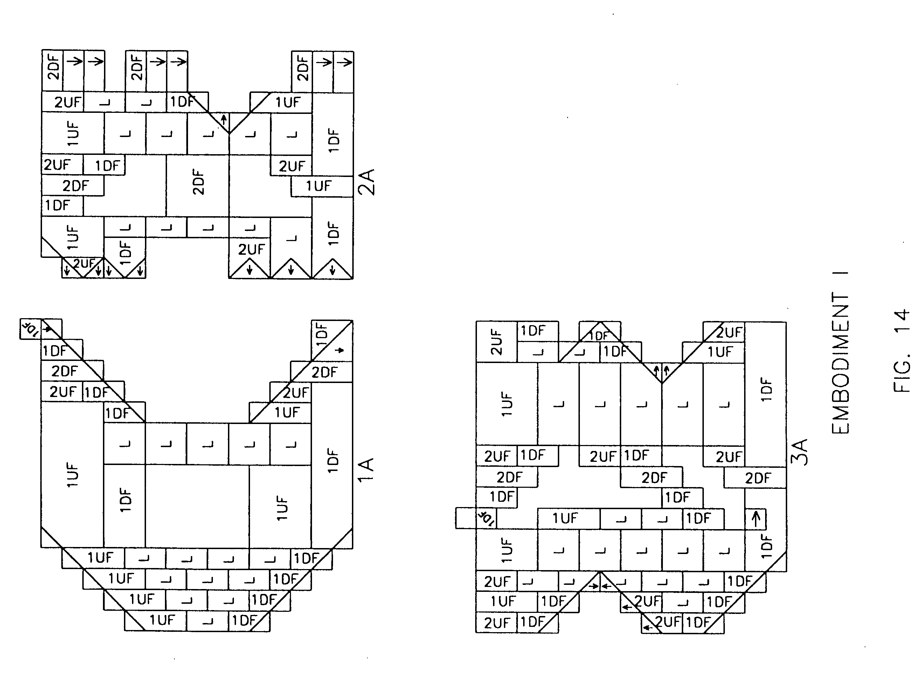

Figures 14-1A, 14-2A and 14-3A depict side views of the first, second, and third objects, respectively, as formed with the 1 FDFBs, 2FDFBs, FLBs, 1 FUFBs, and 2FUFBs for embodiment I;

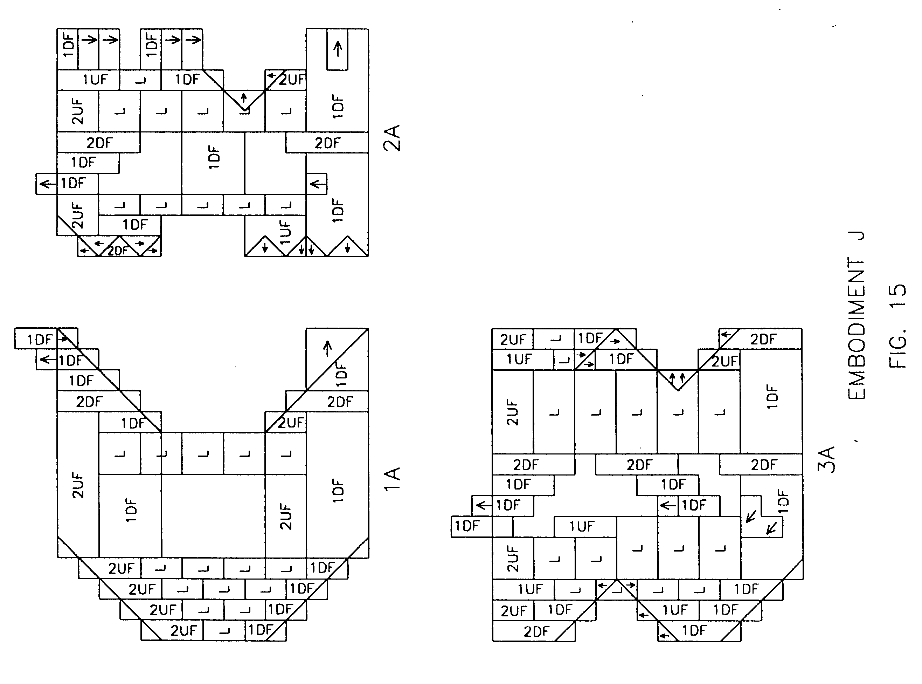

Figures 15-1A, 15-2A, and 15-3A depict side views of the first, second and third objects, respectively, as formed with the 1FDFBs, 2FDFBs, FLBs, 1FUFBs, and 2FUFBs for embodiment J;

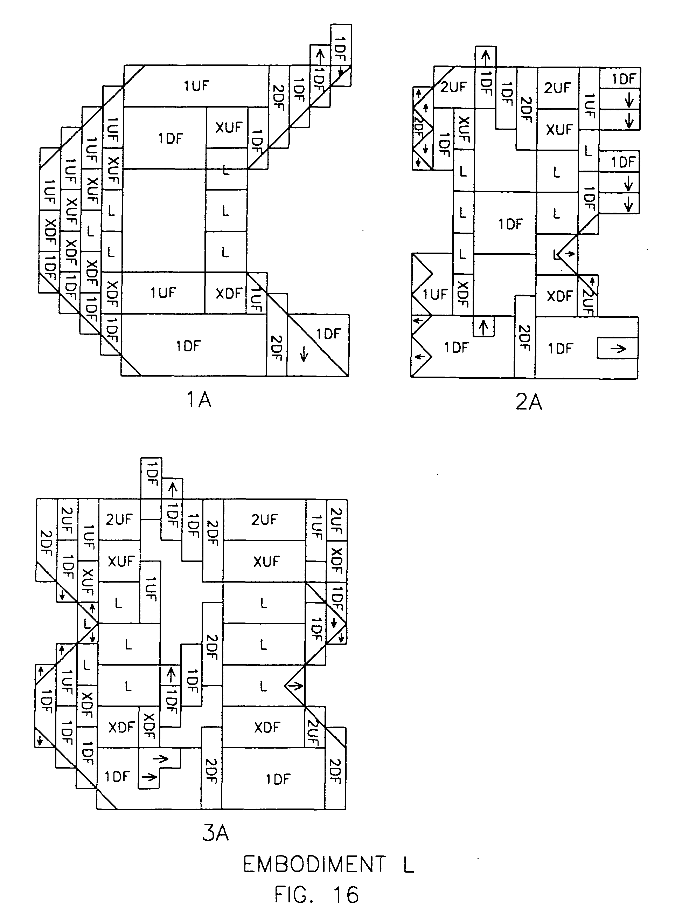

Figures 16-1A, 16-2A, and 16-3A depict side views of the first, second, and third objects, respectively, as formed with the 1FDFBs, 2FDFBs, 1 FUFBs, and 2FUFBs, FXDFBs, FXUFBs, and FLBs for embodiment L;

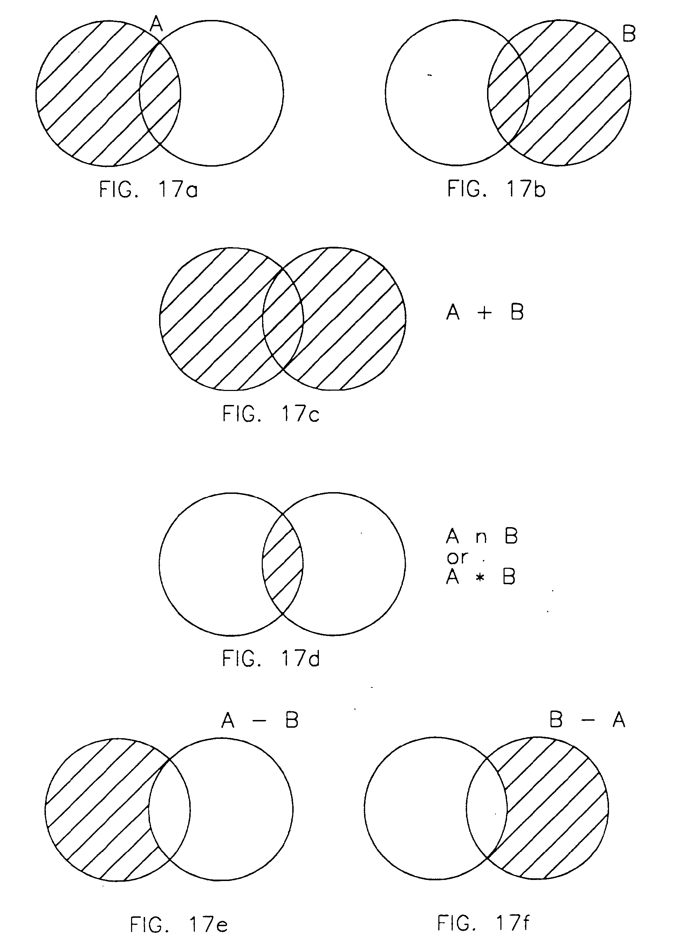

Figures 17a to 17f depict top views of two horizontal regions "A" and "B" which are operated on by Boolean union, intersection, and differencing operations;

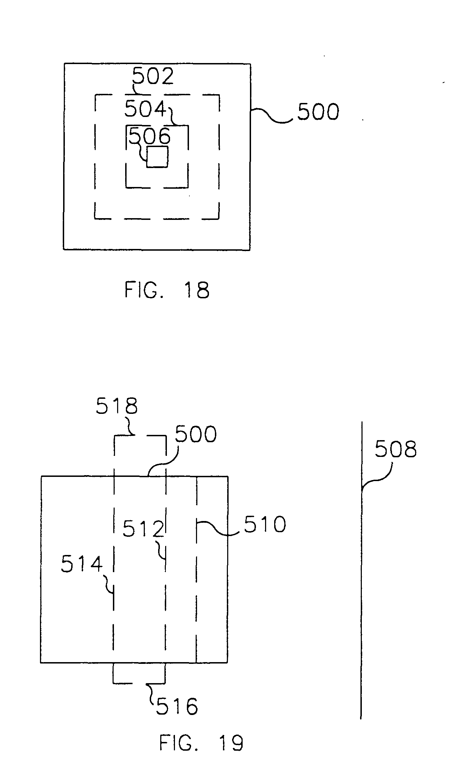

Figure 18 depicts a top view of a square cross-section on which multiple line width compensations have been performed to create secondary boundaries;

Figure 19 depicts a top view of a square cross-section on which an offset line has made secondary boundaries;

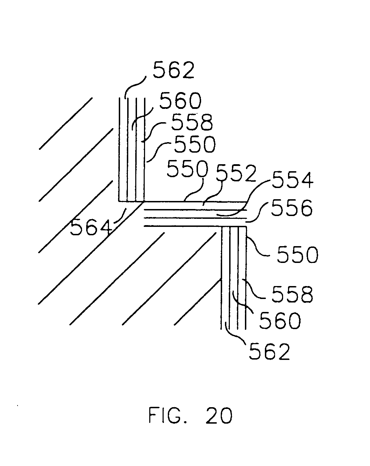

Figure 20 depicts a partial side view of an object with multiple skins, wide boundary regions, and a gap in the solidified region near the surface;

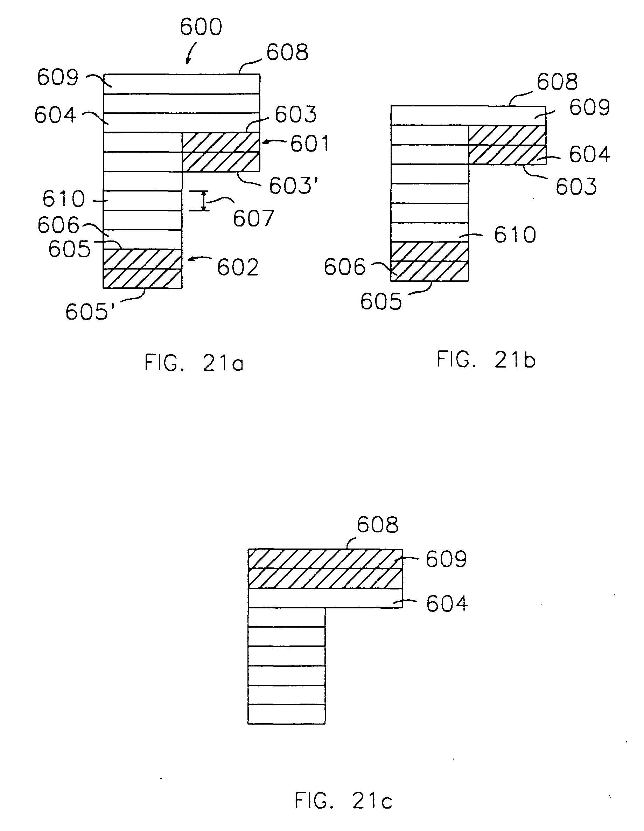

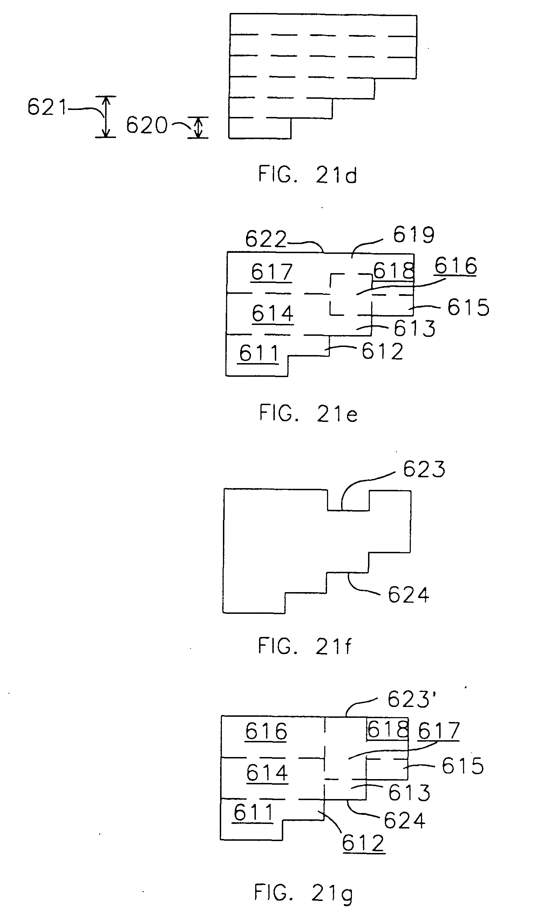

Figures 21a-21f illustrate a method of performing Z-error correction after the object representation has been sliced into a plurality of layer representations;

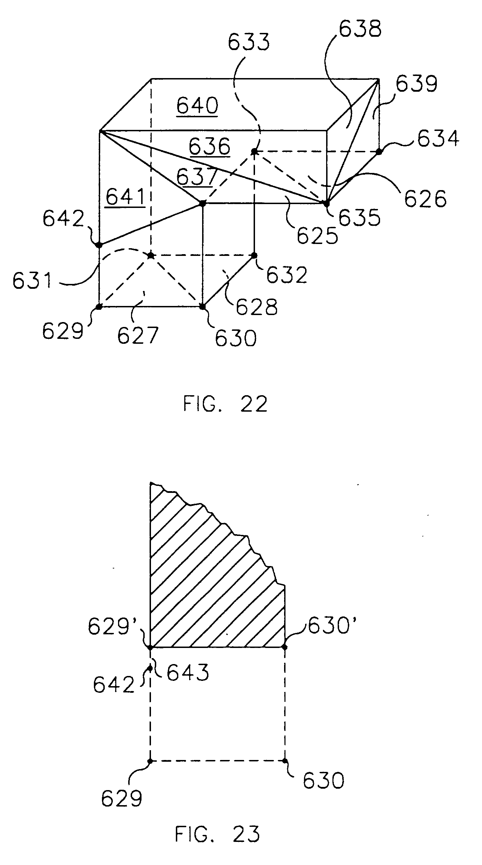

Figures 22-24 illustrate various problems that can occur in connection with Z-error correction;

Figures 20-25 illustrate a flowchart of a method for performing Z-error correction including the preliminary step of converting the .STL file to a .CTL file;

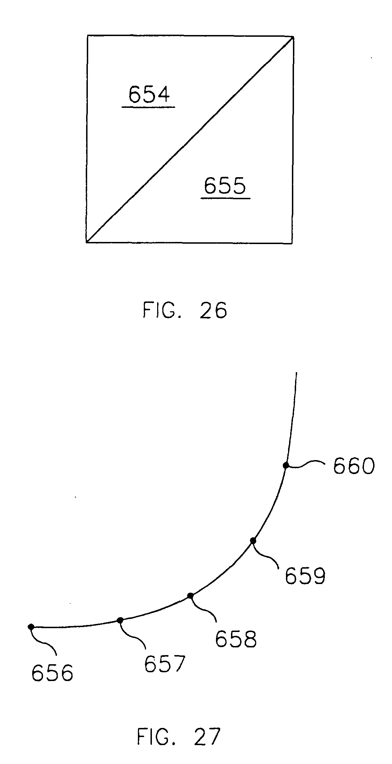

Figure 26 illustrates two triangles referred to in the text to explain the process of forming a .CTL file;

Figure 27 is an illustration of a curved surface discussed in the text in relation to the manipulation of near-flat surfaces to correct for Z-error;

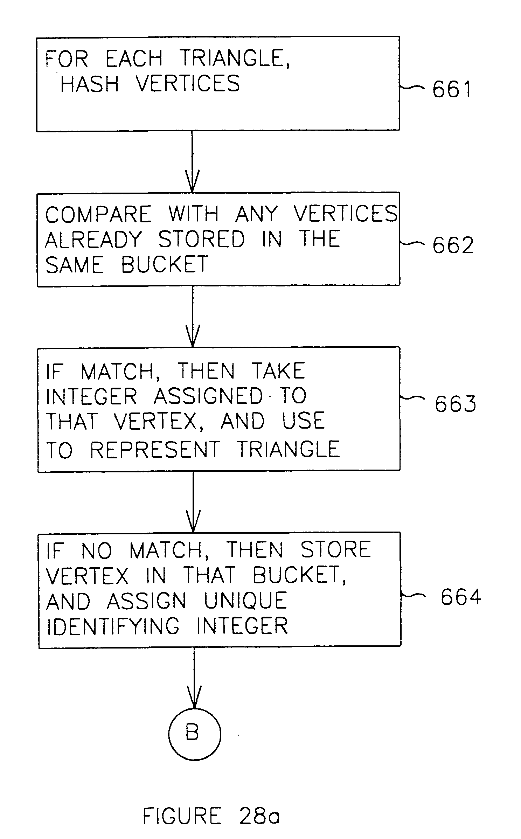

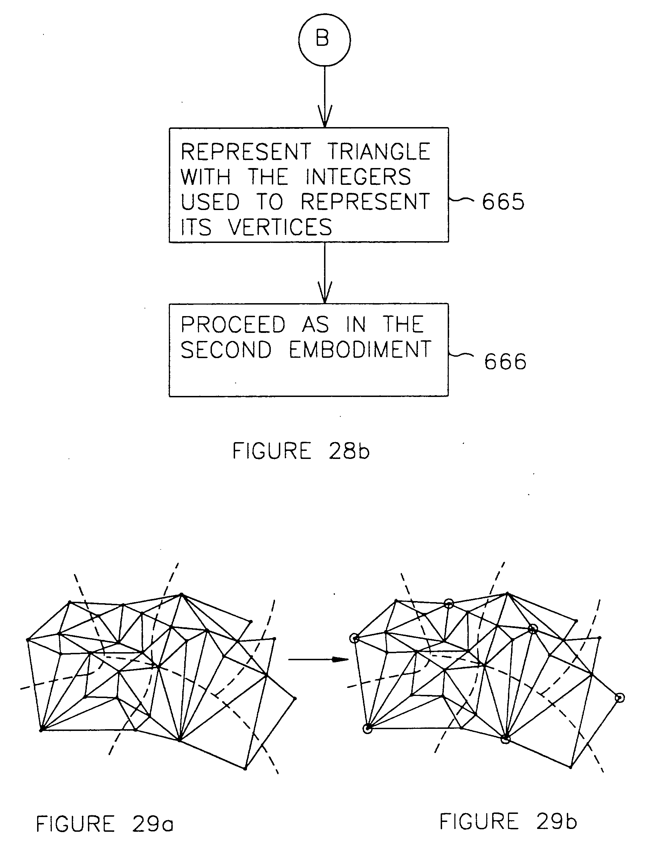

Figures 28a-28b illustrate a flowchart of a preferred method of converting an .STL file to a .CTL file (using a hash table);

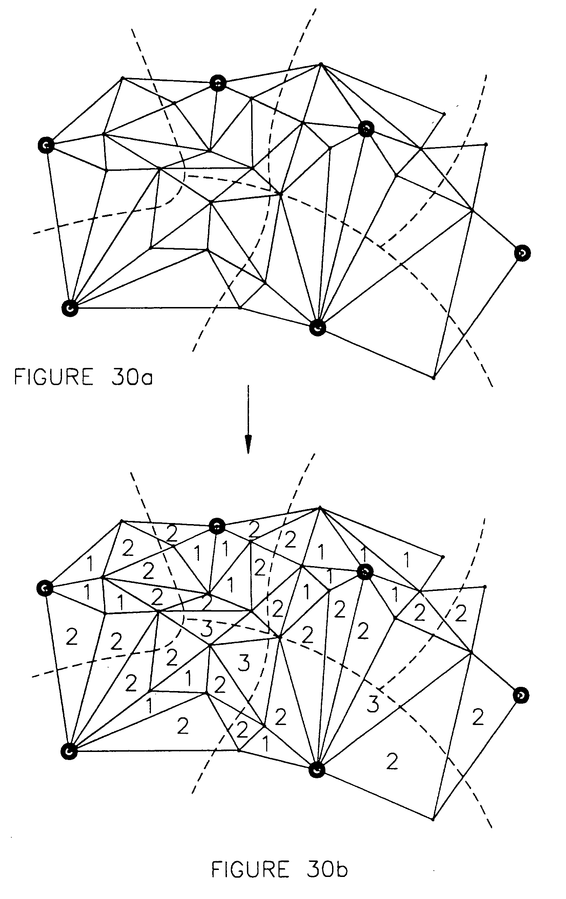

Figures 29a-29b, and 30a-30b illustrate the collapse of multiple triangle vertices into a single point, and the formation of degenerate triangles, when a .CTL file is formed using an artificially high rounding error;

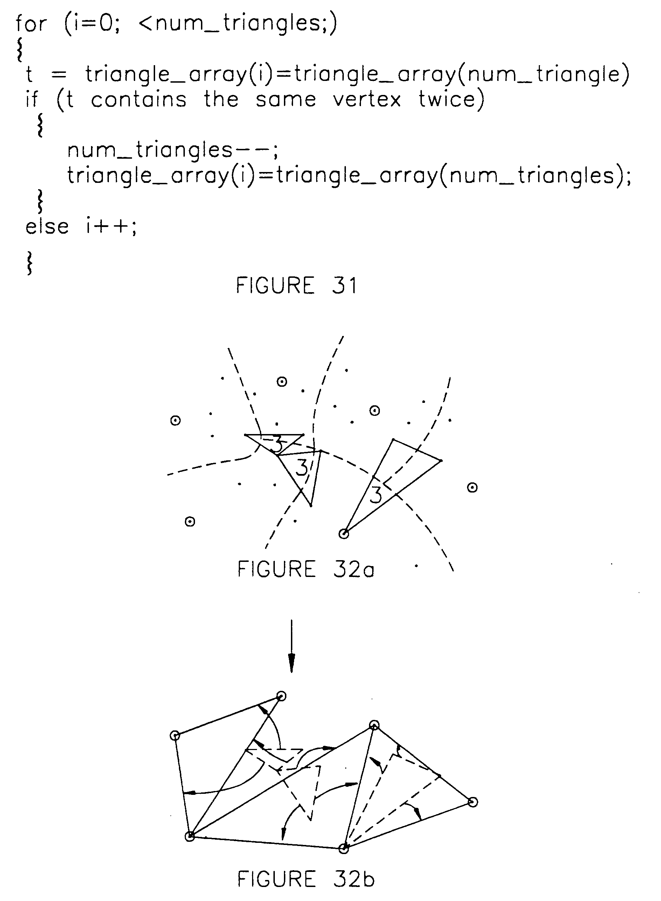

Figure 31 illustrates a fragment of code used to eliminate degenerate triangles;

Figure 32a-32b illustrate the expansion of non-degenerate triangles to fill the void left by the removal of degenerate triangles;

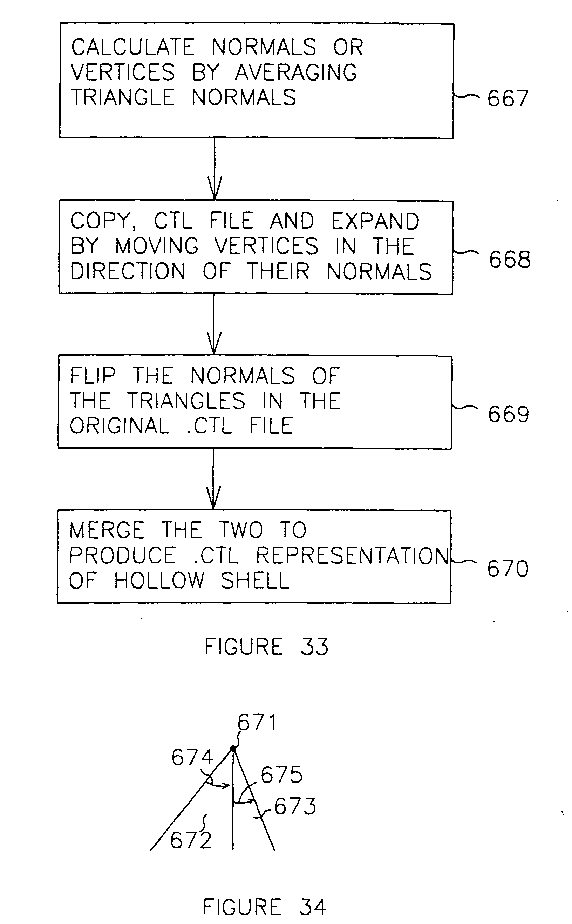

Figure 33 illustrates a flowchart of a process for manipulating a .CTL file in order to produce a hollow shell of the object;

Figure 34 illustrates the process of processing a vertex normal as a weighted average of associated triangle normals, where the weights are based on the angles of the relevant triangle vertices;

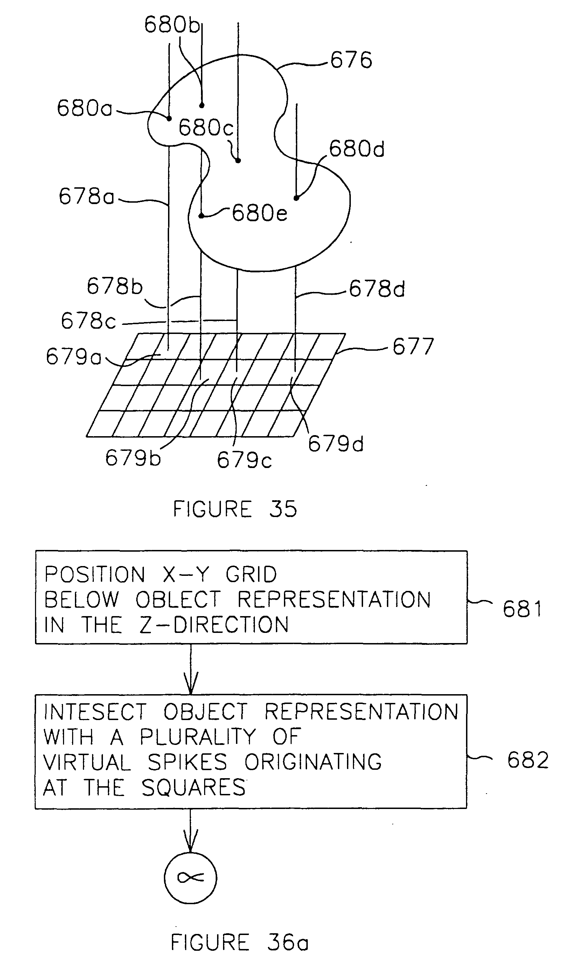

Figure 35 illustrates the process of forming a 3D-RLE object representation;

Figures 36a-36b illustrate a flowchart of a method for forming the 3D-RLE object representation;

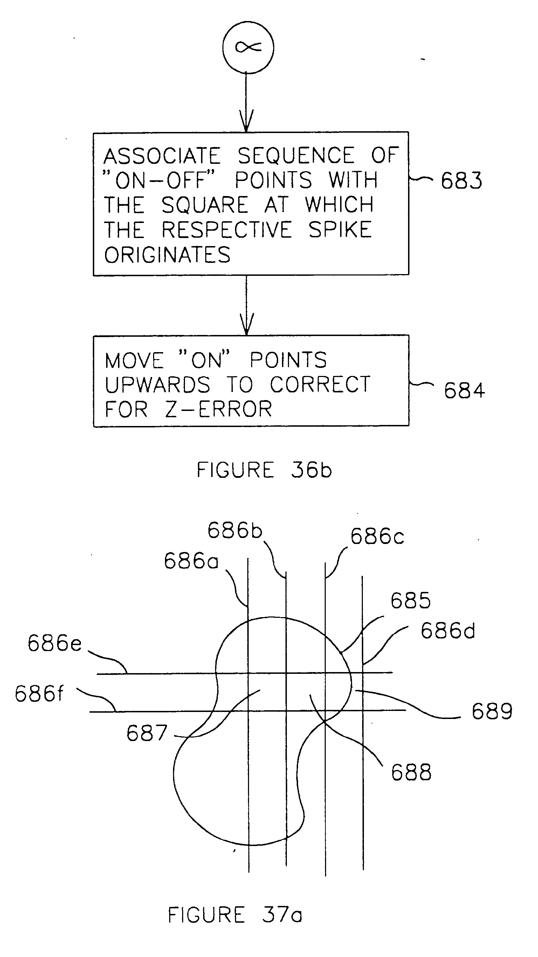

Figures 37a-37b illustrate the process of forming a recursive subdivision space representation of an object;

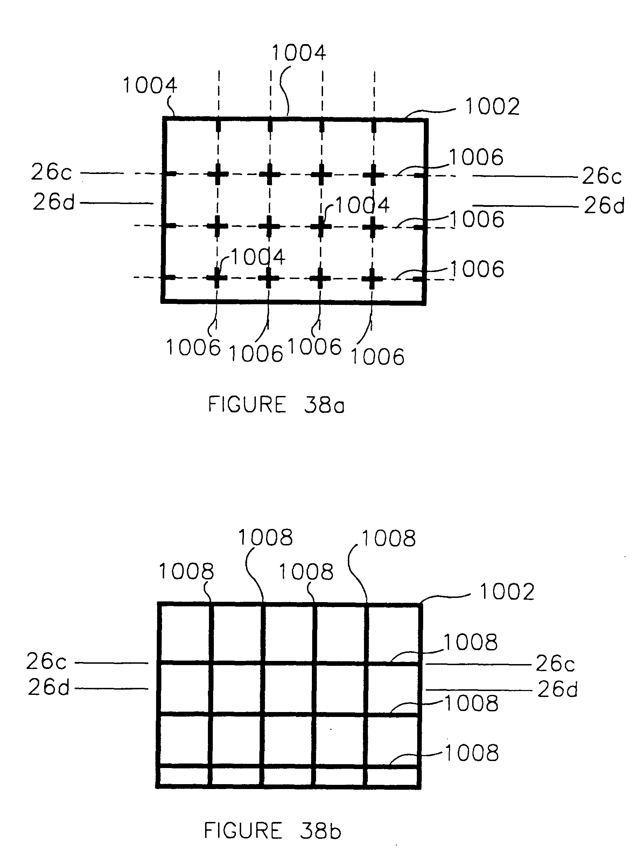

Figures 38a and 38b depict two cross-sections of an object wherein each cross-section uses a different hatching pattern;

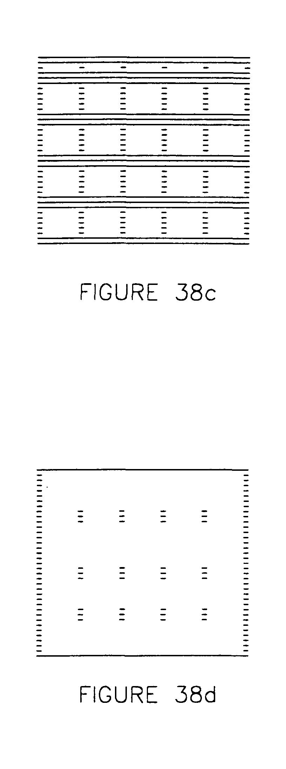

Figures 38c and 38d depict vertical cuts through the object of FIGURES 26a and 26b at the two locations indicated;

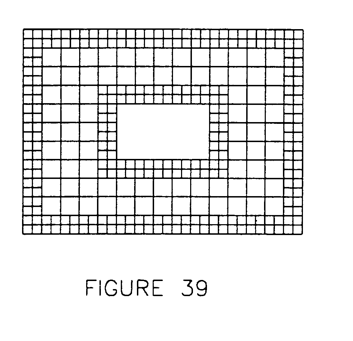

Figure 39 depicts a cross-section divided into two regions with each region being hatched with a different pattern;

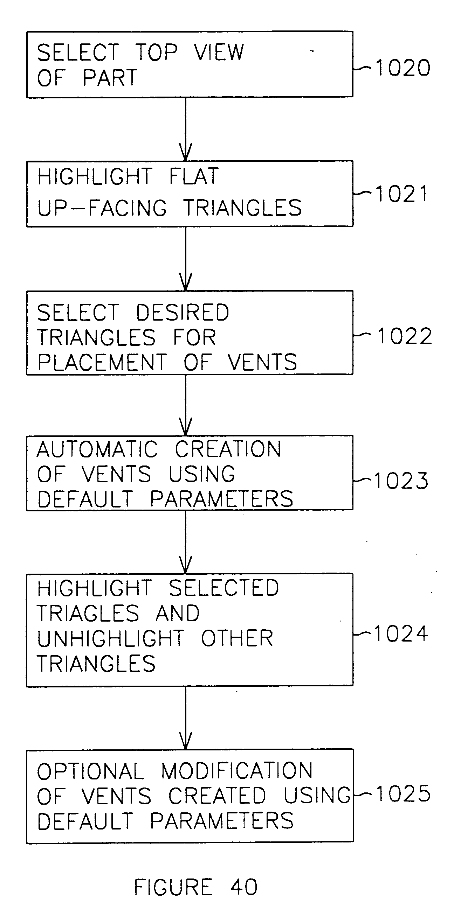

Figure 40 depicts a flowchart of the process of inserting a vent into a part through VIEW;

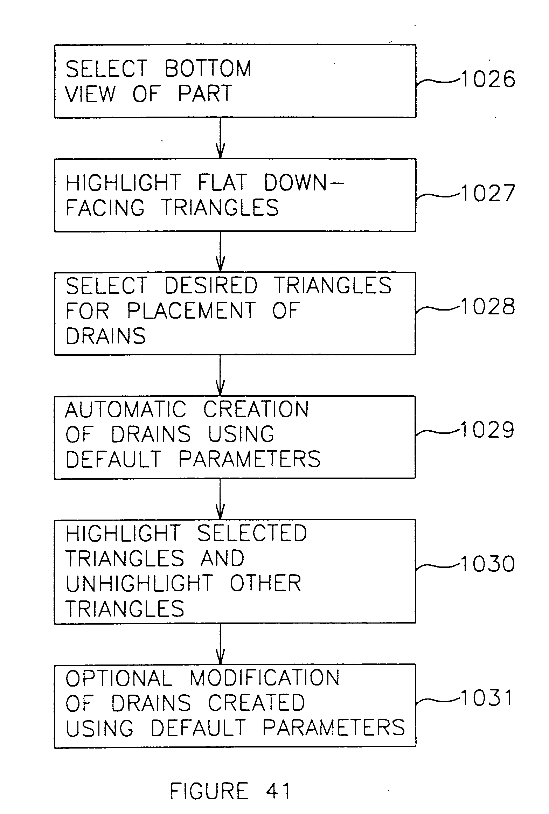

Figure 41 depicts a flowchart of the process of inserting a drain into a part through VIEW;

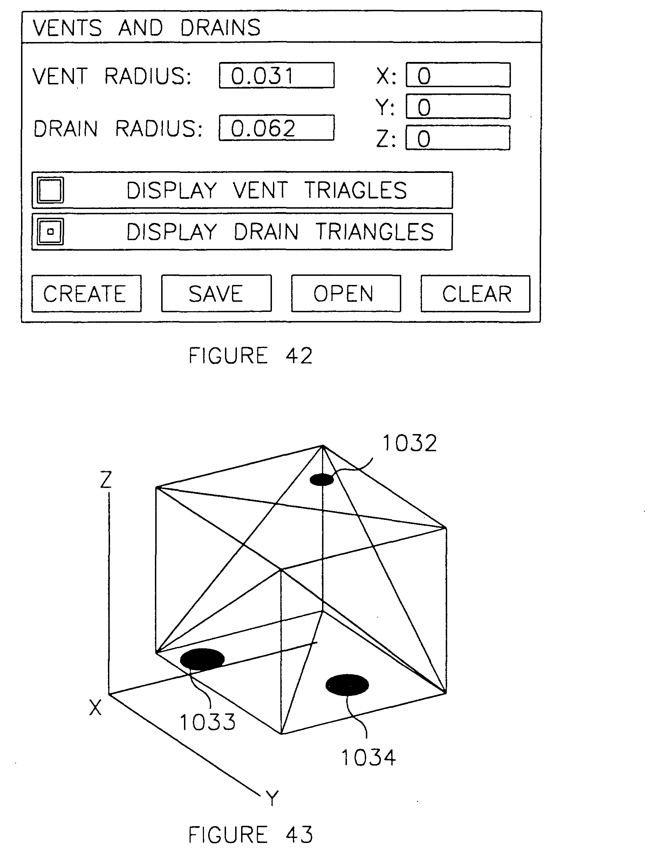

Figure 42 illustrates the "Vents and Drains" window of VIEW;

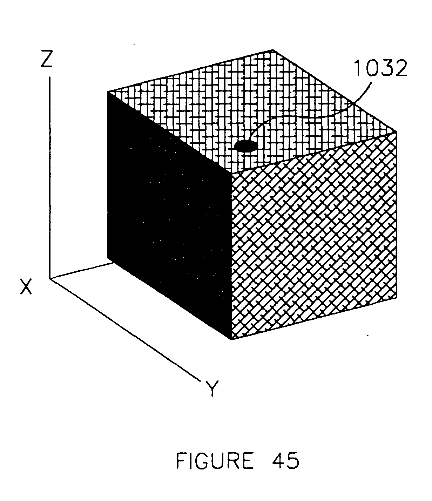

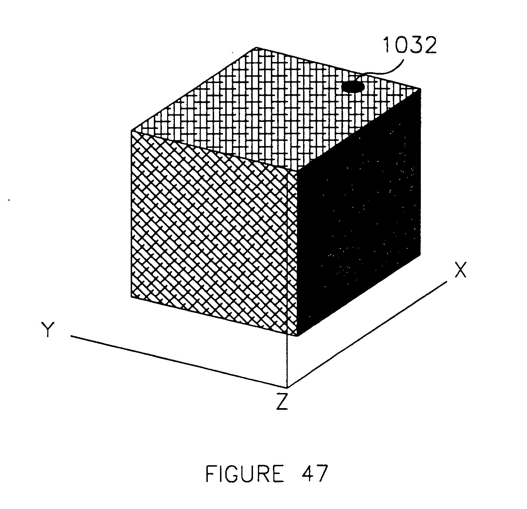

Figures 43-45 and 47 illustrates various perspective views of an object into which has been inserted vents and drains;

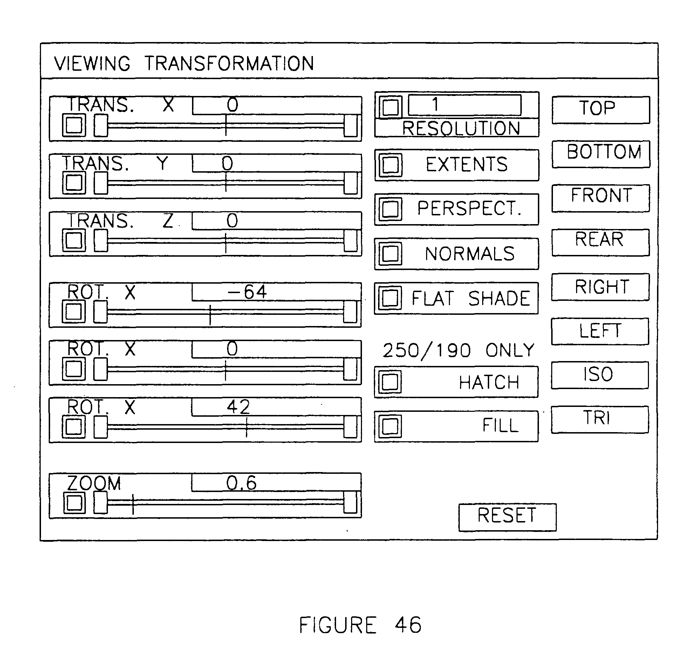

Figure 46 illustrates the "Viewing Transformation" window of VIEW;

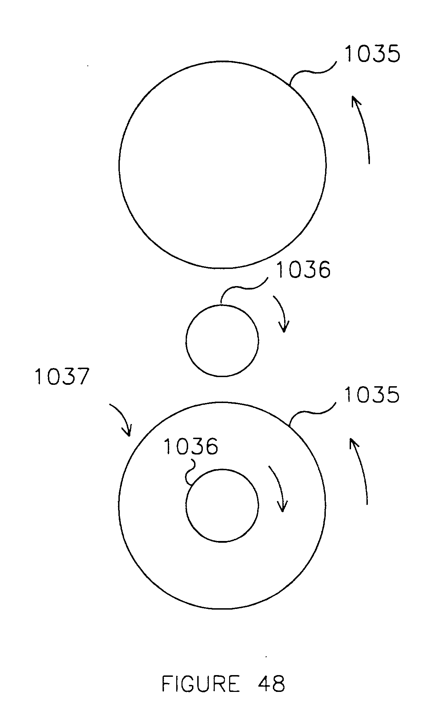

Figure 48 illustrates the use of a Boolean operation to insert a vent/drain in a flat region;

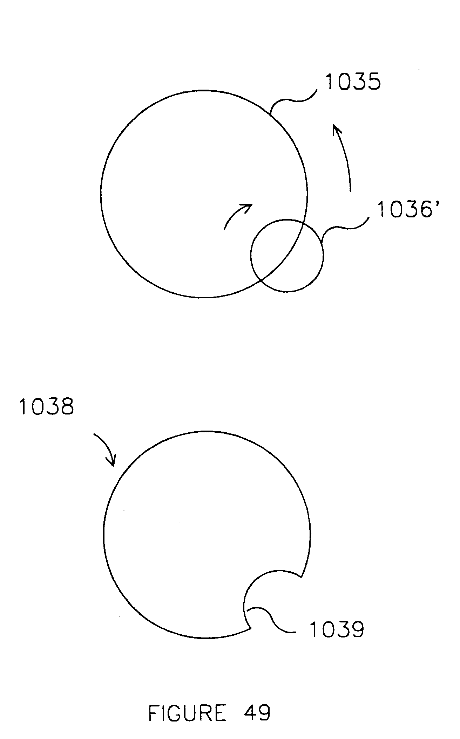

Figure 49 illustrates the case in which the vent/drain extends beyond a flat region;

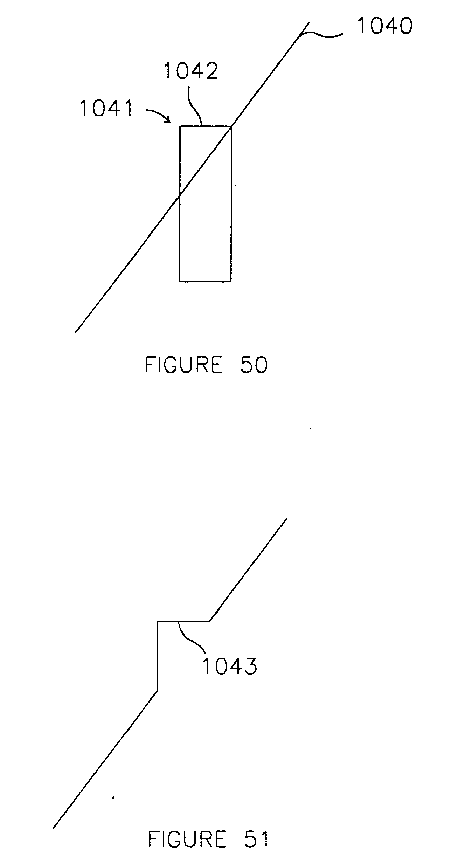

Figures 50-51 illustrate a first approach for inserting a vent/drain in a near-flat region;

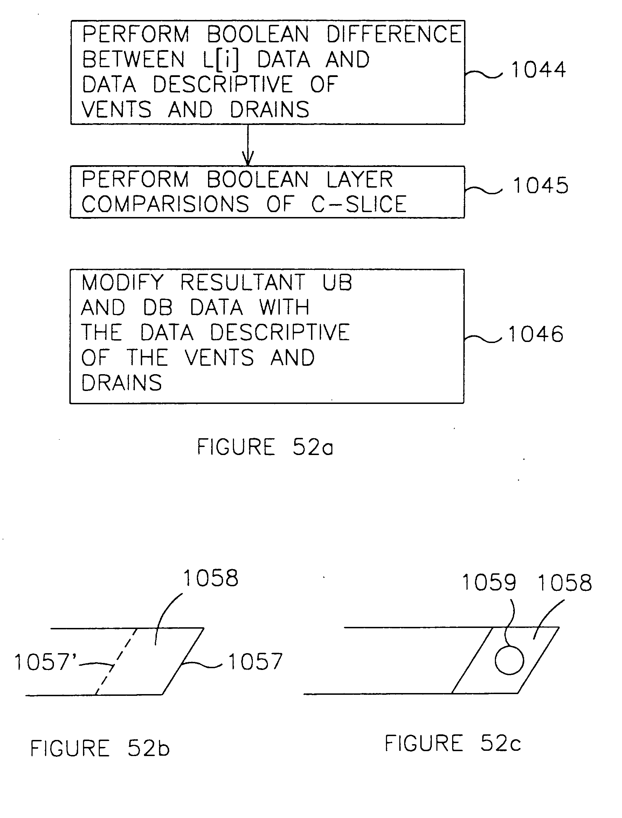

Figures 52a-52c illustrate a second approach for inserting a vent/drain in a near-flat region;

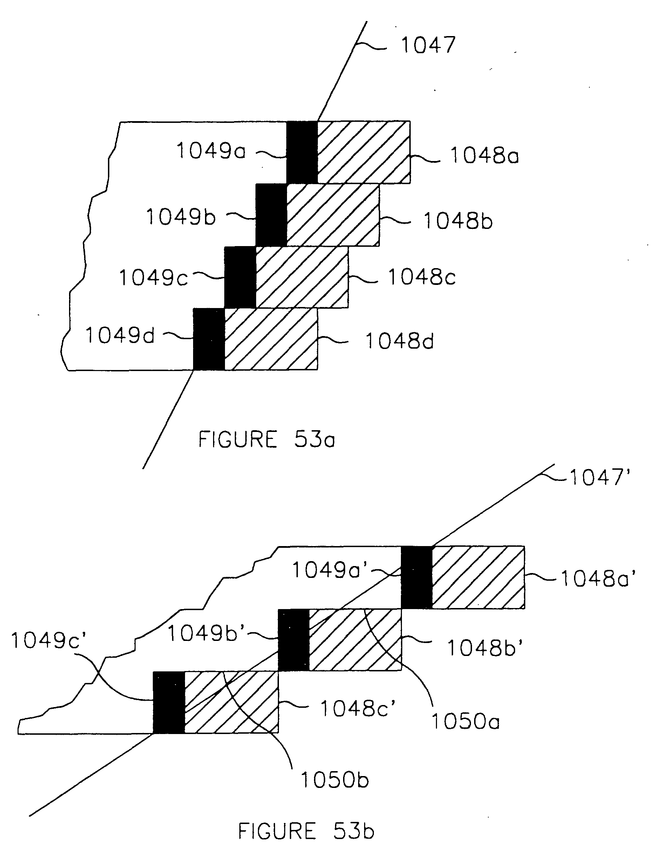

Figures 53a-53b illustrate a problem that can occur with this approach in relation to steep near-flat regions;

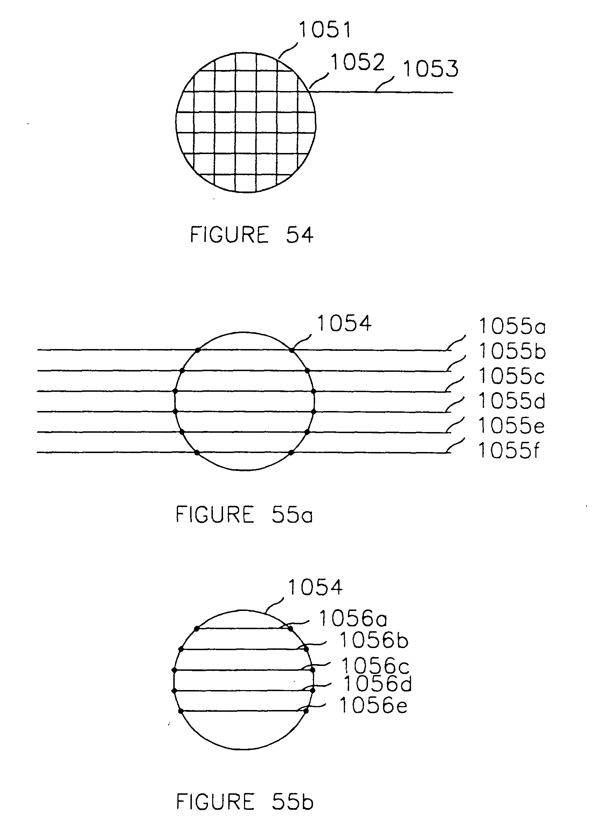

Figure 54 illustrates the creation of unwanted hatch/fill that occurs when portions of layer boundaries are eliminated; and

Figures 55a-55b illustrate the use of a plurality of lines spaced in the z-direction to represent a vent/drain on a near-flat or vertical surface.

Best Mode for Carrying Out the Invention

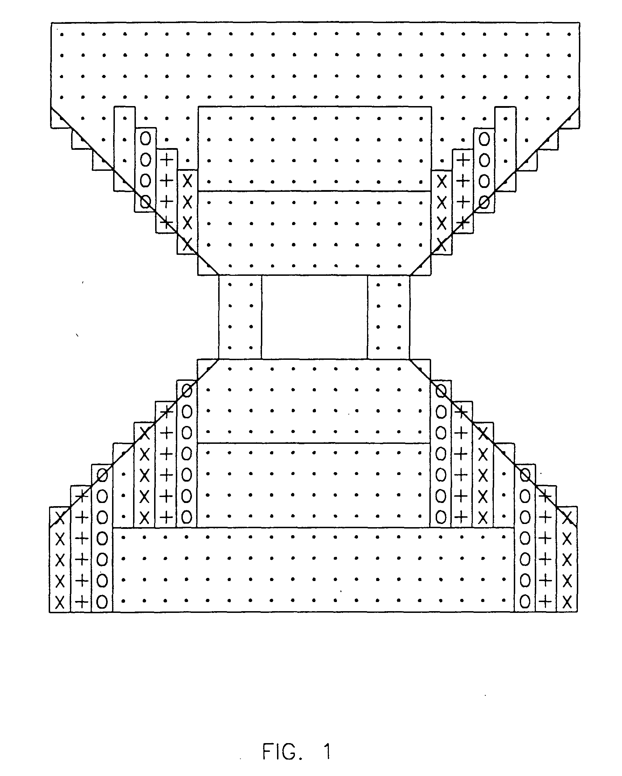

The Simultaneous Multiple Layer Comparison (SMLC) techniques described herein (and also described in PCT Pub. #WO 92/08200, U.S. Patent No. 5,321,622, and U.S. Patent No. 5,192,469, all of which are hereby incorporated by reference) can be implemented for an MSD which is greater than the desired resolution, and/or an MRD which is greater than the desired resolution. For example, Figure 1 depicts a side view of a three-dimensional object as formed using an embodiment wherein the material has an MSD which is four times greater than the desired resolution and an MRD which is also four times greater than the desired resolution. In practice for a given exposure style, the MSD and MRD may have different values. In present circumstances, the most useful ratios of MSD to layer-thickness (i.e. desired resolution) are in the range of one to four and more specifically in the range of two to three. Similarly, in present circumstances, the most useful ratios of MRD to layer thickness are in the range of one to four and more specifically in the range of two to three. However, the usefulness, techniques for defining, and implementation of embodiments with higher ratios are readily apparent from the instant disclosure and will become more necessary as demand for higher resolution and accuracy drive layer thickness smaller..

As noted previously, with regard to the MSD, the resolution of the object will be that of the layer thickness except in those portions of the object which have thicknesses less than the MSD. Also as noted previously, for those portions of an object with a thickness less than the MSD, a single default style may exist or a series of selectable styles can be made available. As flat surfaces are the easiest to smooth (e.g. sand), a preferred priority embodiment is one that emphasizes accurately locating non-flat features and shifting any necessary distortion to the flat surfaces.

With regard to an MRD greater than one-layer-thickness, the layer comparisons must ensure that when an up-facing feature is reached, material wasn't cured below that feature within a depth which is less than the MRD. For example, if the MRD is 2 layer thicknesses, it must be ensured that the region one layer-thickness below the up-facing feature isn't cured. As a result, in this example, when an up-facing feature is reached, the feature will either need to be cured to a thickness of two or three layers plus any necessary over-cure amount. As an alternative, the algorithms used to generate the exposure data could ensure that the up-facing features have cured material located two layer thicknesses below the them while these lower cured regions are formed from coatings of material that have been given thicknesses of one, two or three layer thicknesses. In the one layer thickness case, a coating of one layer thickness is attempted and hopefully formed. A second alternative might accommodate utilization of appropriate coating thicknesses for the particular MRD by making adjustments in the cure depth which is applied to down-facing features. The algorithms described above, and to be described below, for working with both an MSD and an MRD, start the slicing process from the bottom of the object and work upward; however, in some circumstances it may be useful to reverse the order of slicing.

The techniques described herein and associated MSD definitions can be modified to deal with any print through problems that may exist. If the overcure necessary for adhesion and structural integrity doesn't cause intolerable print through of a previously formed layer which is given a cure depth at least as large as the MSD and which forms a down-facing region, then it can be ignored. However, if the necessary overcure does cause intolerable print through of down-facing features, then it must be taken into consideration when determining cure parameters.

For example, if the print through is only due to the curing of the first layer above a Final Down-Facing Boundary (FDFB) region and one wants to account for the print through, one must consider several things. Part of the FDFB may be both up-facing and down-facing and thus print through will not effect the cure depth of this region. Furthermore, another part of the FDFB may be only down-facing which implies that there is at least one additional layer, to be solidified, located above it, and thus print through must be considered. An FDFB with at least one additional object layer above can only be cured in association with its assigned cross-section if the MSD plus the print through can yield a net thickness equal to the distance between the assigned cross-section and the lower edge of the down-facing feature. If this is the case, an appropriate exposure can be used on the FDFB to yield a thickness greater than or equal to the MSD wherein the remaining depth of cure will be achieved when exposing the next layer. If this is not the case, the FDFB region must be pushed up one additional layer so as to provide sufficient thickness, between the upper surface of the layer being cured and the lower edge of the down-facing feature, to allow a combined FDFB exposure, which is at least equal to the MSD, and print through exposure so as to place the lower edge of the down-facing feature at its proper location. If a portion of the upshifted FDFB overlays what was a final up-facing boundary FUFB region, this portion should be given an exposure to yield the full cure depth need so as to place the down-facing feature at its proper location. On the other hand, if a portion of the upshifted FDFB region does not overlay an FUFB region, then that portion of the FDFB region should be given an exposure that yields a cure depth which is less than the necessary cure depth by the amount which will be added when the next higher layer is adhered to the upshift FDFB region. It must be further remembered that when curing the region immediately above a FDFB, wherein print through is a concern, the print through will produce a pattern at the lower edge of the down-facing feature matching exposure pattern that is used. Thus, exposure of such a region should be applied in a manner so as to maintain or produce a smooth down-facing surface in the final object.

There are a number of important parameters that can be incorporated into the SMLC techniques disclosed herein. The range of possibilities that these parameters can take results in a large number of possible embodiments. Several of the primary parameters and some of their possible values are listed in Table 1 below:

| TABLE 1 - IMPORTANT SMLC PARAMETERS AND PRIMARY VALUES | | |
|---|---|---|
| Factor | Typical Values | |
| MSD | a. | 1 LT (Standard Stereolithography) |
| | b. | 2 - 4 LT |
| | c. | Other |
| MRD | a. | 1 LT (Standard Stereolithography) |
| | b. | 2 - 4 LT |
| | c. | Other |
| Features | a. | None thinner than MSD |
| | b. | Some Thinner than MSD |
| | | 1. Cure all portions even if thinner than the MSD |
| | | 2. Cure only portions which are thicker than 1/2 the MSD |
| | | 3. Cure no portions which are thinner than the MSD |
| | | 4. Other |
| | c. | Other |
| Priority | a. | Up-Facing |
| | b. | Down-Facing |
| | c. | Sloped Features, e.g. Ratio of Slopes |
| | d. | Flat Features |
| | e. | Other |
| Skin | a. | Single (Standard Stereolithography) |
| | b. | Double |
| | c. | Other |
| Print Through | a. | Adhesion from 1 Layer |
| | b. | Other |
| Boundary Removal | a. | Inner (for QUICKCAST) |
| | b. | Other |

(continued)

| TABLE 1 - IMPORTANT SMLC PARAMETERS AND PRIMARY VALUES | | |
|---|---|---|
| Factor | Typical Values | |
| Uniformity | a. | Though a particular MSD is okay use thicker layers as much as possible to achieve a more uniform cure depth. |
| | b. | Though a particular MSD is okay use a thicker Z-error correction factor as much as possible to achieve a more uniform cure depth. |
| | c. | Other |
| Hatch Spacing | a. | Inner and outer = equal |
| | b. | Inner wider |
| | c. | Other |
| Line Width Compensation | a. | Single value for all boundaries |
| | b. | Boundary specific values |
| | c. | Other |
| Level | a. | Basic (move boundaries with little regard to what they encounter) |
| | b. | Moderately Perceptive (Remove multiple curing of regions) |
| | c. | Highly perceptive (Stop the up-shifting of SDFBs when they are bounded from below due to up-shifting of SDFBs from lower layers |
| | d. | Other |
| Multiple Objects | a. | Don't worry about merging of multiple objects |
| | b. | Consider the merging of multiple objects |
| | c. | Other |
| Variable Specification | a. | General specification |
| | b. | Region specific |
| | c. | Other |
| Cross-sectional Erosion or Expansion | a. | Determination of offset FLBs |
| | b. | Determination of at least first and second regions at different distances from the FLBs for applying different exposure parameters. |
| | c. | Combine with SMLC for multiple boundaries and multiple skins. |
| Other | | |

Table 2 depicts the primary characteristics of a few example embodiments which are further described below. As is apparent from Table 1, many other embodiments are possible.

TABLE 2:

| PRIMARY CHARACTERISTICS FOR EMBODIMENTS A - L | | | | |
|---|---|---|---|---|
| No. | MSD (LT) | MRD (LT) | Priority | Other |
| A | 2 | 1 | Up-Facing | Level = Basic |
| B | 2 | 1 | Down-Facing | Level = Basic |
| C | 2 | 1 | Down-Facing | Level = Highly Perceptive |

TABLE 2:   (continued)

| PRIMARY CHARACTERISTICS FOR EMBODIMENTS A - L | | | | |
|---|---|---|---|---|
| No. | MSD (LT) | MRD (LT) | Priority | Other |
| D | 2 | 1 | Down-Facing | Level = Highly Perceptive<br><br>Skinning = Double |
| E | 3 | 1 | Down-Facing | Level = Basic |
| F | 3 | 1 | Down-Facing | Level = Moderately Perceptive |
| G | 3 | 1 | Down-Facing | Level = Highly Perceptive |
| H | 3 | 1 | Down-Facing | Level = Highly Perceptive<br><br>Skinning = Double |
| 1 | 2 | 2 | Down-Facing | Level = Highly Perceptive |
| J | 3 | 2 | Down-Facing | Level = Highly Perceptive |
| K | 3 | 2 | Down-Facing | Level = Highly Perceptive<br><br>Boundary = Inner Removal |
| L | 3 | 2 | Down-Facing | Level = Highly Perceptive<br><br>Skinning = Double<br><br>Boundary = Inner Removal |

In implementing these embodiments, layer comparisons are required to determine with which final cross-sections each portion of each initial cross-section will be associated and each portion's appropriate cure depth.

Layer Comparison Slice (CSlice) as described in U.S. Patent No. 5,321,622, already does generic layer comparisons in the form of Boolean unions (+), differences (-), and intersections ("n" or "*"). Figure 17 graphically depicts these Boolean operations. The shaded portion within the circle of Figure 17A depicts a first region known as region A. The other circle represents the physical placement of a second region, known as region B, relative to region A. In an analogous manner the shaded portion within the circle of Figure 17B depicts region B, while the other circle represents region A. The shaded portion of Figure 17C represents the result of the Boolean union of regions "A" and "B" (A + B). The shaded portion of Figure 17D represents the Boolean intersection of regions "A" and "B" (A $\cap$ B, or alternatively A $^*$ B). The shaded portion of Figures 17E and 17F, respectively, depict the result of the Boolean differencing operation of A minus B and B minus A. CSlice also uses the NOT operator (-). This operator is equivalent to the differencing operator depicted in Figures 36e and 36f but instead of the first element being a finite region of space it is the entire working space. Thus the NOT operator reverses whatever it operates on. The above Boolean operations have been found to be useful in the CSlice program, of course other Boolean operations can also be used as needed.

To aid in understanding each embodiment, several Figures are provided which depict the results of the Boolean operations as required by each embodiment and as specifically applied to three objects. It should be noted that these objects are not typical, as they contain extremely thin features that would not normally be found. These objects were chosen specifically because of these small features in order to verify the algorithms utilized by each embodiment. Only a side view X-Z plane of each object is provided, and thus even though the Boolean operations operate on regions which are two-dimensional in the horizontal plane, only a single dimension of this plane is shown (X-dimension). It is to be understood that the objects possess some unspecified configuration in the other horizontal dimension (Y-dimension) which extends into the plane of the paper.

The starting point for these embodiments are the boundaries currently produced and utilized by C-Slice. Figure 2 and 3 depict the three objects as would ideally be formed using standard stereolithography along with the individual boundary types utilized, assuming MSD <= 1, MRD <=1 and appropriate cured depths are applied.

Figures 2-1A, 2-2A and 2-3A depict side views of a first, second and third objects, respectively, to be stereolithographically formed. These objects are the first, second and third objects referred to in Figures 3 - 16.

Figures 2-1B, 2-2B and 2-3B depict side views of the first, second and third objects, respectively, as formed using standard stereolithography with a desired resolution (MSD = 1, MRD = 1). These Figures depict the desired resolution to be achieved by the embodiments of Figures 3 - 16.

Figures 3-1A, 3-2A and 3-3A depict side views of the first, second and third objects, respectively, with the down-facing boundaries of the objects of Figures 2-1B, 2-2B and 2-3B (SDFB), respectively. It is noted that the upper surface of the FDFB dictate the cross-section with which they are associated.

Figures 3-1B, 3-2B and 3-3B depict side views of the first, second and third objects, respectively, with the up-facing boundaries of the objects of Figures 2-1B, 2-2B and 2-3B, respectively, which have not been reduced by any overlap with down-facing boundaries of Figures 3-1A, 3-2A and 3-3A (IUFB), respectively. It is noted that the upper surface of the IUFB dictate the cross-section with which they are associated.

Figures 3-1C, 3-2C and 3-3C depict side views of the first, second and third objects, respectively, with the up-facing boundaries of the objects of Figure 2-1B, 2-2B and 2-3B, respectively, which have been reduced by any overlap with down-facing boundaries of Figure 3-1A, 3-2A, 3-3A (SUFB), respectively. It is noted that the upper surface of the SUFB dictate the cross-section with which they are associated.

Figures 3-1D, 3-2D and 3-3D depict side views of the first, second and third objects, respectively, with the continuing boundaries of the objects of Figure 2-1B, 2-2B and 2-3B (SLB), respectively. It is noted that the upper surface of the SLB dictate the cross-section with which they are associated.

Figures 4 and 5 depict alternative ways the first second and third objects might be formed with standard stereolithography when the material properties aren't optimal.

Figures 4-1A, 4-2A and 4-3A depict side views of the first, second and third objects, respectively, as formed using a first approach to standard stereolithography wherein the building material has a MSD of two layer-thicknesses.

Figures 4-1B, 4-2B, and 4-3B depict side views of the first, second and third objects, respectively, as formed using a first approach to standard stereolithography wherein the building material has a MSD of three layer-thicknesses.

Figures 5-1A, 5-2A and 5-3A depict side views of the first, second and third objects, respectively, as formed using a second approach to standard stereolithography wherein the building material has a MSD of two layer-thicknesses and possibly an MRD of two layer-thicknesses.

Figures 5-1B, 5-2B and 5-3B depict side views of the first, second and third objects, respectively, as formed using a second approach to standard stereolithography wherein the building material has a MSD of 3 layer thicknesses and possibly an MRD of three layer-thicknesses.

Comparisons can be made between the objects depicted in Figures 4 and 5 and the objects depicted in Figures 6 to 16 which result from Embodiments A to L. These comparisons can illuminate some of the advantages these embodiments offer to stereolithography. Furthermore, studying the Figures during review of the details of each embodiment will aid in understanding them. To further aid in understanding the shorthand notation used in the detailed descriptions of the example embodiments, a table of acronyms is provide as Table 3.

Table 3 -

| List of Acronyms | | |
|---|---|---|
| - | = | Boolean Difference |
| + | = | Boolean Union |
| n | = | Boolean Intersection |
| * | = | Boolean Intersection |
| 1 FDFB = | First Final Down-Facing Boundary | |
| 1FUFB = | First Final Up-Facing Boundary | |
| 1TDFB = | First Temporary Down-Facing Boundary | |
| 1TUFB = | First Temporary Up-Facing Boundary | |
| 2FDFB = | Second Final Down-Facing Boundary | |
| 2FUFB = | Second Final Up-Facing Boundary | |
| 2TDFB = | Second Temporary Down-Facing Boundary | |
| 2TUFB = | Second Temporary Up-Facing Boundary | |
| FDFB | = | Final Down-Facing Boundary |
| FLB | = | Final Layer Boundary |
| FUFB | = | Final Up-Facing Boundary |
| FXDFB = | Final Multiple Down-Facing Boundary | |
| FXUFB = | Final Multiple Up-Facing Boundary | |
| ICSB | = | Initial Cross-Section Boundary (Standard Stereolithography) |
| IUFB | = | Intermediate Up-Facing Boundary |
| LC | = | Layer Comparison |
| LT | = | Standard Stereolithographic Layer Thickness |

Table 3 -   (continued)

| List of Acronyms | | |
|---|---|---|
| MSD | = | Minimum Solidification Depth |
| MRD | = | Recoating Minimum Solidification Depth |
| OC | = | Overcure necessary for causing adhesion |
| SDFB = | Standard Down-Facing Boundary | |
| SL | = | Stereolithography |
| SLB | = | Standard Layer Boundary |
| SMLC = | Simultaneous Multiple Layer Curing | |
| SUFB = | Standard Up-Facing Boundary | |
| TDFB | = | Temporary Down-Facing Boundary |
| TLB | = | Temporary Layer Boundary |
| TUFB | = | Temporary Up-Facing Boundary |

The details of each embodiment outlined in Table 2 are presented below.

EMBODIMENT A:

This is a two-layer, z-error correction embodiment with up-facing priority, basic sophistication, and full cure of regions thinner than the MSD.

The first step of this embodiment is determine Initial Cross-Section Boundaries, ICSB, for all cross-sections. This is the full cross-sectional boundaries before determination of any down-facing and up-facing regions. The ICSB may dictate over-sized or under-sized objects. These type of boundaries are derived by CSlice though not output. We assume that use of a single line-width compensation factor is adequate, as we are merely adjusting the cross-sectional data and applying cure depths as normal.

The second step is to determine the Standard Up-Facing boundaries, SUFB(N), Standard Down-Facing Boundaries, SDFB(N), and Standard Continuing Boundaries, SLB(N) for each cross-section (N). These are the boundaries output by C-Slice. Additionally, Intermediate Up-Facing Boundaries for each cross-section N, IUFB(N), are determined. The IUFB(N) are more basic than the SUFB(N) as they are the up-facing boundaries which have not been reduced by any overlap with the Standard Down-Facing Boundary regions. The Boolean operations used in obtaining these boundaries are as follows:

$$SDFB(N) = ICSB(N) - ICSB(N-1),$$

$$IUFB(N) = ICSB(N) - ICSB(N+1),$$

$$SUFB(N) = IUFB(N) - SDFB(N),$$

$$SLB(N) = ICSB(N) - SDFB(N) - SUFB(N).$$

The SDFB are down-facing and maybe up-facing. The IUFB are up-facing and maybe down-facing. The SUFB are up-facing only and the SLB are neither up-facing nor down-facing.

The third step is to perform Boolean operations to determine Final Down-Facing Boundaries, FDFB(N), Final Up-Facing Boundaries, FUFB(N), and Final Continuing Boundaries, FLB(N), for cross-section (N).

$$1FDFB(N) = SDFB(N) \, n \, IUFB(N),$$

$$2FDFB(N) = SDFB(N-1) - IUFB(N-1),$$

$$FDFB(N) = 1FDFB(N) + 2FDFB(N),$$

$$FUFB(N) = SUFB(N) - 2FDFB(N),$$

$$FLB(N) = SLB(N) - 2FDFB(N).$$

The forth step is to repeat step 3 for all cross-sections.

The fifth step is to use the FDFB, FUFB and FLB for obtaining hatch and fill.

Finally, the object is formed from the derived data. FDFBs and enclosed regions are cured to a depth of two layer thicknesses plus given appropriate exposure to yield smooth lower surfaces. FUFBs and enclosed regions are cured to a depth of one layer-thickness plus any overcure amount necessary for causing adhesion to the previous layer. In addition FUFB regions are given appropriate exposure to yield smooth upper surfaces. The FLBs and enclosed regions are cured to a depth of one layer-thickness plus any over cure amount necessary for causing adhesion. The FLB regions can be cured in any appropriate manner (e.g. ACES, QUICKCAST, WEAVE, STARWEAVE, TRIHATCH, etc).

Figures 6-1A, 6-2A, and 6-3A depict side views of the FDFB, FUFB, and FLB regions derived via this embodiment for the first, second, and third objects of Figure 2, respectively. In these Figures the regions indicated with a DF define the FDFB regions, while the regions designated with UF define the FUFB regions and the regions designated with L define the FLB regions. Each region is depicted with its desired cure depth (excluding any overcure amount necessary for layer-to-layer adhesion.)

EMBODIMENT B:

This is a two-layer, z-error correction embodiment with down-facing priority, basic sophistication, and with full cure of regions thinner than the MSD.

The first step of this embodiment is identical to step 1 of the Embodiment A.

The second step of this embodiment is identical to step 1 of Embodiment A but the IUFB(N) are not used.

The third step is to perform Boolean operations to determine, for cross-section (N), Final Down-Facing Boundaries, FDFB(N), Final Up-Facing Boundaries, FUFB(N), and Final Continuing Boundaries, FLB(N). The Boolean operations necessary to obtain these boundaries are as follows:

$$FDFB(N) = SDFB(N-1),$$

$$FUFB(N) = SUFB(N) - FDFB(N),$$

$$FLB(N) = SLB(N) - FDFB(N).$$

The forth step is to repeat step 3 for all cross-sections.

The fifth step is to use the FDFB, FUFB and FLB for obtaining hatch and fill.

Finally, the object is formed from the derived data. The particulars about exposure parameters are identical to those noted above for embodiment A.

Figures 7-1A, 7-2A, and 7-3A depict side views of the FDFB, FUFB, and FLB regions derived via this embodiment for the first, second, and third objects of Figure 2, respectively. The boundary designations in these Figures are identical to those used in Figure 6.

EMBODIMENT C:

This is a two-layer, z-error correction embodiment with down-facing priority, a high level of sophistication, and with full cure of regions thinner than the MSD.

The first step of this embodiment is identical to step 1 of Embodiment A.

The second step of this embodiment is identical to step 2 of Embodiment A.

The third step of this embodiment is to perform Boolean operations to determine, for cross-section (N), Final Down-Facing Boundaries, FDFB(N), Final Up-Facing Boundaries, FUFB(N), and Final Continuing Boundaries, FLB(N). The Boolean operations necessary to obtain these boundaries are as follows:

$$FDFB(N) = SDFB(N-1) - FDFB(N-2),$$

$$FUFB(N) = SUFB(N) + \{SDFB(N) \cap IUFB(N) \cap FDFB(N-1)\} - FDFB(N),$$

$$FLB(N) = SLB(N) + \{SDFB(N) - IUFB(N)\} \cap FDFB(N-1) - FDFB(N).$$

The forth step is to repeat step 3 for all cross-sections.

The fifth step is to use the FDFB, FUFB and FLB for obtaining hatch and fill.

Finally, the object is formed from the derived data. The particulars about exposure parameters are identical to those noted above for Embodiment A.

A detailed description of the logic utilized in determining the appropriate Boolean operations for yielding the FDFB, FUFB, and FLB for this embodiment is provided below.

First, the constraints each one of the above definitions puts on object formation is recalled. An MSD = 2 indicates that a cure depth of two layer-thicknesses is required when forming down-facing features so that they are adequately cohesive. In general this requires the down-facing features to be shifted up one layer-thickness. An MRD = 1 indicates that coatings having a thickness of one layer-thickness can readily be formed. The down-facing priority indicates that even when the object thickness becomes thinner than the MSD the down-facing features of the object will be properly positioned.

The boundary types needed for object formation include: (1) FDFB, (2) FUFB, and (3) FLB.

The thickness of regions bounded by FDFB is equal to the MSD and the exposure supplied should result in a smooth down facing surface. These FDFB regions do not require any further overcure for adhesion since there is at least one layer-thickness of empty space below them. The FUFB regions are located one layer-thickness above cured material. The exposure applied to the FUFB regions should form a smooth upper surface and cause adhesion to the cured material below. The FLB regions are located one layer-thickness above cured material. The exposure applied to the FLB regions should cause adhesion to the cured material below.

For accurate object formation generally the down-facing feature data should be shifted up one layer-thickness.

$$FDFB(N) = SDFB(N-1)$$

However for enhanced accuracy the SDFB(N-1) should not be shifted upward if it is no longer down-facing due to the upward shifting of SDFBs from lower layers. Additionally unshifted regions should be redefined as either up-facing or continuing. It is noted that, by definition, the minimum vertical distance between down-facing features is two layer thickness. Thus no SDFB(N-1) can exist directly below an SDFB(N).

For a down-facing feature to loose it down-facing nature, a lower down-facing feature needs to be pushed upward to its same level (which is not possible due to the single layer shifting) or to a level 1 layer thickness below it. The lower down-facing features of concern are those which become FDFB(N-2) since they dictate whether or not the SDFB(N-1) should be shifted upward. Thus the above definition of the FDFB(N) must be modified. The complete definition of the FDFB(N) is,

$$FDFB(N) = SDFB(N-1) - FDFB(N-2).$$

Nominally the FUFB(N) and the FLB(N) are equivalent to the SUFB(N) and the SLB(N), respectively, less any FDFB(N) which have landed on them. Thus,

$$FUFB(N) \approx SUFB(N) - FDFB(N),$$

$$FLB(N) = SLB(N) - FDFB(N).$$

However as noted in deriving the FDFB, some of the SDFB(N) aren't shifted upward because they are no longer down-facing. As such, these SDFB(N) are redefined so as to become either up-facing or continuing. If an SDFB(N) is unshifted, it is because an FDFB on N-1 overlaps it. Furthermore, if it is to become up-facing, it is because it always was up-facing and if it is to become continuing, it is because it was never up-facing. Thus the above definition of the FUFB (N) must be modified bthy e addition of,

$$SDFB(N) * IUFB(N) * FDFB(N-1),$$

and the above definition of the FLB(N) must be modified by the addition of,

$$\{SDFB(N) - IUFB(N) * FDFB(N-1)\}.$$

It doesn't matter whether the addition of the above expressions or the subtraction of the FDFB(N) is done first as they define independent regions since,

FDFB(N) $^*$ FDFB(N-1) = Null. Thus the final definitions of the FUFB(N) and FLB(N) are,

$$FUFB(N) = SUFB(N) + \{SDFB(N) *IUFB(N) *FDFB(N-1)\}-FDFB(N),$$

$$FLB(N) = SLB(N) + \{SDFB(N) - IUFB(N)\} *FDFB(N-1)-FDFB(N).$$

Figures 8-1A, 8-2A, and 8-3A, respectively, depict the FDFB for the three different objects of Figure 2 as obtained utilizing this embodiment.
Figures 8-1B, 8-2B, and 8-3B, respectively, depict the FUFB for the three different objects of Figure 2 as obtained utilizing this embodiment.
Figures 8-1 C, 8-2C, and 8-3C, respectively, depict the FLB for the three different objects of Figure 2 as obtained utilizing this embodiment
Figures 8-1D, 8-2D, and 8-3D, respectively, depict the object as formed using this embodiment. The boundary designations in these Figures are identical to those used in Figure 6.
If one knew that the object being sliced had no solid features thinner than the MSD + 1 layer thickness (i.e. three layer-thicknesses), one could reduce the required Boolean operations to,

$$FDFB(N)= SDFB(N-1),$$

$$FUFB(N) = SUFB(N),$$

$$FLB(N) = SLB(N) - FDFB(N).$$

Alternatively, if one knew nothing about the thickness of solid features but knew the object had no hollow features thinner than the MSD, i.e. two layer-thicknesses, the Boolean operations could still be reduced to,

$$FDFB(N) = SDFB(N-1),$$

$$FUFB(N) = SUFB(N) - FDFB(N),$$

$$FLB(N) = SLB(N) - FDFB(N).$$

This last set of Boolean operations is also applicable to an object which has no solid features thinner than the MSD regardless of the thicknesses of hollow features.

EMBODIMENT D:

This is a two-layer, z-error correction embodiment with double-skinning, down-facing priority, a high level of sophistication, and with full cure of regions thinner than the MSD.

The first step of this embodiment starts with the FDFB(N), FUFB(N), and the FLB(N) from the Embodiment C with the following definitions being made:

$$FDFB(N) = FDFB(N) \text{ from C,}$$

$$FUFB(N) = FUFB(N) \text{ from C,}$$

$$TLB(N) = FLB(N) \text{ from C.}$$

The second step of this embodiment is to perform Boolean operations to determine the Final Multiple Down-Facing Boundaries, FXDFB(N), Final Multiple Up-Facing Boundaries, FXUFB(N), and Final Continuing Boundaries, FLB(N), all for cross-section (N). This second step involves three substeps. The first substep is to determine the FXDFB (N). The regions defined by these boundaries are located one layer-thickness above solidified material and one curing-level above the down-facing regions. These regions are defined by,

$$FXDFB(N) = TLB(N) \text{ n } FDFB(N-1).$$

The second substep is to determine the FXUFB(N). The regions defined by these boundaries areoc lated one curing-level below up-facing features and one layer-thickness above cured material. These regions are defined by,

$$FXUFB(N) = TLB(N) \text{ n } FUFB(N+1) - FXDFB(N).$$

The third substep is to determine the FLB(N). The regions defined by these boundaries are located one layer above cured material. These regions are defined by,

$$FLB(N) = TLB(N) - FXDFB(N) - FXUFB(N).$$

The third step of this embodiment is to repeat step 2 for all cross-sections.

The forth step is to use the FDFB, FXDFB, FUFB, FXUFB, and the FLB for obtaining hatch and fill.

Finally the object is formed from the derived data. The FDFB, FUFB, and FLB are cured identically to that of the Embodiment C. The FXUFB and FXDFB are cured as skins to an appropriate depth which is no less than 1 layer thickness plus an amount necessary for adhesion.

Figures 9-1A, 9-2A and 9-3A depict side views of the three objects of Figure 2 as formed with this Embodiment. The FDFB, FUFB, FXDFB, FXUFB, and FLB are depicted in these Figures by the designations DF, UF, XDF, XUF, and L, respectively.

EMBODIMENT E:

This is a three-layer, z-error correction embodiment with down-facing priority, basic sophistication, and with full cure of regions thinner than the MSD.

The first step of this embodiment is identical to step 1 of Embodiment A.

The second step of this embodiment is identical to step 2 of Embodiment A.

The third step of this embodiment is to perform Boolean operations to determine Final Down-Facing Boundaries, FDFB(N), Final Up-Facing Boundaries, FUFB(N), and Final Continuing Boundaries, FLB(N), for cross-section (N). These boundaries are defined by,

$$FDFB(N) = SDFB(N-2),$$

$$FUFB(N) = SUFB(N) - FDFB(N) - SDFB(N-1),$$

$$FLB(N) = SLB(N) - FDFB(N) - SDFB(N-1).$$

The fourth step is to repeat step 3 for all cross-sections.

The fifth step is to use the FDFB, FUFB and FLB for obtaining hatch and fill.

Finally, the object is formed from the derived data. FDFBs, and included area, are cured to a depth of three layer-thicknesses plus given appropriate exposure to produce smooth lower surfaces. The exposure parameters for the FUFBs, FLBs and included areas are identical to that discussed above for Embodiment A.

Figures 10-1A, 10-2A, and 10-3A depict side views of the three objects of Figure 2 as formed with this embodiment. As with the previous embodiments, the FDFB, FUFB, and FLB and their associated cure depths are depicted in these Figures as DF, UF, and L respectively.

EMBODIMENT F:

This is a three-layer, z-error correction embodiment with moderate sophistication, down-facing priority, and with full cure of regions thinner than the MSD. The moderate sophistication of this embodiment removes multiple curings of regions near features thinner than the MSD.

The first step of this embodiment is identical to step 1 of Embodiment A.

The second step of this embodiment is identical to step 2 of Embodiment A.

The third step of this embodiment is to perform Boolean operations to determine Final Down-Facing Boundaries, FDFB(N), Final Up-Facing Boundaries, FUFB(N), and Final Continuing Boundaries, FLB(N), all for cross-section (N). These boundaries are defined by,

$$FDFB(N) = SDFB(N-2) - FDFB(N-2),$$

$$FUFB(N) = SUFB(N) - SDFB(N-1) - FDFB(N),$$

$$FLB(N) = SLB(N) - SDFB(N-1) - FDFB(N).$$

As the final down-facing boundary for layer N-2 must be used in determining the final down-facing boundary for layer N, it is apparent that the processing of layers must proceed from the lowest to the highest.

The fourth step is to repeat step 3 for all cross-sections.

The fifth step is to use the FDFB, FUFB and FLB for obtaining hatch and fill.

Finally, the object is formed from the derived data. The exposure parameters for the FDFBs, FUFBs and FLBs, and enclosed regions, are identical to those noted above for Embodiment E.

Figures 11-1A, 11-2A, and 11-3A depict side views of the three objects of Figure 2 as formed with this embodiment. As with the above embodiments, the FDFB, FUFB, and FLB and their associated cure depths are depicted in these Figures as DF, UF, and L respectively.

EMBODIMENT G:

This is a three-layer, z-error correction embodiment with a high level of sophistication, down-facing priority, and with full cure of regions thinner than the MSD. The high level of sophistication of this embodiment removes multiple curing of regions near features thinner than the MSD, it stops the upward shift of SDFBs when they become bounded from below due to the upward shifting of SDFBs from lower layers and redefines the unshifted FDFBs as either FUFBs or FLBs.

The first step of this embodiment is identical to step 1 of Embodiment A.

The second step of this embodiment is identical to step 2 of Embodiment A.

The third step of this embodiment is to perform Boolean operations to determine Final Down-Facing Boundaries, FDFB(N), Final Up-Facing Boundaries, FUFB(N), and Final Continuing Boundaries, FLB(N), all for cross-section (N). These boundaries are defined by,

$$FDFB(N) = SDFB(N-2) - FDFB(N-2) - FDFB(N-3),$$

$$FUFB(N) = SUFB(N) + \{SDFB(N) \cap IUFB(N) \cap FDFB(N-1)\}$$

$$- FDFB(N) - \{SDFB(N-1) - FDFB(N-1) - FDFB(N-2)\},$$

$$FLB(N) = SLB(N) + \{SDFB(N) - IUFB(N)\} \cap FDFB(N-1)$$

$$- FDFB(N) - \{SDPB(N-1) - FDFB(N-1) - FDFB(N-2)\}.$$

As the final boundaries for layers N-1, N-2, and N-3 must be used in determining the final boundaries for layer N, it is apparent that the processing of layers must proceed from the lowest to the highest.

The fourth step is to repeat step 3 for all cross-sections.

The fifth step is to use the FDFB, FUFB and FLB for obtaining hatch and fill.

Finally the object is formed from the derived data. The exposure parameters required for the FDFBs, FUFBs and FLBs, and the included regions, are identical to those noted above for Embodiments E and F.

A detailed description of the logic utilized in determining the appropriate Boolean operations to use to produce the FDFB, FUFB, and FLB for this embodiment is provided below. First, the constraints that each of the above definitions puts on object formation is recalled. MSD = 3 indicates that a cure depth of three layer-thicknesses is required when forming down-facing features so that they are adequately cohesive. In general this requires the down-facing features to be shifted up two layer-thickness. An MRD = 1 indicates that coatings of one layer-thickness can readily be formed. Down-facing priority indicates that even when the object thickness becomes thinner than the MSD the down-facing features of the object will be properly positioned.

The boundary types needed for object formation include: (1) FDFB, (2) FUFB, and (3) FLB.

The thickness of regions defined by the FDFB is equal to the MSD and the exposure supplied should result in a smooth down-facing surface. These FDFB regions do not require any overcure for adhesion since there is at least one layer-thickness of empty space below them. The FUFB regions are located one layer-thickness above cured material. The exposure applied to the FUFB regions should form a smooth upper surface and cause adhesion to the cured material below. The FLB regions are located one layer-thickness above cured material. The exposure applied to the FLB regions should cause adhesion to the cured material below.

For accurate object formation generally the down-facing feature data should be shifted up two layer-thicknesses. Therefore, the starting point for defining the FDFB is,

$$FDFB(N) = SDFB(N-2).$$

However for enhanced accuracy the SDFB(N-2) should not be shifted upward if they are no longer down-facing due to the upward shifting of SDFBs from lower layers. Additionally, if these regions are not completely replaced by up-shifted FDFBs they should be redefined as either up-facing or continuing regions.

It is noted that by definition the minimum vertical distance between down-facing features is two layer-thicknesses. Thus no SDFB(N-1) can exist directly below an SDFB(N).

For a down-facing feature to loose it down-facing nature, a lower down-facing feature needs to be pushed upward to its same level, or to one layer-thickness below it. The lower down-facing features of concern are those which become FDFB(N-2) and FDFB(N-3) since they dictate whether or not the SDFB(N-2) should be shifted up-ward. Any portion of the SDFB(N-2) which is overlapped by the FDFB(N-2) are simply removed from further consideration as they are completely equivalent to the FDFB(N-2). When a down-facing feature is shifted upward from 3 layers below the SDFB(N-2) it becomes a FDFB(N-3). Any portions of the SDFB(N-2) which are located above the FDFB(N-3) are no longer down-facing since they will be located one layer thickness above cured material. Thus these portions of the SDFB(N-2) should not be shifted but instead redefined as either up-facing or continuing.

The formation of FDFBs on any cross-sections below N-3 doesn't effect whether the SDFB(N-2) should be shifted or not since at least a one-layer gap exists between the features. As no standard down-facing features can exist one layer-thickness directly below the SDFB(N-2), we needn't consider their effect on the shifting of the SDFB(N-2). Thus the above preliminary definition of the FDFB(N) must be modified. The complete definition of the FDFB(N) is,

$$FDFB(N) = SDFB(N-2) - FDFB(N-2) - FDFB(N-3)$$

Nominally the FUFB(N) and the FLB(N) are equivalent to the SUFB(N) and SLB(N), respectively, less any FDFB(N) which have landed on them.

$$FUFB(N) = SUFB(N) - FDFB(N)$$

$$FLB(N) = SLB(N) - FDFB(N)$$

However shifting or lack of shifting of down-facing features can add to or subtract from the up-facing boundaries and layer boundaries on cross-section (N).

As noted previously, SDFB(N) which are not shifted should be should be dropped or redefined as up-facing or continuing. The SDFB(N) which are shifted on the other hand have no impact on defining the FUFB(N) and the FLB(N).

Furthermore the SDFB(N-1) which aren't shifted cannot affect the regions within the up-facing and layer boundaries on cross-section (N). However, the SDFB(N-1) which are shifted up to N+1 do affect these regions. The areas within the FDFB(N+1) should be removed from the regions enclosed by both the up-facing boundaries and layer boundaries for cross-section (N). Additionally, the SDFB(N-2) which are shifted upward become the FDFB(N). The impact of the FDFB(N) on the FUFB(N) and FLB(N) has already been taken into account. The SDFB(N-2) which have not been shifted have no impact on the FUFB(N) and FLB(N).

Finally whether shifted upward or not, the SDFB from cross-section (N-3) or from lower cross-sections have no impact on the FUFB(N) or the FLB(N).

Turning back to the unshifted SDFB(N), it is seen that besides having an FDFB(N) land on it, the other reason why an SDFB(N) is unshifted is because an FDFB on N-1 overlaps it. Furthermore, if it is to become up-facing, it is because it was always up-facing and if it is to become continuing, it is because it was never up-facing. Thus the above preliminary definition of FUFB(N) must be modified by the addition of

$$\{SDFB(N) * IUFB(N) * FDFB(N-1)\}.$$

Similarly the above definition of FLB(N) must be modified by the addition of

$$\{SDFB(N) - IUFB(N)\} * FDFB(N-1).$$

It doesn't matter whether the addition of the above expressions or the subtraction of the FDFB(N) is done first as they define independent regions. This is because

$$FDFB(N) * FDFB(N-1) = Null.$$

Next we turn back to the SDFB(N-1) which are shifted upward, by two layers, to become FDFB(N+1). Any up-facing or continuing boundary regions on layer N must be reduced by the SDFB(N-1) which are shifted upward. As with the final FDFB(N), the portion of the SDFB(N-1) which is not shifted upward is that portion which overlaps FDFB(N-1) or which overlaps FDFB(N-2). Thus the up-facing boundaries and layer boundaries defined above must be further adjusted by subtracting the quantity,

$$\{SDFB(N-1) - FDFB(N-1) - FDFB(N-2)\}.$$

Noting that since,

$$SDFB(N-1) * SDFB(N) = Null,$$

and since

$$SDFB(N-1) * FDFB(N) = Null,$$

the order in which the unions and differences are made doesn't affect the final result. Thus the final up-facing boundaries and layer boundaries for cross-section N are defined by:

$$FUFB(N) = SUFB(N) + \{SDFB(N) * IUFB(N) * FDFB(N-1)\}$$

$$- FDFB(N) - \{SDFB(N-1) - FDFB(N-1) - FDFB(N-2)\}$$

$$FLB(N) = SLB(N) + \{SDFB(N) - IUFB(N)\} * FDFB(N-1)$$

$$- FDFB(N) - \{SDFB(N-1) - FDFB(N-1) - FDFB(N-2)\}$$

Figures 12-1A, 12-2A, and 12-3A, respectively, depict the FDFB for the three different objects of Figure 2 as obtained utilizing this embodiment.

Figures 12-1B, 12-2B, and 12-3B, respectively, depict the FUFB for the three different objects of Figure 2 as obtained utilizing this embodiment.

Figures 12-1C, 12-2C, and 12-3C, respectively, depict the FLB for the three different objects of Figure 2 as obtained utilizing this embodiment.

Figures 12-1D, 12-2D, and 12-3D, respectively, depict the three different objects as formed using this embodiment. The boundary designations in these Figures are identical to those used in Figures 6 to 11.

If one knew that the object being sliced had no solid features thinner than the MSD + one layer-thickness, i. e. four layer-thicknesses, one could reduce the Boolean operations to,

$$FDFB(N) = SDFB(N-2),$$

$$FUFB(N) = SUFB(N),$$

$$FLB(N) = SLB(N) - SDFB(N-2) - SDFB(N-1).$$

Alternatively, if one knew nothing about the thickness of solid features but knew the object had no hollow features thinner than the MSD, i.e. three layer-thicknesses, the Boolean operations could still be reduced to,

$$FDFB(N) = SDFB(N-2),$$

$$FUFB(N) = SUFB(N) - SDFB(N-2) - SDFB(N-1),$$

$$FLB(N) = SLB(N) - SDFB(N-2) - SDFB((N-1).$$

This last set of operations is also applicable to an object which has no solid features thinner than the MSD regardless of the thickness of hollow features.

EMBODIMENT H:

This is a 3-layer, z-error correction embodiment with a high level of sophistication, double skinning, down-facing priority, and with full cure of regions thinner than the MSD.

The first step of this embodiment is to start with the FDFB(N), FUFB(N), and the FLB(N) from Embodiment G. The following definitions are made:

$$FDFB(N) = FDFB(N) \text{ from } G$$

$$FUFB(N) = FUFB(N) \text{ from } G$$

$$TLB(N) = FLB(N) \text{ from } G$$

The second step of this embodiment is to perform Boolean operations to determine Final Multiple Down-Facing Boundaries, FXDFB(N), and Final Multiple Up-Facing Boundaries, FXUFB(N), and Final Continuing Boundaries, FLB(N), all for cross-section (N). This step involves three substeps. The first substep is to determine the FXDFB(N). The regions defined by these boundaries are located one layer thickness above solidified material and one curing level above down-facing regions. They are defined by,

$$FXDFB(N) = TLB(N) \text{ n } FDFB(N-1).$$

The second substep is to determine the FXUFB(N). The regions defined by these boundaries are located one curing level below up-facing features and one layer thickness above cured material. They are defined by,

$$FXUFB(N) = TLB(N) \text{ n } FUFB(N+1) - FXDFB(N).$$

The third substep is to determine the FLB(N). The regions defined by these boundaries are located 1 layer above cured material. They are defined by,

$$FLB(N) = TLB(N) - FXDFB(N) - FXUFB(N).$$

The third step of this embodiment is to repeat step 2 for all cross-sections.
The fourth step is to use the FDFB, FXDFB, FUFB, FXUFB, and the FLB for obtaining hatch and fill.
Finally the object is formed from the derived data. The FDFB, FUFB, and FLB are cured identically to that of the Embodiment C. The FXUFB and FXDFB are cured as skins to an appropriate depth which is typically one layer-thickness plus an amount necessary for adhesion.
Figures 13-1A, 13-2A, and 13-3A depict side views of three objects of Figure 2 as formed with this embodiment. The FDFB, FXDFB, FUFB, FXUFB, and the FLB, and their associated cure depths are depicted in these Figures as DF, XDF, UF, XUF, and L, respectively.

EMBODIMENT I:

This is a two-level, z-error correction and two-level, minimum coating thickness (e.g. Dewetting work around) embodiment with a high level of sophistication, down-facing priority, and with full cure of regions thinner than the MSD. If necessary, due to a mismatch between the MRD and any portion of the object thickness, any odd cure will be applied in association with the curing of up-facing features.
The first step of this embodiment is to start with the FDFB(N), FUFB(N) and the FLB(N) from Embodiment C. The following definitions are made:

$$TDFB(N) = FDFB(N) \text{ from } 3,$$

$$TUFB(N) = FUFB(N) \text{ from } 3,$$

$$TLB(N) = FLB(N) \text{ from } 3.$$

The second step of this embodiment is to perform Boolean operations to determine First and Second Final Down-Facing Boundaries, 1FDFB(N) and 2FDFB(N), Final Continuing Boundaries, FLB(N), and First and Second Final Up-Facing Boundaries, 1FUFB(N) and 2FUFB(N), all for cross-section N. This second step is divided into five substeps. The first substep is to determine a first type of FDFB(N), 1FDFB(N). The regions defined by these boundaries should be cured to a depth of two layer-thicknesses. These boundaries are defined by,

$$1FDFB(N) = TDFB(N) - TUFB(N+1).$$

The second substep is to determine a second type of FDFB(N), 2FDFB(N). The regions defined by these boundaries should be cured to a depth of three layer-thicknesses. These boundaries are defined by,

$$2FDFB(N) = TDFB(N-1) \; n \; TUFB(N).$$

The third substep is to determine the FLB(N). The regions defined by these boundaries are located 2 layers above cured material. These regions should be cured to a depth of two layer-thicknesses plus any overcure necessary for adhesion. These boundaries are defined by,

$$FLB(N) = TLB(N) - FLB(N-1) - 1FDFB(N-1) - TUFB(N+1).$$

The fourth substep is to determine a first type of FUFB(N), 1FUFB(N). The regions defined by these boundaries are located 3 layers above cured material. These regions should be cured to a depth of three layer-thicknesses plus any amount necessary for adhesion. These boundaries are defined by,

$$1 \; FUFB(N) = TUFB(N) - FLB(N-2) - 1FDFB(N-2) - 2FDFB(N).$$

The fifth substep is to determine a second type of FUFB(N), 2FUFB(N). The regions defined by these boundaries are located 2 layers above cured material. These regions should be cured to a depth of two layer-thicknesses plus any overcure necessary for adhesion. These boundaries are defined by,

$$2FUFB(N) = TUFB(N) - 1FUFB(N) - 2FDFB(N).$$

The third step of this embodiment is to repeat step 2 for all cross-sections.
The fourth step is to use the 1FDFB, 2FDFB, FLB, 1FUFB, and the 2FUFB for obtaining hatch and fill.
Finally, the object is formed from the derived data.
Figures 14-1A, 14-2A, and 14-3A depict side views of the objects of Figure 2 as formed using this embodiment. The 1FDFB, 2FDFB, FLB, 1FUFB, and 2FUFB regions and their cure depths are depicted in these Figures with the designations of 1DF, 2DF, L, 1UF, and 2UF.

EMBODIMENT J:

This is a three-layer, z-error correction and two-layer, minimum coating thickness embodiment with a high level of sophistication, down-facing priority, and full cure of regions thinner than the MSD. If necessary, due to a mismatch between the MRD and any portion of the object thickness, any odd cure will be applied in association with curing of up-facing features.
The first step of this embodiment is to start with the FDFB(N), FUFB(N) and the FLB(N) from Embodiment G. The following definitions are made,

$$TDFB(N) = FDFB(N) \; from \; G,$$

$$TUFB(N) = FUFB(N) \; from \; G,$$

$$TLB(N) = FLB(N) \text{ from G.}$$

The second step of this embodiment is to perform Boolean operations to determine First and Second Final Down-Facing Boundaries, 1FDFB(N) and 2FDFB(N), Final Continuing Boundaries, FLB(N), and First and Second Final Up-Facing Boundaries, 1FUFB(N) and 2FUFB(N), all for cross-section N. This step is divided into five substeps. The first substep is to determine a first type of FDFB(N), 1FDFB(N). The regions defined by these boundaries should be cured to a depth of three layer-thicknesses. These boundaries are defined by,

$$1FDFB(N) = TDFB(N) - TUFB(N+1).$$

The second substep is to determine a second type of FDFB(N), 2FDFB(N). The regions defined by these boundaries should be cured to a depth of 4 layer thicknesses. These boundaries are defined by,

$$2FDFB(N) = TDFB(N-1) \text{ n } TUFB(N).$$

The third substep is to determine the FLB(N). The regions defined by these boundaries are located two layers above cured material. These regions should be cured to a depth of two layer-thicknesses plus any overcure necessary for adhesion. These boundaries are defined by,

$$FLB(N) = TLB(N) - FLB(N-1) - 1FDFB(N-1) - TUFB(N+1).$$

The fourth substep is to determine a first type of FUFB(N), 1 FUFB(N). The regions defined by these boundaries are located 3 layers above cured material. These regions should be cured to a depth of three layer-thicknesses plus any amount necessary for adhesion. These boundaries are defined by,

$$1FUFB(N) = TUFB(N) - FLB(N-2) - 1FDFB(N-2) - 2FDFB(N).$$

The fifth substep is to determine a second type of FUFB(N), 2FUFB(N). The regions defined by these boundaries are located 2 layers above cured material. These regions should be cured to a depth of two layer-thicknesses plus any overcure necessary for adhesion. These boundaries are defined by,

$$2FUFB(N) = TUFB(N) - 1FUFB(N) - 2FDFB(N).$$

The third step of this embodiment is to repeat step 2 for all cross-sections.
The fourth step is to use the 1FDFB, 2FDFB, FLB, 1FUFB, and the 2FUFB for obtaining hatch and fill.
Finally, the object is formed from the derived data.
Figures 15-1A, 15-2A, and 15-3A depict side views of the objects of Figure 2 as formed using this embodiment. The 1FDBF, 2FDFB, FLB, 1FUFB, and 2FUFB regions and their cure depths are depicted in these Figures with the designations of DF, 2DF, L, 1UF, and 2UF.

EMBODIMENT K:

This is a three-layer, z-error correction (MSD) and two-layer, minimum coating thickness (MRD) embodiment with inner boundary removal, a high level of sophistication, down-facing priority, and full cure of regions thinner than the MSD. If necessary, due to a mismatch between the MRD and any portion of the object thickness, any odd cure will be applied in association with curing of up-facing features.
The first step of this embodiment is to start with the 1FDFB, 2FDFB, FLB, 1FUFB, and the 2FUFB from Embodiment J. The following definitions are made:

$$1TDFB(N) = 1FDFB(N) \text{ from J,}$$

$$2TDFB(N) = 2FDFB(N) \text{ from } J,$$

$$TLB(N) = FLB(N) \text{ from } J,$$

$$1TUFB(N) = 1FUFB(N) \text{ from } J,$$

$$2TUFB(N) = 2FUFB(N) \text{ from } J.$$

The second step is to use the 1TDFB(N), 2TDFB(N), TLB(N), 1TUFB(N) and the 2TUFB(N) to determine all necessary hatch and fill for layer N.

The third step is to determine which of the 1TDFB(N), 2TDFB(N), TLB(N), 1TUFB(N) and the 2TUFB(N) boundary vectors, or portions thereof, that form part of the external boundaries of the object according to the following substeps. The following substeps are expressed in Boolean form but instead of applying the operations to the regions enclosed by the boundaries, as with the previous embodiments, the operations are applied to vector segments on a segment-by-segment basis.

A)

$$1FDFB1(N) = 1TDFB(N) \text{ n } ICSB(N)$$

$$1FDFB2(N) = 1TDFB(N) \text{ n } ICSB(N-1)$$

$$1FDFB3(N) = 1TDFB(N) \text{ n } ICSB(N-2)$$

$$1FDFB(N) = 1FDFB1(N) + 1FDFB2(N) + 1FDFB3(N)$$

B)

$$2FDFB1(N) = 2TDFB(N) \text{ n } ICSB(N)$$

$$2FDFB2(N) = 2TDFB(N) \text{ n } ICSB(N-1)$$

$$2FDFB3(N) = 2TDFB(N) \text{ n } ICSB(N-2)$$

$$2FDFB4(N) = 2TDFB(N) \text{ n } ICSB(N-3)$$

$$2FDFB(N) = 2FDFB1(N) + 2FDFB2(N) + 2FDFB3(N) + 2FDFB4(N)$$

C)

$$FLB1(N) = TLB(N) \text{ n } ICSB(N)$$

$$FLB2(N) = TLB(N) \text{ n } ICSB(N-1)$$

$$FLB(N) = FLB1(N) + FLB2(N)$$

D)

$$1FUFB1(N) = 1TUFB(N) \, n \, ICSB(N)$$

$$1FUFB2(N) = 1TUFB(N) \, n \, ICSB(N-1)$$

$$1FUFB3(N) = 1TUFB(N) \, n \, ICSB(N-2)$$

$$1FUFB(N) = 1FUFB1(N) + 1FUFB2(N) + 1FUFB3(N)$$

E)

$$2FUFB1(N) = 2TUFB(N) \, n \, ICSB(N)$$

$$2FUFB2(N) = 2TUFB(N) \, n \, ICSB(N-1)$$

$$2FUFB(N) = 2FUFB1(N) + 2FUFB2(N)$$

The fourth step is to use the 1FDFB(N), 2FDFB(N), FLB(N), 1FUFB(N) and 2FUFB and the previously obtained hatch and fill to form the object. The required cure depths are identical to those of Embodiment J. As the internal boundaries have been removed, any impedance they would have caused to resin drainage is eliminated and thus this embodiment can be used with a QUICKCAST build style.

EMBODIMENT L:

This is a three-layer, z-error correction (MSD) and two-layer, minimum coating thickness (MRD) embodiment with a high level of sophistication, double skinning, inner boundary removal, down-facing priority, and with full cure of regions thinner than the MSD.

The first step of this embodiment starts with the 1FDFB(N), 2FDFB(N), 1FUFB(N), 2FUFB(N), and the FLB (N) from Embodiment J. The following definitions are made:

$$1FDFB(N) = 1FDFB(N) \text{ from J,}$$

$$2FDFB(N) = 2FDFB(N) \text{ from J,}$$

$$1FUFB(N) = 1FUFB(N) \text{ from J,}$$

$$2FUFB(N) = 2FUFB(N) \text{ from J,}$$

$$TLB(N) = FLB(N) \text{ from J.}$$

The second step of this embodiment is to perform Boolean operations to determine Final Multiple Down-Facing Boundaries, XDFB(N), Final Continuing Boundaries, FLB(N), and Final Multiple Up-Facing Boundaries, FXUFB(N), all for cross-section N. This step is divided into three substeps. The first substep is to determine the FXDFB(N). The regions defined by these boundaries are located 2 layers above cured material and these regions are located one curing level above down-facing regions. They are defined by,

$$FXDFB'(N) = TLB(N) \; n \; 1FDFB(N-2).$$

The second substep is to determine the FXUFB(N). The regions defined by these boundaries are located one curing level below any up-facing features and are located 2 layers above cured material. These regions are defined by,

$$FXUFB'(N) = TLB(N) \; n \; \{2FUFB(N+2) + 1FUFB(N+3)\} - FXDFB(N).$$

The third substep is to determine the FLB(N). The regions defined by these boundaries are located 2 layers above cured material. These regions are defined by,

$$FLB'(N) = TLB(N) - FXDFB(N) - FXUFB(N).$$

The third step of this embodiment is to repeat step 2 for all cross-sections.

The fourth step is to use the 1FDFB, 2FDFB, FXDFB, 1FUFB, 2FUFB, FXUFB, FLB for obtaining hatch and fill.

As was done in step 4 of Embodiment K, the fifth step is to determine the which portions of the above boundaries form external portions of the object and then to keep only those portions when solidifying boundaries.

The comparisons necessary to for the 1FDFB(N), 2FDFB(N), 1FUFB(N) and the 2FUFB(N) can be found above in association with Embodiment K. As the FLB(N) have been redefined in this embodiment and as the FXUFB(N) and FXDFB(N) are new, the necessary comparisons are as follows:

A)

$$FLB1(N) = FLB'(N) \; n \; ICSB(N)$$

$$FLB2(N) = FLB'(N) \; n \; ICSB(N-1)$$

$$FLB(N) = FLB1(N) + FLB2(N)$$

B)

$$FXDFB1(N) = FXDFB'(N) \; n \; ICSB(N)$$

$$FXDFB2(N) = FXDFB'(N) \; n \; ICSB(N-1)$$

$$FXDFB(N) = FXDFB1(N) + FXDFB2(N)$$

C)

$$FXUFB1(N) = FXUFB'(N) \; n \; ICSB(N)$$

$$FXUFB2(N) = FXUFB'(N) \; n \; ICSB(N-1)$$

$$FXUFB(N) = FXUFB1(N) + FXUFB2(N)$$

Finally the object is formed from the derived data.

Figures 16-1A, 16-2A, and 16-3A depict side views of the objects of Figure 2 as formed with this embodiment. The IFDFB, 2FDFB, 1FUFB, 2FUFB, FLB, FXDFB, and FXUFB and their cure depths (excluding over cure) are depicted in these Figures as 1DF, 2DF, 1UF, 2UF, L, XDF, and XUF, respectively.

In the above embodiments the various Boolean operations are done to ensure that all the defined regions are fully independent of the all other regions. However, in many practical circumstances, independence may not be an absolute requirement. In fact, if one is willing to sacrifice some regional independent, many of the embodiments can be greatly simplified. As an example, the multiple skinning embodiments can be simplified if one is willing to allow the extra skins, which are being produced, to overlay other regions. If this is the case, to determine which portions of an up-facing or down-facing skin can be moved to a particular cross-section, take an intersection between the desired skin boundary (i.e. region) and the ICSB of the cross-section the skin is to be moved to. The result of the operation yields that portion of the skin that can be placed on the desired cross-section. In equation form we get,

$$FXDFB(N) = ICSB(N) * FDFB(\text{original cross-section}),$$

and

$$FXUFB(N) = ICSB(N) * FUFB(\text{original cross-section}).$$

<u>Horizontal Comparison Technioues</u>

In the practice of stereolithography, object cross-sections have been differentiated into various regions, relating to how portions of each cross-section interact with the external surfaces of the object. Using the slicing techniques described in U.S. Patent No. 5,184,307 (the '307 patent), each cross-section was potentially divided into five regions while with the techniques described in U.S. Patent No. 5,321,622 (the '622 patent), each cross-section was divided into potentially three regions. Whether from the teachings of the '307 patent or the '622 patent, these separated regions were derived based on whether or not each portion of a cross-section was an up-facing surface, a down-facing surface, or neither and up-facing nor down-facing surface of the object. Though the cross-sectional divisions as taught in these referenced applications are very useful, other divisions can be used, either in addition to those above or in replacement of some or all of them. These alternative or additional divisions can lead to significant advantages in the practice of stereolithography. In this embodiment erosion, expansion and other offsetting techniques are used to divide a cross-section into different regions based on the separation of individual portions of the cross-section from one or more points, one or more lines, or one or more surfaces.

The preferred implementation of the horizontal comparison technique, is to offset selected points, lines or surfaces known amounts and utilize the offset elements to define new cross-sectional regions. In particular, a preferred embodiment utilizes positive and negative line width compensation type offsets of existing cross-sectional boundaries. Techniques for performing line width compensation are described in detail in U.S. Patent Nos. 5,321,622 and 5,184,307, both previously referenced. Figure 18 depicts a simple square cross-section of an object having a boundary 500 as well as first, second, and third offset secondary boundaries, labeled 502, 504 and 506, respectively. These secondary boundaries were created using a line width compensation technique. Offset boundary 506 may have been created directly from boundary 500 or alternatively may have been created from boundary 504 which may have been created from boundary 502 which in turn was created from boundary 500. Depending on the purpose to be achieved, any one or all of the offset boundaries could be used to define separate exposure regions for the object. For example the interior of 506 might be one exposure region, the region between 502 and 506 might be a second exposure region and the region between 502 and 500 might be a third exposure region. Furthermore, the boundaries on which the above offsets are made may be the overall cross-sectional boundaries for a cross-section or alternatively one or more of the down-facing, up-facing or continuing boundaries of the cross-section, either taken in combination or alone.

A preferred embodiment utilizing this technique involves making improved patterns for investment casting. In this embodiment, the horizontal comparisons operate on the LB regions of each cross-section to divide them into three regions. The first region is that closest to the original LB boundaries and is approximately 15 - 30 mils wide. This first region forms a completely solidified shell region. The solidification of the first region may occur via multiple overlapping offset boundaries (preferred technique) or alternatively it may be filled by a utilization of skin vectors. The second region borders the first region and proceeds deeper into the cross-section another 50 to 100 mils. This region is solidified using minimal structure, e.g. a very wide spaced hatch, or possibly a broken hatch pattem, that may be used on only periodic layers. Each hatch line might be solidified via a single hatch vector or by two or more hatch vectors which are offset from one another. For example, it might be used once every 25 to 150 mils and be offset with consecutive uses. Alternatively, for example, it might be used every 100 to 150 mils but when used it may be exposed on a series of two or three, or more, consecutive layers without offset. The spacing between the vectors might be 100 to 250 mils.

In this embodiment, the third region occupies the rest of the original LB region. The third region is solidified with a tighter hatch pattern, or one with fewer breaks, than that used in the second region. For example, hatch with a spacing of 100 to 150 mils might be used on every layer and offset periodically. This embodiment offers a strong outer shell which is directly supported by a very fine grid structure, which in turn is supported by a more rigid grid structure. As drainage of stereolithographically produced investment casting patterns is critical to their successful use, and as resin entrapment between the surfaces of the object and the hatch lines can result in failure of the ceramic mold on burn out, the utilization of the horizontal comparison technique allows implementation of an internal grid structure that is fine enough near the object surfaces to allow resin drainage but structurally rigid enough in the deep interior portions of the object to provide adequate support for large structures so as to ensure structural integrity. Without the horizontal comparison techniques described herein, this embodiment could not readily be implemented on an automated basis.

Furthermore, in a more preferred embodiment these horizontal comparison techniques will be combined with the SMLC techniques discussed earlier in order to produce a pattern with multiple skins as well as with thicker boundary regions. The combination embodiment is readily implemented by deriving the multiple skins first by utilization of the SMLC techniques discussed earlier and then using the Horizontal comparison technique to further dissect the FLB regions resulting from the layer comparisons.

The most preferred embodiment extends the last embodiment one step further, by continuing the layer comparison into one or more layers immediately above the multiple down-facing skins and immediately below the multiple up-facing skins so as to provide region designations that allow the regions immediately above and below the down-facing and up-facing surfaces, respectively, to be transformed using a minimal amount of hatch. Preferably, these regions extend beyond the skins by 25 to 150 mils and most preferably by 70 to 100 mils and are solidified using a series of point exposures, e.g. columns, which may be one, two, three or more linewidths in diameter and spaced from each other by 25 to 150 mils. Alternatively, the columns may not be circular in cross-sectional dimension but may take on some other shape, such as small crosses, boxes or the like.

Other more advanced embodiments are possible where the most exterior portions of the FLB regions are not given a widened solid cure where the FLB is bounded by a region which is being skinned. More particularly, it is possible to judge the skin width which bounds a portion of the FLB, and thus based on this width to determine how the region within and near the FLB should be cured. Of course the wider the adjacent skin the less need for a wide outer solidified FLB zone. In fact, in the presence of a wide skin, a wide outer solidified FLB zone could be detrimental. In an extension of this embodiment, additional care can be taken to ensure that object regions close to inside corners, are not inadvertently unexposed due to the potential lack of multiple skins being copied into these corner regions and lack of an FLB zone that is not bounded by an adjacent region being skinned. Figure 20 depicts such a region 564. Figure 20 depicts a side view of a portion of an object, wherein lines 550 define the outer surface of the object, region 552 indicates an up-facing skin, and regions 558 depict the boundaries of continuing regions (FLB). Regions being skinned due to the use of multiple skins are indicated by numerals 552 and 554, while regions being transformed due to the widened solidification zone around the FLBs (e.g. by use of multiple boundaries) are indicated by reference numerals 560 and 562. As can be seen, region 564 should be solidified but is not. This is due to blanket decision not to utilize widened cure zones around the FLB that are adjacent to skinned regions. The extra care involves utilization of additional comparisons to determine whether or not corresponding FLBs exist on the next consecutive layer and whether or not they are adjacent to skin regions. If such a next consecutive layer is found then The corresponding FLBs for the present layer, and probably one or more previous layers, are supplied with the widened solidification zone. Other horizontal comparison techniques are also possible. For example, regions on a cross-section can be designated by their distance from a line which lies parallel to the plane of the cross-section and which either intersects the cross-section or is outside it. This situation is illustrated in Figure 19. A cross-section is depicted which is defined by boundary 500. A line 508 is depicted outside the cross-section. In a manner analogous to offsetting boundary vectors during a line width compensation routine, line 508 is offset from its original position by known amounts. At desired intervals, the offset line can be used to create secondary boundary lines for the cross-section. These secondary boundary lines can be used to define regions of the object which are located at particular distances from the original line 508. Numerals 510, 512 and 514 depict such secondary boundary lines. If it is desired to define actual boundary loops based on the secondary lines, the region between two secondary boundary lines can considered an imaginary solid which is partially defined by the secondary boundary lines. To complete the definition of this imaginary solid region, two additional line segments are attached to the secondary boundaries wherein the attachment is made on either side of the regions which contain the actual cross-section. Two such lines are depicted in the Figure with numerals 516 and 518. The fully defined imaginary solid region can be intersected with the cross-sectional region defined by boundary 500 so as to yield the region common to both. This common region is located at a given distance from the original line 508. This type of comparison can find utility in a variety of situations. For example, if the line 508 represents an axis around which the completed object is going to be rotated then the moment of inertia from each cross-sectional strip can be used to determine the overall moment of inertia for the object. Appropriate cure parameters can be applied to each strip so as to give the object an overall moment of inertia or to give the strips at similar distances from the line 508 the same cure parameters.

As a another example of a horizontal comparison technique, a point like region, either within the cross-section or outside the cross-section, can be defined from which a series of negative compensations (expansions) will be performed in order to determine the distance between each portion of the cross-section and the initial point. The initial point may be defined as a small square, hexagon, octagon, or other polygon which will give the appropriate geometric shape with each expansion.

As an example, the horizontal comparison techniques can be utilized to help automate the recoating process. If positive multiple line width compensations, i.e. reductions, are made, wherein each compensation step has a known width, wherein the number of steps are counted, and wherein the compensations are repeated until the entire cross-section has been traversed, one can determine the maximum distance from the outer portions of the cross-section to its deepest internal point. This distance determines the maximum distance resin must travel over the surface of the previous cross-section in order to reach the most distance point on the cross-section. This distance is the diameter of what is known as the critical circle. One can correlate the critical circle diameter to the dip depth required to most rapidly form a preliminary coating over the previous cross-section. This in turn can lead to a reduction in build time as the net dipping times can be reduced. Thus before performing the recoating process for each cross-section a look up table or the like can be consulted to determine the appropriate dipping parameters to use during recoating.

The recoating process can be further automated by utilizing a combination of the horizontal and vertical comparison techniques to characterize the object configuration over which a smoothing member is passed. Though, many potential object configurations can exist, the characterization of these configurations can hopefully be reduced to a tolerable set. The set of different configurations may be divided into two or more categories. Preferably, the set of distinct configurations will have less than 10 to 20 categories. For each predefined category, the optimum recoating parameters can be determined and stored for use during the recoating process for each layer. There are various recoating parameters that can be varied depending on the object configuration. For example, these parameters may include: (1) the number of sweeps, (2) the clearance between the smoothing member and object surface during each sweep, (3) the velocity of each sweep, (4) the gap between the bottom of the smoothing member and the desired building level, (5) the sweeping direction, etc.

In a modified apparatus another recoating parameter which may be varied might include the type of device utilized, e.g. a flexible blade or a rigid blade, a rotating device, a blade with teeth or multiple appendages, etc. Another recoating parameter which might be varied is the orientation of the object relative to the sweeping device, e.g. the object may be formed on a platform that can be rotated in the horizontal plane. The rotatable platform that can be turned to an appropriate direction for sweeping then rotated back for curing of the next layer or alternatively solidification of the next layer can occur by rotating the orientation of the exposure pattern to be utilized, followed by another rotation of the object for recoating purposes when appropriate and possibly additional rotations and offsets of the exposure pattern

A number of variables may be utilized in categorizing the object configuration. For example, these variables may include: (1) layer thickness, (2) maximum depth of the widest trapped volume, (2) the maximum width of the deepest trapped volume, (3) the cross-sectional area of the previously solidified layer, (4) the primary orientation and dimensions of the largest trapped volume, and (5) the primary orientation and dimensions of the previously solidified layer. The use of a smoothing member in the stereolithographic recoating process, e.g. a doctor blade, is described in PCT Pub. #WO 90/03255, which is incorporated herein by reference as if set forth in full.

A number of preferred parameter values have been given for the various embodiments described herein. However, further parameter values can be derived by one of skill in the art based on the teachings herein and the building of sample objects.

Even though the embodiments of this disclosure have been directed toward obtaining cure parameters through data processing, this only represents one approach to causing appropriate transformation of material in association with each layer. Therefore, the data processing terminology should be interpreted to include any means for modifying original object descriptive parameters that result in the transformation of material according to the teaching of this invention. The teachings of this invention relate to interpreting object descriptive parameters and reproducing the object in a manner which deviates from a strict layer by layer formation, as necessary to achieve a higher accuracy reproduction. The methods and apparatus of this invention lead to higher accuracy reproductions by utilization of the simultaneous multiple layer curing techniques disclosed herein. Z-error correction

The application of the subject invention to "Z-error correction" will now be further described. A "Z-error" is the condition in which the relative displacement between an up-facing and down-facing feature of a part produced through stereolithography is greater than a desired amount if features are separated by solids or smaller than a desired amount if separated by a gap because the MSD or MRD involved is greater than the LT of layers situated between the up and down-facing features. Through the subject invention, up-facing and down-facing features, which normally are built during the solidification of the layers directly associated with these features, are instead built during the solidification of other layers which are situated such that the relative displacement between these two features in the built part is equal to the desired amount.

The point is illustrated in Figures 21a-21c. Figure 21a illustrates an object 600 produced through stereolithography under conditions in which the MSD is greater than the desired layer thickness, depicted with identifying numeral 607 in the Figure (in the particular example depicted in the Figure, it is assumed that the MSD is three times as great as the desired layer thickness). In the absence of the subject invention, down-facing feature 603 is built during the time that layer 604 is solidified, and down-facing feature 605 is built during the time that layer 606 is solidified. As a consequence, unwanted regions 601 and 602 (cross-hatched in the Figure) are built, and down-facing feature 603, in effect, becomes down-facing feature 603', while down-facing feature 605 becomes, in effect, down-facing feature 605'. The result is that the relative displacement between up-facing feature 608 and down-facing feature 603' (5 LTs) is greater than the desired amount (3 LTs), and the relative displacement between up-facing feature 608 and down-facing feature 605' (11 LT's) is likewise greater than the desired amount (9 LT's). This condition is what is known as the "Z error."

To rectify this problem, the subject invention can effectively "move" or "shift" down-facing feature 605 upwards to layer 610, i.e., defer the building of down-facing feature 605 until the building of layer 610, and it can also "move" down-facing feature 603 upwards to layer 609, i.e., defer the building of down-facing feature 603 until the building of layer 609. The effect of this will be to defer the building of the entirety of layer 606 (and all intermediate layers) (shown cross-hatched in Figure 21b) until the building of layer 610, and to defer the building of the portion of layer 604 directly above down-facing feature 603 (and all intermediate layer portions) (shown cross-hatched in Figure 21b) until the building of layer 609. The result is a stereolithographically-produced part in which the relative displacement between the up and down-facing features is set at the correct amount.

Alternatively, with reference to Figure 21c, the subject invention can effectively move up-facing feature 608 downwards to layer 604, and thus advance the building of that feature to the time of building layer 604. The effect will be to advance the building of the entirety of layer 609 (and all intermediate layers) (shown cross-hatched in the figure) to the time of building layer 604. Again, the effect will be a stereolithographically-produced part in which the relative displacement between the up and down-facing features is set at the correct amount.

It should be appreciated that a slight variant of the Z-error problem also arises in connection with the MRD. The problem arises when the MRD is greater than the desired LT of a layer situated between an up-facing and down-facing feature. When this occurs, the potential exists for a relative displacement between the up and down-facing features in the stereolithographically-produced part which is greater than a desired amount.

The problem can be illustrated with the aid of Figures 21d-21f. With reference to Figure 21d, it is assumed that the LT of all layers of the part have a uniform thickness identified with numeral 620 in the figure. The MRD, on the other hand, identified with numeral 621 in the figure, is assumed to be twice this uniform thickness.

The desired sequence of building layers is illustrated with the dashed lines in Figure 21d. However, because of the disparity between the MRD and the LT of the layers, this desired sequence cannot be achieved. Instead, following the rule that a portion of a layer will be built as soon as the distance between the working surface at this portion of the layer, and the previously formed layer or platform is equal to the MRD, the sequence depicted in Figure 21e would result. As shown, portion 611 is first formed, followed by portion 612, albeit at a lower exposure than portion 611. Next, portion 613 is formed, followed by portion 614, albeit at a greater exposure than portion 613. The remaining portions are then formed in the following order: 615, 616, 617, and 618. Note that the remaining portion, identified with numeral 619, cannot properly be formed because the distance between the required location of the working surface, identified with numeral 622 in the figure, and the previously formed portion 616 is less than the MRD. The resulting object is depicted in Figure 21f. Note that the relative displacement between up-facing surface 623 and down-facing surface 624 is less than the desired amount. It should be appreciated that the subject invention is available to eliminate this error. For example, through the subject invention, the building of portion 616 could be deferred until after the building of portion 617 when the working surface is at location 622. This revised sequence is shown in Figure 21d. Through this revised sequence, the order in which the identified portions are built would be as follows: 611, 612, 613, 614, 615, 616, 617, and 618. The result is that up-facing surface 623 is moved upwards to a location identified by numeral 623' in the figure. Consequently, the relative displacement between up-facing surface 623' and down-facing surface 624 is set at the correct amount.

It should be appreciated that an automatic method of Z-error correction is achievable through utilization of the subject invention in a process performed during or after the execution of C-SLICE (the term "C-SLICE" refers to a program used in 3D Systems' presently available commercial products to slice an object representation into a plurality of layer representations using boolean layer comparisons; it is the subject of U.S. Patent No. 5,321,622 (the '622 patent)). Such a method consists of the following steps. First, the object representation would be sliced into a plurality of layer representations using C-SLICE. Since all product features are rounded to slicing layers, the layer thickness of the slicing layers is an important determinant of the accuracy with which product features can be reproduced. Through the subject invention, the slicing layer thickness could be chosen specifically and solely for the purpose of minimizing this slice layer rounding error (i.e., SLREM), without initial regard to whether the MRD or MSD exceeds this slicing layer thickness. Next, the layer representations would be manipulated in accordance with the teachings of the subject invention for MRD and/or MSD values exceeding the slicing layer thickness. Third, the manipulated layer representations would be used to build the object subject to the limitations imposed by the MRD and MSD (the program used to perform the building process in 3D Systems' current commercial products is known as BUILD; it is described in U.S. Patent No. 5,184,307 (the '307 patent)). Although the actual layer thickness achievable in the building process would be subject to the limitations imposed by the MRD and the MSD, the level of accuracy achievable in the final part is potentially much higher.

Manipulation of .STL Files

Another embodiment for performing Z-error correction involves a procedure in which .STL files are manipulated in an appropriate fashion. The manipulated information would then be input into the SLICE and PROCESS programs, which would then execute in the traditional way.

Advantageously, such a procedure involves directly manipulating the incoming .STL file by first identifying all triangles associated with down-facing features. In the current commercial embodiment of 3D Systems' products, down-facing triangles are those whose normals have a Z-component of -1. Then, all triangle vertices which touch the vertices of the down-facing triangles are identified by exploiting the relationship, discussed in the '307 patent, according to which each vertex of an .STL triangle is required to touch adjacent triangles only at their vertices. Finally, each vertex of a down-facing triangle, and each vertex which touches a vertex of a down-facing triangle, are moved upwards (i.e., in the Z-direction) to compensate for the Z-error.

The technique is illustrated in Figure 22. In that figure, the down-facing triangles are identified with numerals 625, 626, 627, and 628. The technique involves moving the vertices of these triangles, as well as all vertices from adjacent triangles which touch these down-facing vertices, upwards by an appropriate amount. Typically, this amount will be equal to the MSD minus the desired layer thickness. For example, for a 12 mil MSD, and a 4 mil desired layer thickness, the amount of upward movement might be 8 mils.

In practice, the vertices of a down-facing triangle, and the vertices which touch these down-facing vertices, define common points when numerical rounding error is taken into consideration. These common points are identified in Figure 22 with numerals 629-635. In relation to point 635, for example, that point represents the convergence, at a single point in space, of vertices from triangles 625, 626, 636, 637, 638, and 639. Thus, the technique involves moving upwards all vertices which make up these common points.

Problems Related to Z Error Correction

Several problems that may exist in relation to Z-error correction will now be discussed. A first problem occurs when the upward movement of these common points causes them to push through up-facing surfaces of the object, resulting in an inversion in object features. This "push-through" problem can be illustrated with the aid of Figure 22. If the movement upwards of point 635 is greater than the relative displacement between up-facing surface 640 and the down-facing surface represented by the triangles 625 and 626, then the push-through problem will occur.

A second problem that may arise occurs when these common points are moved upwards past vertices of non-down facing triangle vertices (which are not moved). The result is a distortion in which small spikes are introduced into the part. This problem can be illustrated with reference to Figure 22. If common point 629 is moved upwards to the extent that it surpasses vertex 642 of triangle 641 (which is not moved), a small spike can be introduced into the part. This small spike is illustrated in Figure 23. That figure illustrates the effect of moving common points 629 and 630 upwards respectively to points 629' and 630'. As shown, vertex 642 of triangle 641 (which is not moved) has been surpassed in the Z-direction by point 629. The resulting pattern of solidification (represented by hatching in Figure 23) illustrates the creation of an unwanted spike, identified by numeral 643.

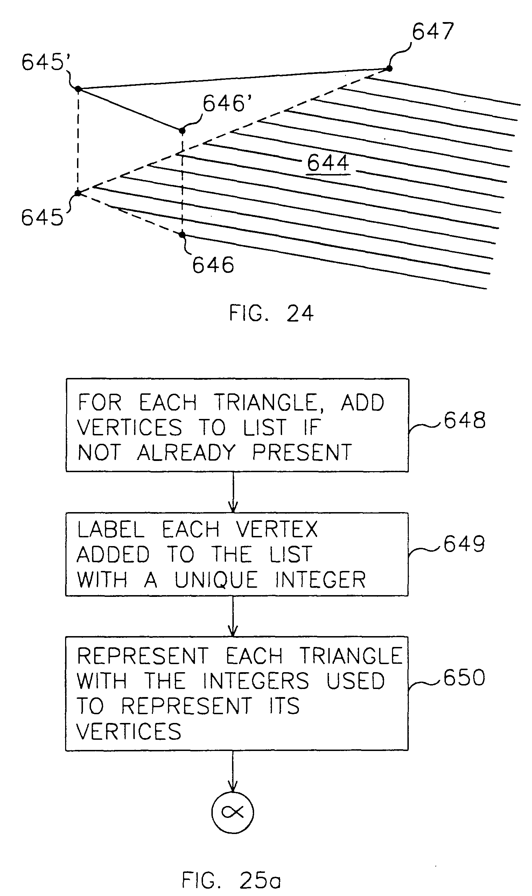

A third problem relates to the propagation of errors throughout the part as the common points are displaced. The point is illustrated in Figure 24. There, common points 645 and 646 are shown being displaced to points 645' and 646'. Point 647 is not displaced since it does not relate to a down-facing surface (instead, that point relates to a near-flat up-facing surface, identified with numeral 644, and represented with hatching in the figure). As a result of the displacement of the common points, the near-flat region 644 became considerably flatter in the final part. Thus, it is seen how the distortion introduced by the localized movement of two common points, is propagated much farther throughout the part.

Conversion of .STL to .CTL Files

A third embodiment for automatically performing Z-error correction will now be described. The technique involves a process for converting the .STL representation of an object into a new representation known as the .CTL file format (the term "CTL" stands for Compressed Triangle List), and then using the resulting .CTL file in the remaining stereolithographic process steps. The technique involves eliminating redundant vertices, and then expressing triangles which substantially span the surface or surfaces of the object in terms of identifiers of the non-redundant vertices.

The technique can be explained with reference to Figures 25a-25b, which illustrate a flowchart of the technique. In the first step, identified with numeral 648 in the figure, the vertices of each .STL triangle are first compared to a list, and then added thereto if not already present in the list. As described in the '622 patent, each .STL triangle is preferably represented by nine floating point numbers which define the Cartesian coordinates of the three triangle vertices, as well as three floating point numbers which define the Cartesian coordinates of the triangle normal. The order in which the vertices are listed preferably obeys the "right-hand rule," according to which the backside of the triangle is taken to surface a solid if they are oriented in a counter-clockwise direction, and are taken to surface a hollow region if they are oriented in a clockwise direction.

In determining whether a vertex is already present in the list, the three floating point numbers are each compared with the corresponding numbers making up each vertex in the list. In performing the comparisons, strict identity is not required. Instead, a "delta" value is used to take account of the rounding error associated with floating point numbers. The value represents a zone by which two floating point numbers can differ and still be considered identical.

The operation of this step can be explained with reference to Figure 26, which illustrates two triangles, identified with numerals 654 and 655. The first triangle, identified with numeral 654, is assumed to have the following vertices: (0.00001, 0.0, 0.0), (0.0, 1.0, 1.0), and (0.0, 0.0, 1.0). The second triangle, identified with numeral 655, is assumed to have the following vertices: (0.0, 0.0, 0.0001), (1.0, 0.0, 0.0), and (0.0, 1.0, 1.0).

The vertices of triangle 654 are then evaluated for placement on the list. Since the list is presently empty, each vertex of triangle 654 is placed on the list. The vertices of triangle 655 are then evaluated for placement on the list. Assuming a delta of .001 is used, this evaluation results in a determination that the first and third vertices (0.0, 0.0, 0.0001) and (0.0, 1.0, 1.0) are already in the list, having been placed there in connection with triangle 654 while the third vertex is new. Thus, the net result of this evaluation process is the placement of the second (1.0, 0.0, 0.0) vertex in the list. Thus, at the completion of this first step, the list of vertices is as follows: (0.00001, 0.0, 0.0), (0.0, 1.0, 1.0), (0.0, 0.0, 1.0), and (1.0, 0.0, 0.0).

In the second step, identified with numeral 649 in the figure, any vertex added to the list is represented with a unique integer. Advantageously, the integer represents the position or index of the vertex in the list. In relation to the list just discussed, the following assignment might result from this step: V0: (0.00001, 0.0, 0.0), V1: (0.0, 1.0, 1.0), V2: (0.0, 0.0, 1.0), and V3: (1.0, 0.0, 0.0).

In the third step, identified with numeral 650 in the figure, each triangle is represented by the three integers which define the vertices of the triangle. The two triangles illustrated in Figure 26 might be represented as follows: T1 (identified with numeral 654 in Figure 26): (0, 1, 2), and T2 (identified with numeral 655 in Figure 26): (0, 3, 1).

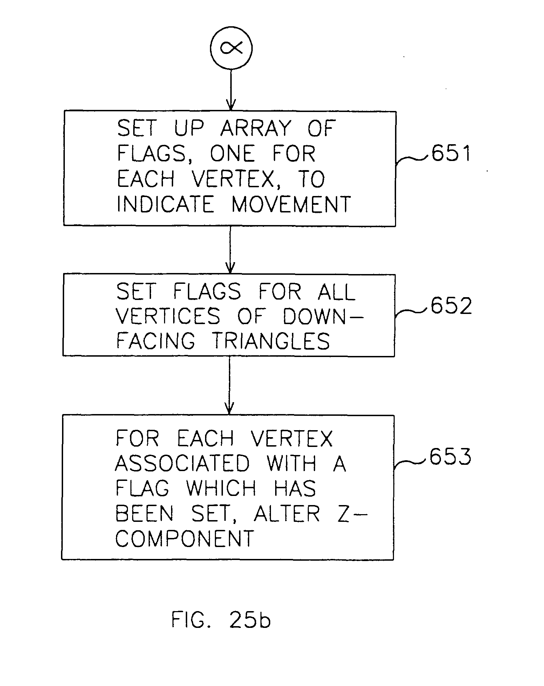

In the fourth step, identified with numeral 651 in Figure 25b, an array of boolean flags is established, one for each vertex in the list. The purpose of the flags is to keep track of which vertices have been moved. Initially, each flag is cleared.

In the fifth step, identified with numeral 652 in the figure, the flags of all vertices of down-facing triangles are set to a logical "1". The down-facing triangles are identified using the Z-component of the triangle normals. In the case of down-facing triangles, such value is negative and will be equal to -1.

In the sixth step, identified with numeral 653 in the figure, the Z components of the vertices whose flags have been set are adjusted to correct for Z-error. In the case in which the MSD is 12 mils and the desired layer thickness is 4 mils, for example, the Z-components of the vertices of the down-facing triangles would be adjusted upwards by 8 mils.

The modified .CTL file which results from this process is then used in lieu of the.STL representation in the remaining steps of the stereolithographic building process. (Alternatively, the modified .CTL file can be converted back to an STL file by simply replacing the identifiers with actual values; the reconstituted .STL file can then be used in the remaining steps). The first step in this remaining process is the slicing process, described in the '622 patent. Although that process will have to be modified slightly in order to accommodate the new .CTL format, such modifications are simple to make, and believed to be within the skill of the ordinary practitioner. For example, one could plug actual values in for the identifiers as each vertex is processed. Thus, they will not be further described.

It should be appreciated that an advantage of this embodiment over the second is computational efficiency resulting from a reduction in the number of vertices which must be moved. In the second embodiment, it is necessary to move the vertices of the down-facing triangles as well as all vertices which touch or are within a specified rounding error from one another. In the third embodiment, by contrast, only the vertices of the down-facing triangles need be moved. The vertices of the other triangles are automatically adjusted because of the manner in which they are represented (i.e., through integers which uniquely identify the vertices making up the triangles). In summary, through this representation process, the step of adjusting the Z-components of the vertices of the down-facing triangles automatically adjusts all relevant triangles.

Another advantage relates to a reduction in storage requirements. With the .CTL representation, the floating point numbers making up the vertices need only be stored once. By contrast, with the .STL representation, the redundancy of vertices amongst triangles results in multiple copies of the same vertex being stored.

Several refinements of this third embodiment are also possible. In one such refinement, the vertices of near-flat triangles are adjusted in order to correct for the variant of the "push-through" problem discussed earlier in relation to Figure 23. Such triangles can be identified from the Z-components of the triangle normals. The Z-components of such triangles will have an absolute value of less than 1, and will have a negative sign.

Advantageously, the vertices of such triangles are not adjusted to the same extent as the vertices of the flat triangles, but instead, are adjusted at a fraction of that amount, the size of the fraction bearing a direct relation to the slope of the near-flat triangle in relation to the horizontal. In relation to Figure 27, which represents a side view of a curved surface of an object, vertex points 656 and 657 might be adjusted upwards by the full amount because they are associated with a flat down-facing surface. Vertex points 658 and 659 might also be adjusted, but at progressively lesser amounts which reflect the progressive reduction of the absolute values of the normals of the associated near-flat regions in relation to the horizontal. Vertex point 660 might represent a point which is not adjusted at all since the absolute value of the normal of the associated region is so close to the horizontal.

Since each vertex which is to be shifted might be connected to a number of triangles each with a different normal orientation, the shifting amount might be determined in a variety of ways. It may be determined from 1) the negative normal with the largest absolute value, 2) the largest normal value, 3) a straight average of normal values, and 4) a weighted average of normal values (e.g. by angle or triangle area).

A further refinement relates to the identification of up-facing triangles. Instead of identifying and adjusting upwards the vertices of the down-facing triangles, it should be appreciated that it is also possible to identify the up-facing triangles and adjust downwards their vertices.

Another refinement relates to the rounding of triangle vertices to slicing planes. As described above, this third embodiment is advantageously performed before any rounding of triangle vertices to slicing planes. However, it should be appreciated that it is also possible to perform this embodiment after the rounding of triangles to slicing planes.

Another refinement relates to the amount by which the Z-components of the vertices of the down-facing triangles are adjusted. For purposes of computational efficiency, it may be advantageous to restrict this amount so that it is an integer multiple of the slicing layer thickness. This may be particularly appropriate, if rounding occurs before shifting.

Generation of .CTL File Using Hash Table

A fourth and most preferred embodiment of performing Z-error correction will now be described. This embodiment is a refinement of the third, and involves a modification to the step of determining whether any two vertices from different triangles are the "same" (i.e., within a specified rounding error). It has been discovered that this step, if performed using a pairwise comparison between a given vertex and the vertices of every other triangle in the .STL file, can be extremely time-consuming. Although the time required can be reduced to some extent by sorting the triangles (e.g., sorting by the minimum Z-component of the triangle vertices before performing the comparison), the time required (typically 2-3 hours) is still too long for most applications.

It has been discovered that appropriate results can be obtained through utilization of a hash table to sort the triangle vertices. The technique involves selection of an appropriate hash function which is effective for the purpose of putting similar vertices, i.e., vertices within a specified rounding error, into the same buckets of the hash table, while simultaneously achieving a wide disparity between dissimilar vertices. In essence, the technique involves sorting the triangle vertices to a hash table, and eliminating redundant vertices by comparing the vertices which fall within the same bucket or slot of the hash table. The non-redundant vertices are then labeled with unique identifying indicia, and the triangles are then expresses in terms of the unique identifying indicia rather than the vertices themselves.

In an exemplary embodiment, it has been discovered that acceptable results can be obtained using the following hash function: modulus(integer(abs(($x^*31.3 + y^*24343.0 + z^*68.265$)))), where the term "modulus" refers to the modulus function (i.e., the modulus of a number is the integer remainder, remaining after dividing the number by the base), the term "abs" refers to the absolute value function, the term "integer" refers to the integerization function, the base of the modulus function is the size of the hash table, and x, y, and z refer to the intergized Cartesian coordinates of the vertex in question. Integerization of the vertices, prior to application of the hash function, is necessary to ensure that two similar vertices, i.e., those within an acceptable rounding error, map into the same bucket. Integerization can be accomplished using the following equation: $c(T) = integer((c(U)/delta)^* delta)$, in which $c(U)$ refers to an untruncated coordinate, i.e., the x, y, or z component in floating point form, $c(T)$ refers to the truncated coordinate, and delta refers to the degree of acceptable rounding error, i.e., the extent to which two floating point numbers can differ and still be considered to be the same number. In practice, a default value of 1 mil for the delta value is a good value to use given the poor quality of some .STL translators. However, it should be appreciated that if higher resolution is required, delta values such as 0.1 or 0.01 mils can be used.

A flow chart of the technique is illustrated in Figures 28a-28b. The first step, identified in the figure with numeral 661, involves, for a given triangle, hashing the triangle vertices into a bucket of the hash table by applying the hash function to the coordinates of each vertex. Next, in the step identified with numeral 662, the vertex is compared with any vertices already stored in the bucket. If there is a "match," i.e., if the coordinates of the two are determined to be within a specified delta value of one another (and thus redundant), then the vertex is not retained in the table. Instead, in the step identified with numeral 663 in the figure, the integer associated with the entry already stored in the table is taken for use in representing the given triangle. However, if there is no match, indicating that the vertex is not redundant, in the step identified with numeral 664, then the vertex is stored in the bucket, and a unique identifying integer is assigned to the vertex. Next, in the step identified with numeral 665, the given triangle is represented by the integer used to represent its vertex. This process is then repeated for the remaining vertices in the object representation. After all the triangles have been represented, as illustrated by the step identified with numeral 666, the technique proceeds as discussed in relation to the second embodiment.

Other Applications of the .CTL File

Other applications of the .CTL representation of the object will now be discussed. It has been discovered that the .CTL representation is also useful for the purpose of displaying the object on a graphical display device.
A user, for example, may want to display the object, prior to slicing or building it, in order to orient it properly and the like (3D Systems' VIEW program, discussed in U.S. Patent No. 5,182,715, provides a capability for displaying an object prior to building it through sterolithography). For applications such as this, it is typically not necessary to display the object at the finest level of detail. Moreover, inclusion of features such as this into the display of the object can lead to long delays in displaying and moving a part. Therefore, there has been a need for a capability of removing some of the finer details from an object prior to displaying it.
It has been discovered that the .CTL representation of the object provides a useful and efficient way to remove this finer level of detail. The technique involves using a large value for delta, and then invoking the hash table procedure discussed above. Through utilization of a large delta value, many vertices collapse into one and thus disappear. Only vertices which are displaced from any other vertex by more than the value of delta will be retained.
The technique is illustrated in Figures 29a-29b. The dashed lines illustrate the zones delineated by the large delta chosen. All vertices within a given zone will collapse into a single vertex. Figure 29a illustrates the individual vertices prior to their being collapsed. Figure 29b illustrates the number of points (emphasized in the figure) into which some of these individual vertices will collapse.
An aspect of this technique is that many triangles will become degenerate, i.e., only retain one or two distinct vertices. This effect is illustrated in Figures 30a-30b. Figure 30a shows the points into which the vertices will collapse, and Figure 30b shows the number of distinct vertices which will remain with each triangle. As can be seen, only a very few of the triangles illustrated will remain non-degenerate, i.e., retain three distinct vertices.
Since the degenerate triangles will be redundant to vertices or sides of the non-degenerate triangles, i.e., will be unnecessary for the purpose of communicating any information about the object, a procedure is needed to find all these degenerate triangles and remove them. The pseudo-code fragment illustrated in Figure 31 will accomplish this objective. This procedure goes through the list of triangles looking for any degenerate triangles. If one is found, the last triangle is copied into the degenerate triangle's slot in the list, and the number of triangles is decremented.
The expansion of the remaining non-degenerate triangles to cover the resultant space is illustrated in Figures 32a-32b. The set of non-degenerate triangles, prior to expansion, is illustrated in Figure 32a. Note that one vertex from one of these triangles is contained in each one of the zones delineated by the delta value. When these vertexes are respectively collapsed into the single points within the respective zones, the effect is to expand the size of the non-degenerate triangles and fill the space left by the removal of the degenerate triangles. This process is illustrated in Figure 32b.
In practice, the appropriate value of delta for use in this application depends on the surface area of the part involved and the desired number of triangles. The following equation provides a useful method for automatically computing the delta: delta = square root (area/desired number of triangles).
A second additional application of the .CTL representation is the building of a hollow shell of an object. A flowchart of a technique for doing so is illustrated in Figure 33. In the first step, identified in the figure with numeral 667, normals for all vertices are computed. A normal of a vertex is computed by averaging the coordinates of the normals of all triangles the vertex is common to or touches upon. The average can be computed as a simple arithmetic average, but is preferably a weighted average, with the weights being determined by the relative areas of the respective triangles, or more preferably by the relative sizes of the angles making up the respective triangle vertices. The method of weighting by angle size is illustrated in Figure 34. There, a method of calculating the normal for vertex point 671 is shown. Two of the triangles which are used in this calculation process are identified with numerals 672 and 673. The angles formed by the relevant vertices of these two triangles are identified with numerals 674 and 675. Since the angle identified with numeral 674 is greater than that identified with numeral 673, the normal of triangle 672 will be given more weight in the calculation process than the normal associated with the other triangle.

In the second step, identified with numeral 668 in the figure, the .CTL representation of the object is copied, and then expanded by moving the vertices in the directions called for by the respective vertex normals. The expansion is accomplished simply by manipulating the list of vertices. The triangles, which are represented by groupings of integers representing the triangle vertices, need not be altered at all. The degree of expansion depends on the desired thickness of the shell. The level of expansion should be such that the difference between the outer surface of the expanded representation and the original surface is equal to the desired thickness.

In the third step, identified in the figure with numeral 669, the triangles making up the original .CTL representation are effectively "flipped" to create a representation of the inner surface of the shell. This is accomplished by switching the sign of the triangle normals, and also possibly by changing the order of the vertices to reflect the right-hand rule.

Finally, in the fourth step, identified in the figure with numeral 670, the expanded file and the original file are merged to produce a .CTL representation of a hollow shell. This .CTL file is then used to drive the remaining steps of the stereolithographic process, beginning with the slicing process.

As an alternative step 1, a copy of the .CTL file can be made and the vertex normals determined. Then, as an alternative step 2, the vertex normals can be reversed in the copy. Next, as an alternative step 3, the vertices of the copy can be shifted in the direction of the reversed normals to yield a contracted size. Finally, as in original step 4 (670 of Figure 33) the original and shifted .CTL files are merged to produce a hollow shell. This alternative embodiment is considered most preferred since it leaves the outer dimension of the object as in the original file. However, if the inner dimension of the object is considered most relevant the embodiment of Figure 33 would be considered more preferable.

The above embodiment for forming a shell can be used to form a solid object wherein two or more different building styles can be sued at different depths into the object. For example, in the above alternative shell approach, a copy of the shifted representation can be made and the normals can be reversed back to their original directions to form a third representation. This third representation represents an internal region of the object while the combined first and second representations represent an outer shell region (exterior region) of the object. Different build parameters (e.g. bordering, hatching, and filling patterns, solidification amounts) can be applied to each region so as to form an object with an interior structure distinct from its exterior structure. Of course, additional copies, offsetting, and normal reversals can be performed to yield additional zones or regions as one moves deeper into the object. Additionally, the offset or shifting amount can vary from level to level.

A third additional application of the .CTL representation is the building of a scaled-down part which, upon being powder coated or the like (described in U.S. Patent No. 5,234,636), will be at the correct size. A technique for producing a .CTL file for such a part involves computing the vertex normals, as described previously, and then moving the vertices in the direction opposite to that specified by the normals until an object representation having the correct scaled down dimensions is created.

Additional Object Representations

A variety of other object representations are possible for use in performing Z-error correction. One possible representation is the non-uniform rational B-spline representation (NURBS). The NURBS representation is based on a polynomial interpolation of control points. With a NURBS representation, Z-error correction or other representation modification techniques can be performed by shifting the NURBS control points appropriately. The modified NURBS representation would then be used in the remaining steps of the stereolithographic process, beginning with SLICE.

Another possible representation is the recursive subdivision space format, illustrated in Figures 37a-37b. As shown in Figure 37a, this format involves overlaying an object 685 with a plurality of lines, identified with numerals 686a, 686b, 686c, 686d, 686e, and 686f, which intersect one another in a grid format.

The squares of the grid which are entirely within the solid part of the object are then identified, and added to a list. In the figure, two such squares are identified with numerals 687 and 688. Then, for each square which only partly embraces a solid portion of the object, the technique is repeated, although with grid lines which are more closely spaced together.

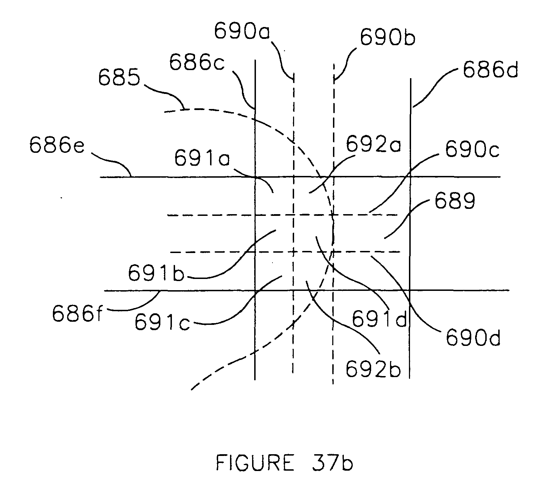

One such square is identified with numeral 689 in Figure 37a. As shown in Figure 37b, which is a magnification of the relevant portion of Figure 37a, this square is overlayed with a plurality of more finely-spaced lines, shown as dashed lines in the figure and identified with numerals 690a, 690b, 690c, and 690d. The squares formed by this finer grid which are entirely within the solid portion of the object, identified in the figure with numerals 691a, 691b, and 691c, are identified and added to the aforementioned list. The process then repeats itself for the squares in this finer grid which do not entirely enclose solid, such as the squares identified with numerals 692a and 692b, and ultimately completes when it is determined that a list of squares which define the object at an appropriate level of detail is obtained. This list of squares is what constitutes the object representation.

A third additional representation known as the three-dimensional run length encoding (3D-RLE) representation will now be described. A flowchart for producing a representation of an object in 3D-RLE format is illustrated in Figures 36a-36b, while a graphical illustration of the process is provided in Figure 35. For a given object 676, the technique involves placement of an X-Y grid, identified with numeral 677, below the object in the Z-dimension. This step is identified with reference numeral 681 in Figure 36a.

Then, a plurality of virtual spikes or lines, identified with numerals 678a, 678b, 678c, and 678d, are drawn. Each such spike originates from one of the squares in the X-Y grid, and intersects the object at one or more distinct vertical places. In the figure, spike 678a is shown as intersecting the underside of the object (not shown) and exiting the object at location 680a; spike 678b is shown intersecting the underside of the object (not shown), exiting the object at location 680e, re-entering the object (not shown), and re-exiting the object at location 680b; spike 678c is shown entering the underside of the object (not shown), and exiting the object at location 680c; spike 678d is shown entering the underside of the object (not shown), and exiting the object at location 680d. This step is identified in Figure 36a with reference numeral 682.

The third step involves associating the Z-components of the points at which the spikes enter and exit the object with the particular square at which the respective spikes originate. In the example illustrated in Figure 35, for example, the coordinates of the point at which spike 678a enters the object, and the coordinates of the point at which the spike exits the object (identified with numeral 680a), are associated with square 679a; the point at which spike 678b enters the object (not shown), exits the object (identified with numeral 680c), re-enters the object (not shown); and re-exits the object (identified with numeral 680b), are associated with square 679b; the point at which spike 678c enters the object (not shown) and exits the object (identified with numeral 680c) are associated with square 679c; and the point at which spike 678d enters the object (not shown) and exits the object (identified with numeral 680d) are associated with square 679d. The result is a series of "ON-OFF" points associated with the squares of the X-Y grid which define, in run-length encoded format, the alternating solid and hollow portions of the object. This step is identified with numeral 683 in Figure 36b. Specifically, the "ON" points defines the points at which the virtual spikes enter the object, while the "OFF" points define the points at which the virtual spikes exit the object.

The fourth step is the actual manipulation of the 3D-RLE formatted data to perform Z-error correction. This step, identified with numeral 684 in Figure 36b, involves simply moving the "ON" points upwards in the Z-direction by an appropriate amount.

An advantage of this format is that it is more robust, i.e., capable of handling many different parts with fewer error conditions. Another advantage is that it is extremely easy to switch between this format and the border/contour format described in the '622 patent (the commercial embodiment of which is known as the SLC format), which defines one of the permissible input formats to 3D Systems' SLICE program. Thus, with a simple modification, this 3D-RLE format can readily be used in the remaining steps of the overall stereolithographic process.

It should be appreciated that the aforementioned representations can be utilized in combination to achieve beneficial effect. For example, a .CTL representation could be used in conjunction with the 3D-RLE representation to correct for Z-error. The technique involves adjusting the vertices of the down-facing triangles in the manner described, and then checking the movement of the vertices against the 3D-RLE file to detect a "push-through" problem. Once detected, the problem could be corrected by reducing the amount of movement of the vertex in question.

Reduction of Quantization Error

It should be appreciated that the SMLC techniques described herein are also effective for the purpose of eliminating quantization error such as that introduced by representing .STL triangle vertices as integers, rounding to slicing planes, etc. Such error, if uncorrected, leads to a problem analogous to Z-error, i.e., a relative displacement between an up-facing and down-facing feature which is greater than a desired amount. Thus, the previously-described techniques have direct applicability.

Summary,

As noted above minimization of errors associated with rounding vertices or data control points to slice layers can be implemented by slicing the object at a resolution acceptable for formation accuracy and then further processing the data obtained using the MRD and/or MSD techniques or some modification thereto. If the desired resolution is not limited by a larger MRD or MSD then it is theoretically possible to build the object from layers of the desired resolution.

But on the other hand from a practical point of view one may wish to build the object using thicker layers (e.g. to reduce curl distortion). In this case, two building criteria must be addressed: 1) down-facing features must be formed such that their lower surfaces are properly located, and 2) up-facing features must be formed when their desired vertical position is coincident with the working the working surface. The second criteria indicates that a recoating process must occur in association with every level at which an up-facing feature exists. Thus the number of levels containing up-facing features sets the minimum number of recoating processes that must occur. To fulfill the first criteria the down-facing features may be solidified from any position above them (so long as accurate and timely exposure into the depth of the liquid can occur). If one is willing to variably expose down-facing features using different cure depths, depending on the precise depth of the feature below a given layer, one can set a default thick layer build level. Also if one is willing to expose up-facing features utilizing a variable cure depth or ignoring any problems resulting from not using a variable cure depth, a build up technique can be readily defined. In this approach, recoating processes would occur at the default build layer levels and at all levels containing up-facing features. The exposure levels utilized would depend on whether a down-facing feature is to be exposed and its thickness or whether a non-down-facing feature (up-facing region or continuing region) is to be exposed and the depth of liquid over the last solidified material in the region. Of course, different build styles can be used in the non-down-facing region depending on whether or not its an up-facing or continuing region.

This approach can be utilized in combination with an MSD which is greater than the desired resolution. However, in this case one would not form any down-facing portions from a default build layer level that was positioned less than the MSD form a down-facing feature.

If the MRD is more than one layer thickness, the above techniques would again need to be modified to ensure buildability with the desired resolution.

QUICKCAST Building Techniques

"QUICKCAST' is any of a number of different building styles which allow untransformed material to be removed from the interior of the walls of the object after formation (previous embodiments are described in PCT Pub. #WO 92/08200 and PCT Pub. WO #92-20505, which are hereby fully incorporated by reference. The ability of the untransformed building material to be removed from the internal portions of the object is a result of using wide spaced hatch patterns that are periodically offset and/or using at least some hatching patterns that result in broken lines of transformed material. Multiple skins and/or multiple boundaries may also be used. The drained objects are typically used as investment casting patterns. Since these build styles produce objects with little distortion and since they also use relatively small amounts of building material, they are considered practical building styles for many applications.

The building technique which produces drainable parts for use as investment casting patterns has become known as a QUICKCAST Build Style. This is a generic name that can be applied to any of a variety of stereolithographic build styles that can be used in forming objects with hollow or drainable walls.

Presently preferred QUICKCAST building techniques use widely spaced cross-hatch vectors that are derived from hatch paths that are a fixed for a number of layers. This causes the hatch lines that are produced from the hatch vectors to overlay each other for a number of layers. After forming several layers, the hatch paths are shifted and remain in this altered state for a number of layers after which they are shifted back to their original locations. In effect, the shifting of hatch lines only occurs periodically. The most appropriate hatch spacing and hatch height before shifting are resin dependent. It has also been found that these parameters can also be dependent on object configuration. When casting the stereolithographically formed patterns, it has been found that if the thickness of completely solid material exceeds 80 to 120 mils the ceramic mold shells may crack when attempting to burnout the stereolithography pattern. Thus, when forming objects it must be insured that regions thicker than 80 to 120 mils do not contain trapped resin that could become solidified upon post cure irradiation. This in effect presents an upper limit on how many consecutive layers can contain overlapping hatch if the pattern is to be used for arbitrary object configuration. If the layers of overlapping hatch approach the 80 mil level, it is apparent that an arbitrary object configuration might contain regions which could become prohibited from draining. On the other hand, if the layers of overlapping hatch become too thin, the vertical openings between the offset hatch lines may become too small to allow effective drainage of the liquid resin due to surface tension or viscous flow effects. Balancing the problems involved in setting the overall hatch height, for typical object configuration the preferred thickness of layers before offset is in the range of 70 to 130 mils and more specifically between 80 to 120 mils most preferably about 100 mils plus or minus 5 mils and maybe 10 mils. For a given object configuration, it may be advantageous to reduce the height before offset to as low as 30 or 40 mils. However when lowering the height before offset, one must expect significant increases in drainage time. It is noted that when curing hatch vectors, they are typically supplied an exposure in excess of the layer thickness to ensure that the layers adhere to one another. This excess cure depth is typically 5 to 6 mils or more. This excess cure depth results in a decrease vertical dimension of the openings formed by the offsetting of hatch. This decrease in opening height must be considered when determining the number of layers to draw before offsetting. The horizontal spacing of the hatch vectors is also bounded by opposing requirements. If the hatch spacing is made too small, the surface tension and/or viscous flow characteristics of the liquid might make drainage impractical, if not impossible. On the other hand if the spacing of the hatch vectors is too wide, several problems could occur: (1) they might supply inadequate support for the skin and boundary regions surfacing the object, (2) they might provide inadequate strength for overall object integrity, or (3) they might create trapped volumes that could make recoating difficult. For typical object configurations, it has been found that a spacing of approximately 120 to 180 mils is preferred; more specifically a spacing of 130 to 170 mils is preferred; and most preferably a spacing of approximately 150 mils is used. However, spacing of 100 to 250 mils have also been found to be satisfactory. The presently preferred building materials for stereolithographically forming investment casting patterns are hybrid epoxy resins, SL 5170 and SL 5180. These resins are manufactured by Ciba Geigy of Basel Switzerland and sold by 3D Systems, Inc. of Valencia, California. The SL 5170 is use in combination with a HeCd laser emitting 325 nm radiation, while SL 5180 is used in combination with an argon-ion laser emitting 351 nm radiation or a krypton laser emitting 351 and 356 nm radiation. The preferred layer thickness for SL 5170 is 4 mils with a boundary vector overcure of 7 mils, and other exposure parameters including a hatch vector overcure of 5 mils in combination with a triangular hatch pattern, a skin vector spacing of 4 mils and a net skin cure depth of 12 mils. The preferred layer thickness for the SL 5180 resin is 6 mils with a triangular pattern and other exposure parameters including a boundary overcure of 7 mils, a hatch overcure of 6 mils, and with other parameters similar to those used for the SL 5170 resin.

Though it is possible to heat the part to an elevated temperature to lower the resin viscosity to expedite drainage, it has been found that the most preferred temperatures are equivalent to the temperatures used in forming the objects on the SLA. This temperature range is typically 28 to 30 degrees C. If the temperature is increased significantly above this level increase in object distortion due to temperature has been found to out weight any advantage gained by decreased drainage time.

Though the above described version of the QUICKCAST build style works well for making useable investment casting patterns, it has several drawbacks. These drawbacks include: (1) holes can be form in the skins and surfaces of the object due to support removal and/or due to inadequate adhesion between boundaries possibly due to a dewetting phenomena between the solidified resin and the liquid resin when very thin layers are used in forming the object, (2) as noted above, internal cavities can be closed off so as to trap resin, (3) insufficient drainage from portions of the objects, (4) inadequate surface finish, (5) possible formation of trapped volumes, and (6) surface dimples. Based on these problems a new version of the QUICKCAST build style has been developed. This new version adds one or a combination of new features. These new features may include: (1) formation of multiple down-facing skins so as to increase the structural integrity of down-facing features, (2) no utilization of hatch vectors when forming at least the first layer of down-facing skin which minimizes any wafflish appearance of these features, (3) formation of multiple up-facing skins to increase the structural integrity of the up-facing features, (4) no utilization of hatch vectors when forming at least the last layer of up-facing skin thereby minimizing any wafflish appearance that might result, (5) utilization of multiple boundaries which are offset from one another when forming the exterior portions of each cross-section thereby increasing the structural integrity of the walls of the object, (6) exposing the most exterior boundary last on each cross-section, (7) utilization of wider spaced hatch vectors than possible with the previous version, thereby decreasing drainage time and decreasing the likely hood of trapping pockets of resin in tight regions, (9) utilization of different hatching styles than those preferred for the previous version, eg., rectangular or hexagonal patterns,(10) automatic creation of holes in selected surfaces of the object so as to eliminate or reduce the formation of trapped volumes and so as to allow automatic drainage of liquid from the object upon completion of object formation and lifting of the object from the vat of resin; (11) compensation for use of down-facing skins with a thickness greater than the layer thickness. In the most preferred embodiment all of these elements would be combined; however, it is conceivable that only a portion of these elements might be implemented in a particular embodiment wherein most if not all of the benefit of the preferred embodiment would be achieved for a given object configuration. In the currently preferred embodiment, the most preferred parameters when using SL 5170 are: (1) use of 6 mil layers; (2) use of 4 boundaries spaced apart by 4 mils per consecutive boundary; (3) use of 3 up-facing and down-facing skins exposed using both X-and Y-fill vectors with each set of fill vector supplied with sufficient exposure to yield an 8 mil cure depth with no hatch on the first down-facing layer or the last up-facing layer; (4) use of a hatch spacing of between 150 and 350 mils and more preferably between 200 and 300 mils and most preferably approximately 250 mils; (5) use of a square hatch pattern, though eventually a hexagonal pattern might be better; (6) though not yet automated, at least one hole of an approximately ¼-inch diameter at or near the top of the object, to act as a vent, and one, two or more holes of approximately ¼-inch diameter each at or near the bottom of the object to act as drainage zones. The values specified for these parameters can be varied, for example, depending on the actual layer thickness to be used in forming an object two skins may be sufficient or more than 3 may be desired.

An additional embodiment of the QUICKCAST build style exists that doesn't necessarily use offset hatch to ensure drainability of the objects being formed. Instead, in this embodiment the hatch vectors are not drawn as continuous lines but are periodically provided with gaps that are sufficiently large in both the horizontal and vertical dimensions so as to allow flow of the liquid resin and its eventual drainage from the interior portions of the walls of the object. As with the previous embodiments the spacing of the hatch vectors is preferably equal to or greater than 150 mils. It was noted above with regard to the previous embodiments, that if thin, vertical-features were in existence on a given object then depending on the exact vertical dimensions of the features, the exact vertical location of the features, and the vertical locations at which the hatch vectors are being offset; it is possible that liquid resin could get trapped between external boundaries, external skins, and the hatch lines. This is especially a problem with the multiple skin embodiment since the use of these extra skins decreases the vertical dimensions of the open regions of these features, thereby increasing both the likelihood of trapping liquid and of having the overall solidified region exceeding the acceptable thickness. On the other hand these previous embodiments have little likelihood of absolutely trapping liquid in small horizontal features as long as the vertical dimensions of these features were not also small. In the previously described offset hatch embodiments, without implementing an object feature sensitive embodiment, it is difficult to reduce the probability of encountering these vertical traps. However, in the instant broken hatch embodiment it is possible to reduce the probability of forming these vertical traps at the cost of increasing the probability of encountering horizontal traps. However, if done carefully, with this embodiment, both the vertical and horizontal trapping situations can be maintained within levels that are not likely to cause the overall solidified thickness to exceed the acceptable level. If an object has only small horizontal features as opposed to vertical features, one of the previous embodiments is probably well suited for building the object. If the object has both small vertical features and small horizontal features the first example implementation of this embodiment is well suited for forming the object. However, if the object has only small vertical features, then the second example implementation of this embodiment is well suited for forming the object since it leads to higher structural integrity but still allows liquid to be readily drained from the object.

As a first example implementation of a broken hatch embodiment, reference is made to Figure 38a, 38b, 38c, and 38d. Figure 38a depicts the boundary 1002 for an arbitrary layer and the hatch pattern 1004 to be cured in association with that layer. As can be seen the hatch lines to be cured on this layer lie on a square grid of hatch paths 1006 (i.e., the dash lines) but only the regions near the intersections of the paths are actually solidified. If the spacing between the consecutive hatch paths is, for example, 150 mils, the length of the individual lines solidified on each path may be between 30 and 50 mils. This results in open horizontal regions of 100 to 120 mils between each solidified line on each path. Figure 38b on the other hand depicts a hatch pattern 1008 to be cured in association other layers of the object. This hatch pattern is based on the same grid 1006 of hatch paths that the short hatch 1004 was based on. Thus it is ensured that the hatch lines lie a top one another. In this embodiment the hatch patterns 1004 and 1008 alternate on a periodic basis. This alternation of the patterns should occur so that the object is formed with sufficient structural integrity. At the same time the alternations should be performed using a spacing such that the vertical dimensions of the openings are sufficiently large to allow efficient flow of the liquid material, while at the same time not spaced so far apart so as to form structures that will trap liquid in features thinner than 80 to 120 mils. Based on this criteria, the 1004 hatch pattern is used on consecutive layers until a height of 80 to 120 mils is obtained followed by use of the 1008 hatch pattern on the next consecutive layers for a height of 20 to 40 mils. This layer-to-layer build up process is depicted in the object side view as shown in Figures 38c and 38d which are taken from vertical cuts through a plane of stacked hatch paths and a plane intermediate to the stacked hatch paths. As can be readily observed, this embodiment is less susceptible to trapping volumes of liquid that can result in solidified regions thicker than the acceptable level. Of course other hatch patterns are possible which can lead to the same desired result. These other hatching patterns might be based on other hatch path patterns or spacings and/or other combinations of solid and broken hatch, or even of broken and broken hatch. For added structural strength, each hatch line may actually be formed by exposing two more slightly off-set hatch vectors.

Another embodiment may not allow the hatch lines on layers containing broken hatch lines to contact the boundaries of the region. In fact a minimum separation distance between can be implemented by creating a temporary boundary for hatching purposes via a line width type of compensation of the original boundary.

The second embodiment is similar to the first embodiment above, except that some of the broken hatch lines are allowed to extend further and thus provide more stability to the structure.

An additional QUICKCAST building style embodiments exist that can be used in combination with the any of the above embodiments. Some of these additional embodiments involve the use of different hatching patterns at different positions within the object depending on how far the positions are from the surface of the object. When using a single skin and single boundary offset hatch embodiment, the hatch must be relatively closely spaced and offset frequently to ensure that the surfaces of the object are adequately supported and that large regions of liquid won't be trapped within the object. However, closely spaced hatch and frequently offset hatch implies that the flow paths are relatively small and thus considerable time may be required to complete the necessary drainage. Since the internal integrity of the object is less important than the external integrity, as one moves further from the surfaces of the object the spacing of the hatch vectors can be increased significantly. This increase in spacing of the vectors, or other reduction in the quantity of hatch lines being used, can lead to decreases in drainage time since the resistance to resin flow is reduced. The first step in implementing an embodiment that changes hatch line quantity as one moves deeper into an object, is to determine how deep one is into the object.

Through the use of layer comparisons to determine vertical depths into the object and the use of erosion and expansion routines to determine one horizontal depth into the part one can define boundaries for each cross-section that are located at some predefined minimum distance into the object from all surfaces and thus the curing of the material within these boundaries can be based on a modified set of criteria. In curing the regions within these boundaries the boundaries themselves need not be solidified thus removing any concerns about these deep boundaries limiting fluid flow. For example, if a particular hatch spacing is preferred for use near the surfaces of the object in order to support external boundaries and skins, that hatch spacing may be doubled in the deep regions of the object. For example the portions of the cross-section within 50-150 mils of the surface may be given a hatch spacing of approximately 150 mils while portions deeper into the cross-section may be given a hatch spacing of 300 mils. Figure 39 depicts a cross-section which uses two different hatch types depending on the distance the region is from the surfaces of the cross-section.

In another embodiment, the use of the information about a region's depth into the object can be utilized in an opposite manner to that of the previous embodiment. Especially when using a multiple skin and multiple boundary embodiment, one can use less internal structure to support the surfaces and external boundaries of the object. This use of less support structure can lead to much freer drainage of the untransformed material within and near the external surfaces of the object. However, though the surface areas are much more rigid one must still be concerned about overall structural integrity of the object. Based on these concerns this embodiment use minimal internal structural near the surfaces and boundaries of the object and more structure when one is further from the external features of the object. For example, the hatch spacing may be large when one is within a particular distance to the surface of the object and/or one can ensure that only broken hatch vectors are used within the given distance of the surface. One can then convert to closer or non-broken hatch as one moves deeper into the interior of the object. Since it is only the combination of boundaries and/or skin with hatch that can create trapped pockets of liquid (which can eventually become solidified and lead to failure during casting) and since this embodiment can be used to ensure that no trapped regions having dimensions that come close to those which can result in a casting failure during bum out, embodiments based on these techniques are considered to be most preferred. Of course immediate embodiments exist that can focus only on horizontal distance from boundaries or on only vertical distance. Though, less preferred, these intermediate embodiments would probably produce satisfactory parts in many 5 situations while simultaneously reducing the computational complexity of the embodiment.

As noted above, horizontal comparisons can be of particular advantage in implementing advanced QUICKCAST build styles. The following is an example of such as embodiment. In this embodiment, the horizontal comparisons operate on the LB regions of each cross-section to divide them into three regions. The first region is that closest to the original LB boundaries and is approximately 15 - 30 mils wide. This first region forms a completely solidified shell region. The solidification of the first region may occur via multiple overlapping offset boundaries (preferred technique) or alternatively it may be filled by a utilization of skin vectors. The second region borders the first region and proceeds deeper into the cross-section another 50 to 100 mils. This region is solidified using minimal structure, e.g. a very wide spaced hatch, or possibly a broken hatch pattern, that may be used on only periodic layers. Each hatch line might be solidified via a single hatch vector or by two or more hatch vectors which are offset from one another. For example, it might be used once every 25 to 150 mils and be offset with consecutive uses. Alternatively, for example, it might be used every 100 to 150 mils but when used it may be exposed on a series of two or three, or more, consecutive layers without offset. The spacing between the vectors might be 100 to 250 mils.

In this embodiment, the third region occupies the rest of the original LB region. The third region is solidified with a tighter hatch pattern, or one with fewer breaks, than that used in the second region. For example, hatch with a spacing of 100 to 150 mils might be used on every layer and offset periodically. This embodiment offers a strong outer shell which is directly supported by a very fine grid structure, which in turn is supported by a more rigid grid structure. As drainage of stereolithographically produced investment casting patterns is critical to their successful use, and as resin entrapment between the surfaces of the object and the hatch lines can result in failure of the ceramic mold on burn out, the utilization of the horizontal comparison technique allows implementation of an internal grid structure that is fine enough near the object surfaces to allow resin drainage but structurally rigid enough in the deep interior portions of the object to provide adequate support for large structures so as to ensure structural integrity. Without the horizontal comparison techniques described earlier, this embodiment could not readily be implemented on an automated basis.

Furthermore, as noted previously, a more preferred embodiment will combine the horizontal comparison generated regions with multiple skins generated by vertical layer comparisons. This combination embodiment is readily generated by the techniques described in the above referenced application.

The most preferred embodiment extends the last embodiment one step further, by continuing the layer comparisons into one or more layer immediately above the multiple down-facing skins and immediately below the multiple up-facing skins so as to provide region designations that allow the regions immediately above and below the down-facing and up-facing surfaces, respectively, to be transformed using a minimal amount of hatch. Preferably, these regions extend beyond the skins by 25 to 150 mils and most preferably by 70 to 100 mils and are solidified using a series of point exposures, e.g. columns, which may be one, two, three or more line widths in diameter and spaced from each other by 25 to 150 mils. Alternatively, the columns may not be circular in cross-sectional dimension but may take on some other shape, such as small crosses, boxes, or the like.

Other more advanced embodiments are possible where the most exterior portions of the continuation boundary regions are not given a widened solid cure where the continuation boundary is bounded by a region which is being skinned. In an extension of this embodiment, additional care can be taken to ensure that object regions close to inside comers, are not inadvertently unexposed due to the potential lack of multiple skins being copied into these comer regions and lack of widened continuation boundary zones

Other embodiments of the nonoverlapping approach to building can be developed from appropriate combinations with techniques discussed in conjunction with overlapping exposure techniques as well as with the additional embodiments of the present invention to be described hereinafter.

ACES Building Styles

A. preferred embodiment, when using the SL 5170 resin and the SL 5180 resin is called the ACES building styles. Only boundaries and X and Y skin fill are used on each portion of each cross-section. The sequence of exposing the X and Y vectors is alternated from layer to layer. The first set of skin vectors exposed are given an exposure that results in a net cure depth of slightly under one layer thickness. When the second set of vectors expose the material, the increase in cure depth results in adhesion. Typically, identical exposures are applied to both sets of skin vectors. However, it is possible to use a larger exposure on the second set than that used on the first set. The preferred layer thicknesses are 4 mils for SL 5170 and 6 mils for SL 5180. Though not preferred it is possible to utilize hatch vectors during exposure of the cross-sections, furthermore it is possible to use the ACES building-style on a portion of a cross-section or object and some other building style on another portion of the cross-section or object The ACES build style yields highly translucent parts.

When using epoxy resins like SL 5170 and SL 5180, it has been found helpful to allow a time period of between 5 and 90 seconds after exposure of each cross-section before beginning the recoating process so as to allow the modulus of the exposed resin to increase to a certain minimum level before subjecting the newly exposed layer to the forces involved in recoating. This time period is called the predip delay. For the ACES building style when using SL 5170 the time period is typically between 10 and 30 seconds whereas when using SL 5180 it is typically between 45 and 90 seconds. For, the QUICKCAST build styles when using SL 5170, the predip delay is typically between 0 and 15 seconds whereas when using SL 5180, it is typically 10 to 30 seconds. Exact values of predip delay can be obtained from minimal trial and error for particular part geometries.

As a technique for eliminating or at least minimizing the impact that predip delay has on part building time, it is possible to use a smart exposure pattern that exposes critical areas first, followed by exposure of less critical areas. In effect, the count down of the predip delay time can begin as soon as all critical regions have been exposed. Thus depending on how long the exposure of the less critical regions takes, the predip delay is either eliminated or at least reduced. Critical areas can be considered external boundary regions and external skin regions, with only a grid structure of the non-external regions being considered at least marginally critical. One potential work around involves scanning external regions first followed by scanning a grid pattern in the non-external regions, after which predip delay count down begins, followed by exposure of the remaining non-external regions. The predip delay work around which the ACES building styles can be implemented via nonconsecutive skinning techniques wherein the boundaries are exposed, followed by the first skin exposure, followed by the second skin exposure wherein critical regions are exposed first (which may be located in one or more distinct boundary regions) followed by a second, and possibly higher order, interlaced exposure.

Automatic Generation of Vents and Drains

The automatic generation of vents and drains will now be described. The technique involves utilization of the VIEW program, described in U.S. Patent No. 5,182,715 (the '715 patent), which is incorporated by reference herein as though set forth in full. Through VIEW, a user is able to display and possibly reorient an object prior to building it in order to obtain smoother surfaces and the like.

As described in the '715 patent, VIEW is configured to display a representation of the object in the .STL format. The .STL format is a tesselated triangle format, in which the triangles substantially span the surface of the object, and each triangle is represented by its three vertices (in an exemplary embodiment, the three vertices are each represented by three floating point numbers, and are ordered in accordance with the "right-hand rule") and a normal vector (also represented in an exemplary embodiment by three floating point numbers representing the i, j, and k components of the normal). Additional details about the .STL format are available in U.S. Patent Nos. 5,059,359; 5,137,662; 5,321,622;

and 5,345,391, all of which are herein incorporated by reference as though set forth in full.

As described earlier, it is also possible to display an object representation conforming to the .CTL format. As discussed, the .CTL format provides several advantages relative to the .STL format which are relevant to VIEW. The first is that it facilitates the execution of scaling and rotation operations. The second is that, through appropriate selection of the delta value (the level of acceptable rounding error), detail which is unnecessary from the standpoint of VIEW can be eliminated, enabling the resultant object to be efficiently displayed on relatively slow graphic display devices.

A first embodiment of an automatic method of adding vents and drains to an object involves . displaying a representation of the object, whether in the .CTL or .STL format, and automatically displaying to a user the flat triangles involved in representing the object. Only the flat triangles are highlighted, since in this embodiment, a vent can only be placed in a flat up-facing triangle, while a drain can only be placed in a flat down-facing triangle. VIEW is able to determine which triangles are candidates for placement of a vent or drain through the normal vector associated with the triangle: the k component of the normal of all flat triangles is either 1 or -1, with the value of 1 being associated with up-facing triangles, and the value of -1 being associated with down-facing triangles.

The process for creating vents involves the steps illustrated in Figure 40. In the first step, identified in the figure with numeral 1020, the user selects the option of displaying a top view of the part. Using a mouse, the user clicks onto the "Top" button using the "Viewing Transformation" window provided by VIEW, which is illustrated in Figure 46. The "Viewing Transformation" window provides a user with the capability to specify various characteristics about the display, such as whether to transpose or rotate it in one or more coordinates, whether to zoom it, the perspective of the display (i.e., top, bottom, front, rear, right, light, isomorphic, or tessalated triangle), and the shading of the display. Examples of a display of cube in which one or more of these parameters have been varied are illustrated in Figures 43, 44, 45, and 47.

.The next step, identified with numeral 1021 in Figure 40, is to highlight the candidate triangles in which a vent can be placed, which, as discussed, are the flat up-facing triangles. This step is accomplished by clicking on the "Display Vent Triangles" bar provided in the "Vents and Drains" window, both of which are illustrated in Figure 42. As a result of this step, the flat up-facing triangles are highlighted in the display with a particular color, e.g., blue.

The next step, identified with numeral 1022 in Figure 40, is to identify selected ones of the flat up-facing triangles in which vents are to be created. This is accomplished by moving the mouse arrow into any of the highlighted triangles, and pressing one of the mouse buttons. The selected triangle will then be highlighted in a different color, e. g., white, than the other up-facing triangles. In this step, more than one triangle can be selected.

The next step, identified with numeral 1023 in Figure 40, is the automatic creation of the vents. This is accomplished by clicking on the "Create" button displayed as part of the "Vents and Drains" window (illustrated in Figure 42). The result is that a vent is created in every one of the selected triangles using default values. Simultaneously, as depicted by the step identified with numeral 1024 in Figure 40, the vents, and the triangles in which they appear, are highlighted with an appropriate color, e.g., blue. All the other flat up-facing triangles are unhighlighted.

A vent which has been created in accordance with this process is illustrated in Figures 43-45 & 47 (the vent in all four figures is identified with numeral 1032). As discussed, the four figures represent different perspectives and shading of the top of the object.

Also as discussed, in this embodiment, the vents, when first created, have a default shape and size. Advantageously, the default shape of the vent is a circle, but it should be appreciated that other shapes are possible. Moreover, for the resins presently preferred for 3D Systems' commercial products (Cibatool SL 5170 for the SLA-190/250, and Cibatool SL 5180 for the SLA-500), it has been found that acceptable results can be achieved with a default vent radius of 1.250 mm (0.05 in.).

The final step illustrated in Figure 40 (the step identified with numeral 1025) allows a user to change the default size of the vents, and also allows the user to move a vent (in the X-Y plane) or eliminate certain of the vents created in step 1023. To modify or change the size of a vent requires the user first to select it. To select a vent, the user simply positions the mouse arrow over the vent, and clicks the mouse button. When selected, the vent will be highlighted using a particular color, e.g., white. The x,y,z coordinates of the vent, and the vent radius, will then be displayed in the appropriate data entry fields within the "Vents and Drains" window. By entering new values in the x and y fields (the z field cannot be altered in this embodiment), the user can change the location of the selected vent. To change the radius of one or more selected vents, the user need only change the "Vent Radius" field. When these new values are entered into the respective fields, the display is automatically updated to reflect the changes. By clicking on the "Clear" button, the user can deselect all selected vents.

The process of creating drains will now be described. The process is very similar to that of creating vents, with the major exceptions being that drains are typically larger than vents (since a drain, unlike a vent, must be large enough to allow unsolidified material to flow), and are created on flat down-facing triangles as opposed to flat up-facing triangles. Therefore, only the differences between this process and the previously-described process of creating vents will be described.

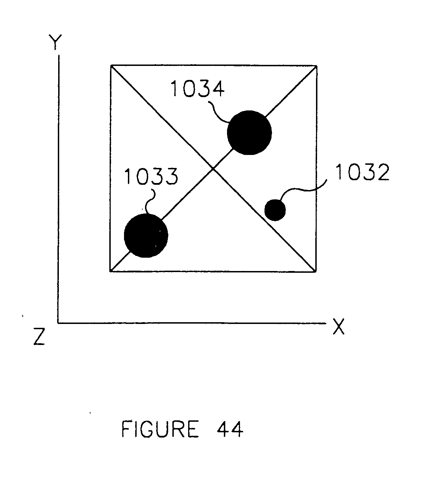

The process is illustrated in Figure 41. The first step, identified with numeral 1026, involves selecting a bottom view of the part using the "Viewing Transformation" window of Figure 46. Next, in the step identified with numeral 1027, the user selects the "Display Drain Triangles" button from the "Vents and Drains" window (Figure 42). In response, VIEW highlights the flat down-facing triangles using an appropriate color, i.e., yellow. In the third step, identified with numeral 1028, the user selects from the set of flat down-facing triangles, the desired triangles for the placement of drains. In response, VIEW highlights the selected triangles using an appropriate different color, i.e., white. In the next step, identified with numeral 1029, the user prompts VIEW to automatically create the drains by clicking on the "Create" button in the "Vents and Drains" window. VIEW does so by creating the drains in the selected triangles using default parameters. Presently, the default shape, position, and size of a drain is a circle centered in the middle of the triangle having a radius of 3.750 mm (0.150 in.) for both the Cibatool SL 5170 (preferred for use with the SLA 190/250) and SL 5180 (preferred for use with the SLA 500). Next, in the step identified with numeral 1030, VIEW highlights the triangles selected for placement of drains and the drains themselves with an appropriate color, i.e., yellow, and unhighlights the other flat down-facing triangles. Finally, in the step identified with numeral 1031, the user optionally repositions, changes the radius of, or deselects any of the drains using the "Vents and Drains" window. The result is one or more drains as depicted in Figures 43 and 44 (through identifying numerals 1033 and 1034).

At present, through appropriate commands, VIEW allows a user to change the default radius of the vents and drains and their positioning. It should be appreciated that the inclusion of additional commands are possible which provide for a default shape. It should also be appreciated that several other refinements and enhancements of this embodiment are possible, including, without limitation, the insertion of vents or drains on near-flat surfaces.

After drains and vents have been inserted into the object representation as described, VIEW allows a user to save the information descriptive of the drains and vents in a data file. At present, the information saved by VIEW consists, for each vent or drain, the x, y, z coordinates of the center point of vent or drain, the x,y, z components (I, j, k) of the triangle normal, and the radius of the vent or drain. To actually build an object with the vents or drains inserted, the user inputs this information into C-SLICE, i.e., the Boolean layer comparison SLICE program described in U.S. Patent No. 5,321,622 (the '622 patent), along with the unaltered object representation. From the object representation, C-SLICE produces up to three types of borders in relation to an object layer, up-facing boundaries (UB), layer boundaries (LB), and down-facing boundaries (DB). After producing this boundary information, C-SLICE manipulates it based on the information provided by VIEW. For a given drain or vent, C-SLICE determines which layer is required to be modified using the z-coordinate of the triangle in which the vent or drain appears (the singular term is used given that the triangles in this first embodiment are constrained to be flat triangles which, by definition, lie entirely within a given z-plane). The sign of the k-component of the triangle normal is then used to determine whether to modify the UB or DB information. If the sign is positive, indicative of a vent, the modification is made to the UB information; if negative, the modification is made to the DB information.

The modification made to this data will now be described. As discussed in the '622 patent, the UB and DB information created by C-SLICE is preferably in the form of a polylist, i.e., an ordered sequence of line segments which circumscribe a solid or hollow feature of the object. Advantageously, the order of the coordinates obeys the right-hand rule. In accordance with this rule, the segments are ordered in a counterclockwise direction if they define an exterior boundary of the object, i.e., circumscribe a solid portion of the object. Conversely, if they define an interior boundary of the object, i.e., circumscribe a hollow portion of the object, the segments will be ordered in a clockwise direction.

The technique involves describing the vent or drain with a polylist. In the present embodiment, a polylist of 255 segments is used, but it should be appreciated that other options are possible. Advantageously, the coordinates of the segments are ordered, in accordance with the right-hand rule, in a clockwise direction. That is because, by definition, they describe a hole. The sign of the k component of the triangle normal is then evaluated. If the sign is positive, the UB data is earmarked for modification; if the sign is negative, the DB data is earmarked for modification. A Boolean union operation, as is described in the '622 patent, is then performed between the appropriate data, whether UB or DB, and the polylist describing the hole or vent in question.

This step is illustrated in Figure 48. The circle identified with numeral 1035 depicts a polylist which is representative of a border (whether up-facing or down-facing) enclosing solid area. In accordance with the right-hand rule, the segments making up the polylist are ordered in a counter-clockwise direction. The circle identified with numeral 1036, on the other hand, depicts a polylist which represents a vent or drain. In accordance with the right-hand rule, the segments making up the polylist are ordered in a clockwise direction since a vent or drain by definition encloses a hollow region. The Boolean union of the two polylists is identified with numeral 1037.

An aspect of QUICKCAST, described earlier, is the creation of multiple layers of skinning of the object in order to create a strong shell for use in investment casting. The aforementioned step, in which the polylist making up a hole or vent is Boolean unioned with UB or DB data, must be repeated for each of these skinned layers. If it is only performed with less than all, the hole or vent will become skinned over, i.e., blocked, in the final part.

Once the appropriate UB or DB data has been modified, the C-SLICE process continues as is described in the '622 patent in combination with the inventive concepts described herein in relation to the QUICKCAST style of part building. The result is a part built according to the QUICKCAST style in which vents or drains have been inserted into the part.

It should be appreciated that this embodiment for automatic vent or drain creation can also be used to drain unsolidified material from trapped volumes within solid parts. As discussed in U.S. Patent No. 5,258,146, which is hereby incorporated by reference herein as though set forth in full, trapped volumes can lead to leading and trailing edge problems due to the buildup of material during the recoating process. The problem can be significant: the buildup of material, once solidified, can interfere with the operation of the doctor blade or sweeper used to recoat. The selection of appropriate recoating parameters to at least partly eliminate these problems, as discussed in the previously-referenced U.S. Patent No. 5,258,146, is not an entirely satisfactory solution because it prevents the selection of recoating parameters which are independent of the geometry of the particular part at hand. Automatic vent or drain generation would help eliminate trapped volumes. In this technique, the union operation is not only performed on down-facing or up-facing regions but on all regions (down-facing, up-facing and continuing) on all layers between the specified down-facing or up-facing feature and the opposite up-facing or down-facing feature inclusive.

It should also be appreciated that there is no requirement in the present embodiment that vents or drains fit within a single triangle, or even within a particular up- or down-facing region. If the vent or drain falls partially outside an up- or down-facing region the vent or drain will be reduced in size since part of it will be missing.

This phenomenon is illustrated in Figure 49. As shown, polylist 1035, representing either an up-facing or down-facing border, is Boolean unioned with polylist 1036' which, as shown, encircles a hole which is not entirely encompassed by the polylist 1035. The result of this union operation is the boundary depicted in Figure 49. Since this boundary defines the limits to which hatch or skin will be created on the layer in question, a vent or drain, identified with numeral 1039, will still be created in the final part, albeit with a reduced surface area in relation to the hole described by polylist 1036'.

Several refinements or enhancements of this embodiment will now be described. In one enhancement, the data provided by VIEW can be used in combination with an object representation formatted in accordance with the SLC format (a contour/layer format described in the '622 patent). Through Boolean union operations, such data can be modified using the vent/drain data provided by VIEW in the manner described.

A second embodiment for automatically inserting vents/drains in a three-dimensional object will now be described. In this embodiment, the capability is provided for introducing vents or drains in near-flat regions of the object, a capability which is especially useful in the case of parts which, through reorientation to eliminate trapped volumes, facilitate the creation of supports, and the like, have no flat regions.

A first approach to implementing this second embodiment involves introducing a flat region into the object representation at the originally near flat region, and then applying the just-discussed embodiment to insert a drain or vent in the just-created flat region. The technique involves using VIEW to display the object, selecting from a library of predetermined representations a representation of a second object having a flat surface (such as a cylinder or rectangular bar), situating in VIEW the second object representation such that the flat area is appropriately situated within the near-flat region of the first object representation, and then performing a Boolean differencing operation between the two representations. The previously-discussed embodiment is then used to insert a vent or drain at the resultant flat area created in the first object representation.

The technique is illustrated in Figures 50-51. In Figure 50 is shown a near flat area, identified in the figure with numeral 1040, and a representation of a cylinder, identified with numeral 1041, having a flat area 1042 which has been situated within the near flat area. The result of the Boolean differencing operation is shown in Figure 51. As shown, a flat region, identified with numeral 1043, is created within the part for insertion of vents or drains.

A variant of this technique involves performing this Boolean operation in the CAD system, i.e., modifying an . STL file representing the object.

A second approach to implementing this second embodiment involves a modification to C-SLICE, the Boolean layer comparison "slice" program described in the '622 patent. A flowchart of the technique is illustrated in Figure 52a. The first step, identified with numeral 1044, involves taking as input the preliminary boundary data described in the '622 patent (used as input to the Boolean layer comparison operations which result in the formation of the UB, LB, and DB data), i.e., the L[i] data, and performing a Boolean differencing between this data and data descriptive of desired vent and drain zones. The effect is to create a flat region for the insertion of a vent/drain. This step is illustrated in Figure 52b. There is shown the preliminary boundary data for a layer, identified with numeral 1057, which is moved/retracted to position 1057, through this Boolean differencing operating. The effect is to create flat region 1058. In the second step, identified with numeral 1045, the modified L[i] data is processed through C-SLICE in the traditional way to arrive at UB, LB, and DB data reflecting the inclusion of the vent and drain zones. In the third step, identified with numeral 1046, the resultant UB and DB data is modified through a second pass with the data descriptive of the vents and drains in the manner described previously in relation to the first embodiment, i.e. creation of polylists descriptive of the vents/drains, followed a Boolean union between this data and the UB/DB data. This step is illustrated in Figure 52c. There is shown the inclusion of vent/drain 1059 in the flat region 1059 created in step 1044. This modified data is then used to form the part.

A potential problem with these approaches involves the possible formation of relatively large indentations in the object due to the need to create a large enough flat region in order to insert a drain or vent of acceptable size. In particular, as the slope of the slanted surface becomes steeper it is clear that the indentation becomes larger for a given size of the flat feature to be created. The indentations thus formed may represent an unacceptable distortion of the object surface. An additional potential problem with these approaches arises from the fact that the hole inserted is not located at the lowest extreme of the object feature into which it is inserted. If the hole is to act as a drain, it is apparent that not all of the internal liquid can be drained from the object unless the object is tilted. Of course, if an automatic object tiling feature is added to the platform support structure to which the object is attached, this becomes a non-issue.

These problems may be partially overcome by revising the embodiment so that the hole exists in the vertical surface created by the section of the object that is Boolean subtracted. Techniques for implementing vertical holes are described hereinafter.

A third approach to implementing this second embodiment simply involves removing the skins associated with a sloped surface and leaving the layer boundaries in place. In this case, the defined hole would have a slanted orientation wherein portions of the hole would be associated with successive layers. The partial hole associated with the successive layers or cross-sections of data can be obtained by projecting the portion of the slanted hole in between two cross-sections onto the appropriate of the two cross-sections (typically the upper portion of the layer or upper cross-section). Techniques for performing the projection operation are described in previously referenced U.S. Patents 5,345,391 and 5,321,622.

A potential problem with this last approach is that it may not be effective for purposes of inserting vents or drains into extremely steep near-flat surfaces. In Figure 53a, for example, a steep near-flat surface (identified with numeral 1047) is shown. The LB regions associated with the respective layers are identified with numerals 1049a, 1049b, 1049c, and 1049d, and the DB regions associated with the respective layers are identified with numerals 1048a, 1048b, 1048c, and 1048d. The removal of the DB regions, which the above-described variant will accomplish, will leave no gap in the resultant surface of the object. That is because the surface is so steep, that the LB regions from successive layers are close enough to one another to close any gaps.

This approach, however, will be effective with more gradual near-flat surfaces, such as that identified with numeral 1047' in Figure 53b. In this figure, the LB regions for the respective layers are identified with numerals 1049a', 1049b', and 1049c', while the DB regions for the respective layers are identified with numerals 1048a', 1048b', and 1048c'. The removal of the DB regions in this case will leave gaps, identified with numerals 1050a and 1050b, which are not "plugged" by the remaining LB regions. Drains in these regions would be effective for the purpose of draining unsolidified material from the part. Consequently, it may be appropriate to limit application of this variant to gradually-sloping near-flat surfaces.

A fourth approach for implementing this second embodiment will now be described. An advantageous aspect of this approach is that it can be used to insert vents/drains in vertical as well as near-flat regions. According to this embodiment, a new boundary type is created known as the "anti-boundary." A requirement imposed by C-SLICE is that layer boundaries (LB) form closed loops. The requirement is imposed because of the function performed by layer boundaries: they are used to generate hatch and fill vectors. As illustrated in Figure 54, if a break 1052 were to appear in the layer boundary 1051 of an object, it would lead to the creation of unwanted hatch or fill (identified with numeral 1053).

This requirement creates a problem for the creation of vents/drains in steep or vertical surfaces. As discussed, for these surfaces, the layer boundaries from successive layers are so close that they inhibit or prevent the creation of vents/drain through openings in skin fill alone. Thus, a means must be provided for the insertion of breaks into layer boundaries.

The addition of temporary boundaries solves this problem. Temporary boundaries define the portion of layer boundaries which are not to be solidified. Temporary boundaries complement regular boundaries so a complete closed loop is formed. These temporary boundaries are retained for use in generating hatch/fill vectors but are not included with the boundaries to be exposed.

An approach for generating temporary boundaries, illustrated in Figures 55a-55b, is from the intersection between the desired vent/drain (as it exists on the near-flat/vertical surface of the object) (identified in the figures with numeral 1054) and the slicing planes (identified in Figure 43a with numerals 1055a, 1055b, 1055c, 1055d, 1055e, and 1055f) used in C-SLICE (layer comparison slice). The result is a series of lines (partial boundaries) at various z-positions, identified in Figure 55b with numerals 1056a, 1056b, 1056c, 1056d, and 1056e, which constitute the temporary boundaries. This approach would be effective for use with both the SLA-250 (in which hatch and fill are produced in C-SLICE at or about the same time as the layer boundary information), and the SLA-500 (in which hatch and fill are created "on the fly" (as described in U.S. Patent No. 5,182,715, which is incorporated by reference herein as though set forth in full)). Both temporary and regular boundaries would be passed to the SLA-500, both for use in hatch generation, but with only regular boundaries used in exposing.

Alternatively, two boundaries can be formed, wherein one boundary includes a purposely designed break in it and is used for exposing the material. The other boundary forms a complete loop and is used for hatch or fill generation.

As a further alternative, a complete boundary loop can be generated along with one or more "anti-boundary" segments. In this case, the complete boundary loop is used for generating hatch after which a boolean difference is taken between the boundary loop and the anti-boundary segment to yield an incomplete or broken boundary to be utilized in exposing the material.

While several embodiments have been shown and described, it will be apparent to those skilled in the art that various modifications are possible without departing from the spirit and scope of the invention.

Though the above embodiments have been primarily described in terms of their implementation in systems that operate based on the selectively solidification of photopolymers (the preferred system), it is believed that the data processing and object building techniques are applicable to other segments of the Rapid Prototyping and Manufacturing industry alone or in combination. These other segments include technologies involving the selective solidification of polymerizable material by use of IR, visible and other forms of radiation or by the selective deposition of a medium onto the material (e.g. a photoinitiator being dispensed onto a polymerizable material in a continuous or intermittent light environment or selective deposition of the second part of a two-part epoxy onto the first part). Also, technologies involved in the building of objects from selectively solidified powdered materials (e.g. by sintering or selective deposition of a reactive material or binding agent) are included in these segments. Furthermore, technologies utilizing the layer by layer build up of sheet material or the selective dispensing of a material that solidifies when dispensed into an appropriate environment (e.g. the technologies disclosed in U.S. Patent Nos. 5,192,559 and 5,141,680 - which are incorporated herein by this reference) are included in these segments.

**Claims**

1. An improved method of stereolithographically forming a three-dimensional object by forming cross-sectional layers of said object from a material capable of physical transformation upon exposure to synergistic stimulation comprising the steps of receiving data descriptive of said cross-sectional layers, forming said cross-sectional layers by selectively exposing said material to said synergistic stimulation according to said data descriptive of said cross-sectional layers to build up the three-dimensional object layer-by-layer, the improvement comprising the steps of:

    modifying data descriptive of at least a portion of at least one cross-sectional layer by copying said data from a first cross-section to a second cross-section; and

    using said modified data in forming said three-dimensional object.

2. An improved method of stereolithographically forming a three-dimensional object from layers of a material capable of physical transformation upon exposure to synergistic stimulation comprising the steps of receiving data descriptive of cross-sections of the three-dimensional object, forming layers of said material, and selectively exposing said layers to synergistic stimulation according to said data descriptive of said cross-sections to build up the three-dimensional object layer-by-layer, the improvement comprising the steps of:

    modifying data descriptive of at least a portion of at least one cross-section by shifting said data from a first cross-section to a second cross-section which is located at least one layer thickness from said first cross-section; and

    using said modified data in forming said three-dimensional object.

3. The method of Claim 1 or Claim 2, further comprising the steps of:

    further modifying data descriptive of said second cross-section by differencing any other data on the second cross-section from and on any intermediate cross-sections between the first and second cross-sections from the shifted or copied data, and

    using said further modified data in forming said three-dimensional object.

4. The method of Claim 3, wherein said step of modifying comprises shifting or copying data descriptive of at least a portion of a down-facing feature.

5. The method of Claim 4, wherein said step of shifting or copying of at least a portion of a down-facing feature comprises exposing said shifted or copied portion with an amount of synergistic stimulation necessary to achieve a cure depth of approximately the amount shifted plus one layer thickness.

6. The method of Claim 5, wherein the synergistic stimulation is electromagnetic radiation and the material is a photopolymer which solidifies in response to said radiation.

7. The method of Claim 5, wherein the shifting or copying is one layer thickness and the exposure applied to the shifted or copied portion is approximately two layer thickness.

8. The method of Claim 5, wherein the shifting or copying is at least two layer thickness and the exposure applied to the shifted or copied portion is at least approximately three layer thickness.

9. The method of Claim 1 or Claim 2, wherein said step of modifying comprises shifting or copying data descriptive of a non-down-facing feature such that at least a two layer thickness separation occurs between at least a portion of the modified cross-sectional data on said second cross-section and any modified data located directly below it.

10. The method of Claim 9, wherein the synergistic stimulation is electromagnetic radiation and the material is a photopolymer which is solidified in response to said radiation.

11. The method of Claim 9, wherein the shifting of data is at least one layer thickness, and preferably at least two layer thickness.

12. An improved method of stereolithographically forming a three-dimensional object by forming cross-sectional layers of said object from a material capable of physical transformation upon exposure to synergistic stimulation comprising the steps of receiving data descriptive of said cross-sectional layers, forming said cross-sectional layers by selectively exposing said material to said synergistic stimulation according to said data descriptive of said cross-sectional layers to build up the three-dimensional object layer-by-layer, the improvement comprising the steps of:

   modifying data descriptive of at least portions of two cross-sectional layers by shifting said data from a first cross-sectional layer through at least one intermediate cross-sectional layer to a second cross-sectional layer and by differencing the shifted data from data descriptive of said second and said at least one intermediate cross-sectional layers; and

   using said modified data in forming said three-dimensional object.

13. An improved method of stereolithographically forming a three-dimensional object from layers of a material capable of physical transformation upon exposure to synergistic stimulation comprising the steps of receiving data descriptive of cross-sections of the three-dimensional object, forming layers of said material, and selectively exposing said layers to synergistic stimulation according to said data to build up the three-dimensional object layer-by-layer, the improvement comprising the steps of:

   modifying data descriptive of at least portions of three cross-sections by shifting said data from a first cross-section through at least one intermediate cross-section to a second cross-section which is located at least one layer thickness from said first cross-section and by differencing data on the second cross-section and on said at least one intermediate cross-section between said first and second cross-sections from the shifted data; and

   using said modified data in forming said three-dimensional object.

14. An improved method of stereolithographically forming a three-dimensional object by forming cross-sectional layers of said object from a material capable of physical transformation upon exposure to synergistic stimulation comprising the steps of receiving data descriptive of said cross-sectional layers, forming said cross-sectional layers by selectively exposing said material to said synergistic stimulation according to said data descriptive of said cross-sectional layers to build up the three-dimensional object layer-by-layer, the improvement comprising the steps of:

   modifying data descriptive of at least a portion of one cross-sectional layer by copying said data from a first cross-section to a second cross-section and intersecting the copied data with data descriptive of the second cross-sectional layer and utilising only that portion which is common; and

using said modified data in forming said three-dimensional object.

15. An improved method of stereolithographically forming a three-dimensional object from layers of a material capable of physical transformation upon exposure to synergistic stimulation comprising the steps of receiving data descriptive of cross-sections of the three-dimensional object, each cross-section representing one layer of the object to be formed, forming layers of said material, and selectively exposing said layers to synergistic stimulation according to said data descriptive of said cross-sections to build up the three-dimensional object layer-by-layer, the improvement comprising the steps of:

modifying data descriptive of at least a portion of a second cross-section by copying said data from a first cross-section to the second cross-section which is located at least one layer thickness from said first cross-section and determining how much of said copied data should be utilised in exposing the second cross-section by intersecting the copied data with any other data on the second cross-section and keeping only that portion which is common; and

using said modified data in forming said three-dimensional object.

16. The method of Claim 14 or Claim 15, wherein the first cross-section is located below the second cross-section and the shifted or copied data is down-facing skin data.

17. The method of Claim 16, wherein the down-facing skin data on the first cross-section is final down-facing skin data that was shifted or copied from a cross-section below the first cross-section prior to copying the down-facing data from the first cross-section to the second cross-section.

18. The method of Claim 14 or Claim 15, wherein the first cross-section is located above the second cross-section and the shifted or copied data is up-facing skin data.

19. The method of Claim 14 or Claim 15, wherein a non-flat priority embodiment is used to determine appropriate regions to misplace in regions where the object thickness is less than the MSD.

20. The method of Claim 14 or Claim 15, wherein at least some regional boundaries, which are not exterior boundaries of a cross-section, are not used in exposing the cross-section of the object.

21. The method of Claim 16 or Claim 17, wherein only exterior portions of at least some regional boundaries are used in forming boundary portions of the cross-sectional layers of the object.

22. An improved method of stereolithographically forming a three-dimensional object by forming cross-sectional layers of said object from a material capable of physical transformation upon exposure to synergistic stimulation comprising the steps of receiving data descriptive of said cross-sectional layers, forming said cross-sectional layers by selectively exposing said material to said synergistic stimulation according to said data descriptive of said cross-sectional layers to build up the three-dimensional object layer-by-layer, the improvement comprising the steps of: delaying forming a portion of a first cross-sectional layer to enhance proper placement of object features.

23. The method of Claim 22, wherein said delaying step includes the step of shifting said data descriptive of at least said portion of said first cross-section to a second cross-section.

24. The method of Claim 23, wherein said shifting step includes the step of copying said data descriptive of said portion of said first cross-section to said second cross-section.

25. An improved method of stereolithographically forming a three-dimensional object by forming cross-sectional layers of said object from a material capable of physical transformation upon exposure to synergistic stimulation comprising the steps of receiving data descriptive of said cross-sectional layers and forming said cross-sectional layers by selectively exposing said material to said synergistic stimulation according to said data descriptive of said cross-sectional layers to build up the three-dimensional object layer-by-layer, the improvement comprising the step of: delaying forming a portion of a first cross-sectional layer to allow for physical transformation of an appropriate depth of material.

26. An improved apparatus for stereolithographically forming a three-dimensional object by forming cross-sectional layers of said object from a material capable of physical transformation upon exposure to synergistic stimulation comprising means for receiving data descriptive of said cross-sectional layers and means for forming said cross-sectional layers by selectively exposing said material to said synergistic stimulation according to said data descriptive of said cross-sectional layers to build up the three-dimensional object layer-by-layer, the improvement comprising:

means for delaying forming a portion of a first cross-sectional layer to enhance proper placement of object features.

27. The apparatus of Claim 26, wherein said delaying means includes means for shifting said data descriptive of at least said portion of said first cross-sectional layer to a second cross-sectional layer.

28. The apparatus of Claim 27, wherein said shifting means includes means for copying said data descriptive of said portion of said first cross-sectional layer to said second cross-sectional layer.

29. An improved apparatus for stereolithographically forming a three-dimensional object by forming cross-sectional layers of said object from a material capable of physical transformation upon exposure to synergistic stimulation comprising means for receiving data descriptive of said cross-sectional layers and means for forming said cross-sectional layers by selectively exposing said material to said synergistic stimulation according to said data descriptive of said cross-sectional layers to build up the three-dimensional object layer-by-layer, the improvement comprising:

means for delaying forming a portion of a first cross-sectional layer to allow for physical transformation of an appropriate depth of material.

30. An improved apparatus for stereolithographically forming a three-dimensional object from layers of a material capable of physical transformation upon exposure to synergistic stimulation comprising means for receiving data descriptive of cross-sections of the three-dimensional object, each cross-section representing one layer of the object to be formed, means for forming layers of said material, and means for exposing said layers to synergistic stimulation according to said data descriptive of said cross-sections to build up the three-dimensional object layer-by-layer, the improvement comprising:

means for modifying data descriptive of at least two cross-sections by shifting said data from a first cross-section to a second cross-section and by differencing the shifted data from any other data on the second cross-section and on intermediate cross-section.

31. An improved apparatus for stereolithographically forming a three-dimensional object by forming cross-sectional layers of said object from a material capable of physical transformation upon exposure to synergistic stimulation comprising means for receiving data descriptive of said cross-sectional layers and means for forming said cross-sectional layers by selectively exposing said material to said synergistic stimulation according to said data descriptive of said cross-sectional layers to build up the three-dimensional object layer-by-layer, the improvement comprising:

means for modifying data descriptive of at least a portion of at least one cross-sectional layer by shifting said data from a first cross-section to a second cross-section; and

means for using said modified data in forming said three-dimensional object.

32. An improved apparatus for stereolithographically forming a three-dimensional object by forming cross-sectional layers of said object from a material capable of physical transformation upon exposure to synergistic stimulation comprising means for receiving data descriptive of said cross-sectional layers and means for forming said cross-sectional layers by selectively exposing said material to said synergistic stimulation according to said data descriptive of said cross-sectional layers to build up the three-dimensional object layer-by-layer, the improvement comprising:

means for modifying data descriptive of at least portions of two cross-sectional layers by shifting said data from a first cross-sectional layer through at least one intermediate cross-sectional layer to a second cross-sectional layer and by differencing the shifted data from data descriptive of said second and said at least one intermediate cross-sectional layers; and

means for using said modified data in forming said three-dimensional object.

33. An improved apparatus for stereolithographically forming a three-dimensional object by forming cross-sectional layers of said object from a material capable of physical transformation upon exposure to synergistic stimulation comprising means for receiving data descriptive of said cross-sectional layers and means for forming said cross-sectional layers by selectively exposing said material to said synergistic stimulation according to said data descriptive of said cross-sectional layers to build up the three-dimensional object layer-by-layer, the improvement comprising:

means for modifying data descriptive of at least portions of two cross-sectional layers by copying said data from a first cross-section to a second cross-section and intersecting the copied data with data descriptive of the second cross-sectional layer and keeping only that portion which is common; and

means for using said modified data in forming said three-dimensional object.

34. A method of stereolithographically forming a three-dimensional object from layers of a material capable of physical transformation upon exposure to synergistic stimulation comprising the steps of receiving data descriptive of cross-sections of the three-dimensional object, forming layers of said material, and selectively exposing said layers to synergistic stimulation according to said data descriptive of said cross-sections to build up the three-dimensional object layer-by-layer.

35. An improved method of stereolithographically forming a three-dimensional object from layers of a material capable of physical transformation upon exposure to synergistic stimulation comprising the steps of receiving data descriptive of cross-sections of the three-dimensional object, forming layers of said material, and selectively exposing said layers to synergistic stimulation according to said data descriptive of said cross-sections to build up the three-dimensional object layer-by-layer, the improvement comprising the steps of:

modifying data descriptive of at least one cross-section situated between an up-facing feature and down-facing feature of the object in order to correct for an error in the relative displacement of the up- and down-facing features; and

using said modified data in forming said three-dimensional object.

36. An improved method of stereolithographically forming a three-dimensional object from layers of a material capable of physical transformation upon exposure to synergistic stimulation comprising the steps of receiving data descriptive of cross-sections of the three-dimensional object, forming layers of said material, and selectively exposing said layers to synergistic stimulation according to said data descriptive of said cross-sections to build up the three-dimensional object layer-by-layer, the improvement comprising the steps of:

modifying said data descriptive of said cross-sections to specify a pattern of solidification on consecutive cross-sections which allows unsolidified material to drain and which also specifies strong outer walls; and

using said modified data in forming said three-dimensional object.

37. A method for automatically performing Z-error correction by manipulating a representation of a three-dimensional object to correct for Z-error.

38. The method of Claim 37, wherein the performing step includes:
manipulating an object representation comprising a first list of vertices of polygons which substantially span a surface of the object, and a second list of representations of said polygons comprising identifiers of the vertices in said first list.

39. The method of Claim 37, wherein said manipulating step comprises:

taking as an input a first representation of the object which comprises a plurality of polygons which substantially span a surface of the object, wherein said representation is defined in terms of vertices of the polygons;

converting said first representation into a second representation comprising a first list of the vertices of the polygons, and a second list of representations of the polygons comprising identifiers of the vertices of said first list; and

manipulating said second representation to correct for Z-error.

**40.** The method of Claim 37, wherein said performing step includes:
    manipulating an object representation comprising a plurality of groupings of Z-coordinates representing intersection points of said object representation over at least a portion of the cells of a grid.

**41.** The method of Claim 37, wherein said performing step includes:

taking as input a first representation of the object;

converting said first representation into a second representation comprising a plurality of groupings of Z-coordinates of points representing intersections between transition points in and out of the object associated with at least some cells in a grid; and

manipulating said second representation to correct for Z-error.

**42.** The method of Claim 37, wherein the performing step comprises:

taking as input a NURBS representation of the object which includes a plurality of control points; and

manipulating selected ones of said control points to correct for Z-error.

**43.** The method of Claim 37, wherein the performing step comprises:

taking as input a plurality of layer representations of said object; and

manipulating selected ones of said layer representations to correct for Z-error.

**44.** The method of Claim 35, wherein the relative displacement between the up- and down-facing features is in error because of Z-error.

**45.** The method of Claim 35, wherein the relative displacement between the up- and down-facing features is in error because of quantization error.

**46.** An improved method of forming a three-dimensional object from layers of a material comprising the steps of supplying data descriptive of the object, forming layers of the object and automatically adhering the layers of the object together upon formation to build up the three-dimensional object layer-by-layer, the improvement comprising the steps of:

modifying data descriptive of at least a portion of at least one layer of the object by either at least partially copying data or at least partially shifting data associated with at least one cross-section to data associated with at least a second cross-section; and

using said modified data in forming said three-dimensional object.

**47.** An improved apparatus for forming a three-dimensional object from layers of a material comprising means for supplying data descriptive of the object, means for forming layers of the object and automatically adhering the layers of the object together upon formation to build up the three-dimensional object layer-by-layer, the improvement comprising:

means for modifying data descriptive of at least a portion of at least one layer of the object by either at least partially copying data or at least partially shifting data associated with at least one cross-section to data associated with at least a second cross-section; and

means for using said modified data in forming said three-dimensional object.

**48.** The apparatus of Claim 46 or 47, wherein the copied or shifted data results in a reduction in Z-error when the object is formed.

**49.** The apparatus of Claim 46 or 47, wherein the copied or shifted data results in a reduction in slice layer rounding error when the object is formed.

FIG. 1

OBJECT 1

OBJECT 2

1A

2A

Z

X

OBJECT 3

3A

FIG. 2

1B

2B

3B

FIG. 2

1A

2A

3A

SDFB

FIG. 3

1B

2B

3B

IUFB

FIG. 3

1C

2C

3C

SUFB

FIG. 3

1D

2D

3D

SLB

FIG.3

1A

2A

3A

CMSD=2

FIG. 4

1B

2B

3B

CMSD=3

FIG. 4

1A

2A

3A

CMSD=2  RMSD=2

FIG. 5

1B

2B

3B

CMSD=3     RMSD=3

FIG. 5

1A

2A

3A

EMBODIMENT A

FIG. 6

1A

2A

3A

EMBOBIMENT B

FIG. 7

1A

2A

3A

FDFB
EMBODIMENT C
FIG. 8

1B

2B

3B

FUFB

FIG. 8

1C

2C

3C

FLB

FIG. 8

1D

2D

3D

FIG. 8

1A

2A

3A

EMBODIMENT D
FIG. 9

1A

2A

3A

EMBODIMENT E
FIG. 10

1A

2A

3A

EMBODIMENT F

FIG. 11

1A

2A

3A

FDFB
EMBODIMENT G
FIG. 12

1B

2B

3B

FUFB

FIG. 12

1C

2C

3C

FLB

FIG. 12

1D

2D

3D

FIG. 12

EMBODIMENT H

FIG. 13

EMBODIMENT I

FIG. 14

1A

2A

3A

EMBODIMENT J

FIG. 15

1A

2A

3A

EMBODIMENT L
FIG. 16

FIG. 17a

FIG. 17b

$A + B$

FIG. 17c

$A \cap B$
or
$A * B$

FIG. 17d

$A - B$

$B - A$

FIG. 17e

FIG. 17f

FIG. 18

FIG. 19

562
560
558
550
550 552 554
556
564
550
558
560
562

FIG. 20

FIG. 21a

FIG. 21b

FIG. 21c

621 ⟶  620

FIG. 21d

622  619

617  618  616

614  615

613

611  612

FIG. 21e

623

624

FIG. 21f

623'

616  618  617

614  615

613

611  624

612

FIG. 21g

FIG. 22

FIG. 23

FIG. 24

FOR EACH TRIANGLE, ADD VERTICES TO LIST IF NOT ALREADY PRESENT — 648

LABEL EACH VERTEX ADDED TO THE LIST WITH A UNIQUE INTEGER — 649

REPRESENT EACH TRIANGLE WITH THE INTEGERS USED TO REPRESENT ITS VERTICES — 650

FIG. 25a

$\alpha$

SET UP ARRAY OF
FLAGS, ONE FOR
EACH VERTEX, TO
INDICATE MOVEMENT    ~651

SET FLAGS FOR ALL
VERTICES OF DOWN-
FACING TRIANGLES    ~652

FOR EACH VERTEX
ASSOCIATED WITH A
FLAG WHICH HAS
BEEN SET, ALTER Z-
COMPONENT    ~653

FIG. 25b

654

655

FIG. 26

660

659

658

657

656

FIG. 27

```
┌─────────────────────────────────┐
│  FOR EACH TRIANGLE,             │
│   HASH VERTICES                 │ ⌐ 661
│                                 │
└─────────────────────────────────┘
                │
                ▼
┌─────────────────────────────────┐
│  COMPARE WITH ANY VERTICES      │
│  ALREADY STORED IN THE          │ ⌐ 662
│  SAME BUCKET                    │
└─────────────────────────────────┘
                │
                ▼
┌─────────────────────────────────┐
│  IF MATCH, THEN TAKE            │
│  INTEGER ASSIGNED TO            │
│  THAT VERTEX, AND USE           │ ⌐ 663
│  TO REPRESENT TRIANGLE          │
└─────────────────────────────────┘
                │
                ▼
┌─────────────────────────────────┐
│  IF NO MATCH, THEN STORE        │
│  VERTEX IN THAT BUCKET,         │
│  AND ASSIGN UNIQUE              │ ⌐ 664
│  IDENTIFYING INTEGER            │
└─────────────────────────────────┘
                │
                ▼
              ( B )
```

FIGURE 28a

B

REPRESENT TRIANGLE
WITH THE INTEGERS
USED TO REPRESENT
ITS VERTICES ~ 665

PROCEED AS IN THE
SECOND EMBODIMENT ~ 666

FIGURE 28b

FIGURE 29a

FIGURE 29b

FIGURE 30a

FIGURE 30b

```
for (i=0; <num_triangles;)
{
 t = triangle_array(i)=triangle_array(num_triangle)
 if (t contains the same vertex twice)
  {
     num_triangles--;
     triangle_array(i)=triangle_array(num_triangles);
  }
 else i++;

}
```

FIGURE 31

FIGURE 32a

FIGURE 32b

CALCULATE NORMALS OR
VERTICES BY AVERAGING
TRIANGLE NORMALS

~ 667

COPY, CTL FILE AND EXPAND
BY MOVING VERTICES IN THE
DIRECTION OF THEIR NORMALS

~ 668

FLIP THE NORMALS OF
THE TRIANGLES IN THE
ORIGINAL .CTL FILE

~ 669

MERGE THE TWO TO
PRODUCE .CTL REPRESENTATION
OF HOLLOW SHELL

~ 670

FIGURE 33

FIGURE 34

FIGURE 35

POSITION X−Y GRID
BELOW OBLECT REPRESENTATION
IN THE Z−DIRECTION

681

INTESECT OBJECT REPRESENTATION
WITH A PLURALITY OF
VIRTUAL SPIKES ORIGINATING
AT THE SQUARES

682

FIGURE 36a

ASSOCIATE SEQUENCE OF "ON-OFF" POINTS WITH THE SQUARE AT WHICH THE RESPECTIVE SPIKE ORIGINATES ~ 683

MOVE "ON" POINTS UPWARDS TO CORRECT FOR Z-ERROR ~ 684

FIGURE 36b

686b
686c
686a
685
686d
686e
686f
689
687
688

FIGURE 37a

FIGURE 37b

FIGURE 38a

FIGURE 38b

FIGURE 38c

FIGURE 38d

FIGURE 39

SELECT TOP VIEW
OF PART  ~1020

HIGHLIGHT FLAT
UP-FACING TRIANGLES  ~1021

SELECT DESIRED
TRIANGLES FOR
PLACEMENT OF VENTS  ~1022

AUTOMATIC CREATION
OF VENTS USING
DEFAULT PARAMETERS  ~1023

HIGHLIGHT SELECTED
TRIAGLES AND
UNHIGHLIGHT OTHER
TRIANGLES  ~1024

OPTIONAL MODIFICATION
OF VENTS CREATED USING  ~1025
DEFAULT PARAMETERS

FIGURE 40

```
┌─────────────────────────┐
│ SELECT BOTTOM           │ ~1026
│ VIEW OF PART            │
└─────────────────────────┘
           ↓
┌─────────────────────────┐
│ HIGHLIGHT FLAT DOWN-    │ ~1027
│ FACING TRIANGLES        │
└─────────────────────────┘
           ↓
┌─────────────────────────┐
│ SELECT DESIRED TRIANGLES│ ~1028
│ FOR PLACEMENT OF        │
│ DRAINS                  │
└─────────────────────────┘
           ↓
┌─────────────────────────┐
│ AUTOMATIC CREATION      │ ~1029
│ OF DRAINS USING         │
│ DEFAULT PARAMETERS      │
└─────────────────────────┘
           ↓
┌─────────────────────────┐
│ HIGHLIGHT SELECTED      │ ~1030
│ TRIANGLES AND           │
│ UNHIGHLIGHT OTHER       │
│ TRIANGLES               │
└─────────────────────────┘
           ↓
┌─────────────────────────┐
│ OPTIONAL MODIFICATION   │ ~1031
│ OF DRAINS CREATED       │
│ USING DEFAULT PARAMETERS │
└─────────────────────────┘
```

FIGURE 41

VENTS AND DRAINS

VENT RADIUS: [ 0.031 ]   X: [ 0 ]
                         Y: [ 0 ]
DRAIN RADIUS: [ 0.062 ]  Z: [ 0 ]

☐  DISPLAY VENT TRIAGLES

☐  DISPLAY DRAIN TRIANGLES

CREATE    SAVE    OPEN    CLEAR

FIGURE 42

FIGURE 43

FIGURE 44

FIGURE 45

VIEWING TRANSFORMATION

| TRANS. X | 0 |
| TRANS. Y | 0 |
| TRANS. Z | 0 |
| ROT. X | −64 |
| ROT. X | 0 |
| ROT. X | 42 |

| ZOOM | 0.6 |

| 1 |
| RESOLUTION |

☐ EXTENTS

☐ PERSPECT.

☐ NORMALS

☐ FLAT SHADE

250/190 ONLY

☐ HATCH

☐ FILL

TOP

BOTTOM

FRONT

REAR

RIGHT

LEFT

ISO

TRI

RESET

FIGURE 46

FIGURE 47

FIGURE 48

1035

1036'

1038

1039

FIGURE 49

1040

1042

1041

FIGURE 50

1043

FIGURE 51

PERFORM BOOLEAN DIFFERENCE
BETWEEN L[i] DATA AND
DATA DESCRIPTIVE OF
VENTS AND DRAINS

~ 1044

PERFORM BOOLEAN LAYER
COMPARISIONS OF C-SLICE

~ 1045

MODIFY RESULTANT UB
AND DB DATA WITH
THE DATA DESCRIPTIVE
OF THE VENTS AND
DRAINS

~ 1046

FIGURE 52a

1058

1057'—

1057

FIGURE 52b

1059  1058

FIGURE 52c

1047

1049a

1048a

1049b

1048b

1049c

1048c

1049d

1048d

FIGURE 53a

1047'

1049a'

1048a'

1049c'

1049b'

1048b'

1048c'

1050a

1050b

FIGURE 53b

1051

1052 1053

FIGURE 54

1054

1055a
1055b
1055c
1055d
1055e
1055f

FIGURE 55a

1054

1056a
1056b
1056c
1056d
1056e

FIGURE 55b